(19) Europäisches Patentamt
European Patent Office
Office européen des brevets

(11) EP 4 345 930 A2

(12) **EUROPEAN PATENT APPLICATION**

(43) Date of publication:
**03.04.2024 Bulletin 2024/14**

(21) Application number: **23200115.6**

(22) Date of filing: **27.09.2023**

(51) International Patent Classification (IPC):
***H01M 4/04*** *(2006.01)* ***H01M 4/36*** *(2006.01)*
***H01M 4/62*** *(2006.01)* ***H01M 10/0562*** *(2010.01)*
***H01M 10/0583*** *(2010.01)* ***H01M 10/0585*** *(2010.01)*
***H01M 10/0587*** *(2010.01)*

(52) Cooperative Patent Classification (CPC):
**H01M 10/0562; H01M 4/0404; H01M 4/0409; H01M 4/0414; H01M 4/0419; H01M 4/0433; H01M 4/0471; H01M 4/366; H01M 4/62; H01M 10/0583; H01M 10/0585; H01M 10/0587;** H01M 2300/0071; H01M 2300/008

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:
**30.09.2022 JP 2022157775**
**25.01.2023 JP 2023009730**
**25.01.2023 JP 2023009731**
**25.01.2023 JP 2023009732**
**25.01.2023 JP 2023009733**
**20.03.2023 JP 2023044622**
**20.09.2023 JP 2023152076**

(71) Applicant: **Ricoh Company, Ltd.**
**Tokyo 143-8555 (JP)**

(72) Inventors:
- **NAKAJIMA, Satoshi**
  **Tokyo, 143-8555 (JP)**
- **GOTO, Shun**
  **Tokyo, 143-8555 (JP)**
- **LI, Muxin**
  **Tokyo, 143-8555 (JP)**
- **KIDA, Hitoshi**
  **Tokyo, 143-8555 (JP)**
- **HIGASHI, Ryuji**
  **Tokyo, 143-8555 (JP)**
- **OHYA, Kayato**
  **Tokyo, 143-8555 (JP)**
- **KAJITA, Tomomasa**
  **Tokyo, 143-8555 (JP)**
- **UTSUKI, Aya**
  **Tokyo, 143-8555 (JP)**
- **KURIYAMA, Hiromichi**
  **Tokyo, 143-8555 (JP)**
- **TERAI, Nozomi**
  **Tokyo, 143-8555 (JP)**
- **TAKAUJI, Keigo**
  **Tokyo, 143-8555 (JP)**
- **OHKIMOTO, Miku**
  **Tokyo, 143-8555 (JP)**
- **SONE, Yuji**
  **Tokyo, 143-8555 (JP)**

(74) Representative: **Marks & Clerk LLP**
**15 Fetter Lane**
**London EC4A 1BW (GB)**

(54) **ELECTRODE STACK, ELECTROCHEMICAL ELEMENT, METHOD FOR PRODUCING ELECTRODE STACK, ELECTRODE STACK PRODUCTION APPARATUS**

(57) An electrode stack includes an electrode substrate, an electrode composite material layer disposed on the electrode substrate, a resin structure disposed on a periphery of the electrode composite material layer, and a solid electrolyte layer disposed on the electrode composite material layer and the resin structure. The resin structure has a bicontinuous structure where a resin constitutes a skeleton.

FIG.2A

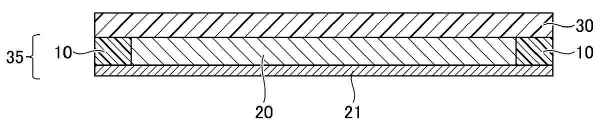


EP 4 345 930 A2

## Description

BACKGROUND OF THE INVENTION

1. Field of the Invention

The disclosures herein generally relate to an electrode stack, an electrochemical element, a method for producing an electrode stack, an electrode stack production apparatus, a method for producing an electrochemical element, and an electrochemical element production apparatus.

2. Description of the Related Art

Demands for solid-state secondary battery cells, such as solid-state secondary battery cells mounted in electric cars etc., have increased. Moreover, there are high demands for thin battery cells that can be mounted in various wearable devices or medical patches. Accordingly, a diverse range of properties or characteristics is desired for solid-state secondary battery cells.

To produce a solid-state battery cell including a positive electrode, a negative electrode, and a solid electrolyte layer, a stack of the positive electrode, the solid electrolyte layer, and the negative electrode may be pressed at high pressure to achieve a high density to improve performance of the resulting solid-state battery cell. During the press, however, damages, such as cracks, may be formed in the solid electrolyte. As a result, there have been a concern that short-circuiting may be caused between the positive electrode and the negative electrode during use of the solid-state battery cell.

In order to minimize the above-described damages (e.g., cracks) of a solid electrolyte of a solid-state battery cell, the following positive electrode for a solid-state battery has been reported. The positive electrode for a solid-state battery includes a positive electrode collector, and a positive-electrode active material layer formed on the positive electrode collector. The positive electrode active material layer includes a positive-electrode active material. In the positive electrode for the solid-state battery, a positive electrode guide is arranged along and adjacent to at least two sides of the plane of the positive-electrode active material layer on the face of the positive electrode active material layer on which the positive-electrode active material is disposed (see, for example, International Publication No. WO2020-022111).

SUMMARY OF THE INVENTION

In one embodiment, an electrode stack includes an electrode substrate, an electrode composite material layer disposed on the electrode substrate, a resin structure disposed on a periphery of the electrode composite material layer, and a solid electrolyte layer disposed on the electrode composite material layer and the resin structure. The resin structure has a bicontinuous structure where a resin constitutes a skeleton of the bicontinuous structure.

BRIEF DESCRIPTION OF THE DRAWINGS

Fig. 1 is a cross-sectional view illustrating an example of a partial structure of the electrode stack of the present embodiment.
Fig. 2A is a cross-sectional view illustrating an example of the electrode stack of the present embodiment.
Fig. 2B is a cross-sectional view illustrating another example of the electrode stack of the present embodiment.
Fig. 2C is a cross-sectional view illustrating yet another example of the electrode stack of the present embodiment.
Fig. 2D is a cross-sectional view illustrating yet another example of the electrode stack of the present embodiment.
Fig. 3 is a cross-sectional view illustrating an example of a partial structure of the electrochemical element of the present embodiment.
Fig. 4 is a top view illustrating an example of a partial structure of the electrode stack of the present embodiment.
Fig. 5 is a top view illustrating another example of the partial structure of the electrode stack of the present embodiment.
Fig. 6A is a top view illustrating another example of the partial structure of the electrode stack of the present embodiment.
Fig. 6B is a top view illustrating yet another example of the partial structure of the electrode stack of the present embodiment.
Fig. 6C is a top view illustrating yet another example of the partial structure of the electrode stack of the present

embodiment.

Fig. 6D is a top view illustrating yet another example of the partial structure of the electrode stack of the present embodiment.

Fig. 6E is a top view illustrating yet another example of the partial structure of the electrode stack of the present embodiment.

Fig. 6F is a top view illustrating yet another example of the partial structure of the electrode stack of the present embodiment.

Fig. 6G is a top view illustrating yet another example of the partial structure of the electrode stack of the present embodiment.

Fig. 7 is a schematic view illustrating an example of a liquid jet device serving as the resin structure production apparatus of the present embodiment.

Fig. 8 is a schematic view illustrating another example of the liquid jet device serving as the resin structure production apparatus of the present embodiment.

Fig. 9 is a schematic view illustrating yet another example of the liquid jet device serving as the resin structure production apparatus of the present embodiment.

Fig. 10 is a schematic view illustrating a modification example of the liquid jet device of Fig. 9.

Fig. 11 is a schematic view illustrating an example of a printing unit using a drum-shaped intermediate transfer member, serving as the resin structure production apparatus of the present disclosure.

Fig. 12 is a schematic view illustrating an example of a printing unit using an endless belt-type intermediate transfer member, serving as the resin structure production apparatus of the present disclosure.

Figs. 13A to 13D are schematic views each illustrating the positional relationship between the resin structure and the electrode composite material layer.

Figs. 14A to 14C are schematic views each illustrating the relationship between the resin structure and the electrode composite material layer in terms of the thickness.

Fig. 15 is a cross-sectional view illustrating an example of a solid-state battery cell serving as the electrochemical element of the present embodiment.

Fig. 16 is a schematic view illustrating the distance between the resin structure and the electrode composite material layer.

Fig. 17 is a schematic view illustrating the distance between the resin structure and the electrode composite material layer.

Fig. 18 is a schematic view illustrating an example of a moving vehicle in which a solid-state battery cell, serving as the electrochemical element of the present embodiment, is mounted.

Fig. 19 is a schematic cross-sectional view illustrating a state where curling of an electrode is reduced as a whole within the electrode stack of the second embodiment.

Fig. 20 is a schematic cross-sectional view illustrating an example of the electrode in the electrode stack of Embodiment 2-1.

Fig. 21 is a schematic cross-sectional view illustrating another example of the electrode in the electrode stack of Embodiment 2-1.

Fig. 22 is a schematic cross-sectional view illustrating an example of the electrode in the electrode stack of Embodiment 2-2.

Fig. 23 is a schematic cross-sectional view illustrating another example of the electrode in the electrode stack of Embodiment 2-2.

Fig. 24 is a schematic cross-sectional view illustrating another example of the electrode in the electrode stack of Embodiment 2-2.

Fig. 25 is a schematic cross-sectional view illustrating an example of the electrode stack of Embodiment 2-1.

Fig. 26 is a schematic cross-sectional view illustrating an example of the electrode stack of Embodiment 2-2.

Fig. 27 is a cross-sectional view illustrating an example of a double-sided electrode serving as the electrode within the electrode stack of the second embodiment.

Fig. 28 is a cross-sectional view illustrating another example of the double-sided electrode serving as the electrode within the electrode stack of the second embodiment.

Fig. 29 is a cross-sectional view illustrating another example of the double-sided electrode serving as the electrode within the electrode stack of the second embodiment.

Fig. 30 is a schematic top view illustrating an example of the electrode composite material layer disposed on the electrode substrate according to the method for producing the electrode stack of the third embodiment.

Fig. 31 is a top view illustrating an example of the method for producing the electrode stack of the third embodiment.

Fig. 32 is a top view illustrating another example of the method for producing the electrode stack of the third embodiment.

Fig. 33 is a top view illustrating another example of the method for producing the electrode stack of the third

embodiment.

Fig. 34 is a schematic cross-sectional view illustrating a state of wetting and spreading of the liquid composition layer.

Fig. 35 is a schematic cross-sectional view illustrating the positional relationship of the first edge of the liquid composition layer with respect to the electrode composite material layer.

Fig. 36 is a schematic cross-sectional view illustrating the positional relationship of the second edge of the liquid composition layer with respect to the electrode composite material layer.

Fig. 37 is a schematic view illustrating the wetting time at the first edge and second edge of the liquid composition layer from the termination of the applying step to the start of the polymerization step.

Fig. 38 is a schematic cross-sectional view illustrating the electrode of Example 5-1.

Fig. 39 is a graph depicting the relationship of the difference between the shrinkage rate of the distal portion and the shrinkage rate of the proximal portion, and curling of the electrode for the electrodes of Examples 5-1 to 5-8 and Comparative Example 5-1.

Fig. 40 is a schematic cross-sectional view illustrating the electrode of Example 5-9.

Fig. 41 is a schematic cross-sectional view illustrating the electrode of Example 5-10.

Fig. 42 is a schematic cross-sectional view illustrating the electrode of Example 5-11.

Fig. 43 is a schematic cross-sectional view illustrating the electrode of Example 5-12.

Fig. 44 is a schematic cross-sectional view illustrating the electrode of Example 5-13.

Fig. 45 is a schematic cross-sectional view illustrating the electrode of Example 5-14.

Fig. 46 is a schematic cross-sectional view illustrating the electrode of Example 5-15.

Fig. 47 is a schematic cross-sectional view illustrating the electrode of Example 5-16.

Fig. 48 is a schematic cross-sectional view illustrating the electrode of Example 5-17.

Fig. 49 is a schematic cross-sectional view illustrating the electrode of Example 5-18.

DESCRIPTION OF THE PREFERRED EMBODIMENTS

In the following, embodiments of the present invention will be described with reference to the accompanying drawings.

Further, the present invention is not limited to these embodiments, but different variations and various modifications may be made without departing from the scope of the present invention.

(Electrode stack)

The electrode stack according to the first embodiment of the present disclosure includes an electrode substrate, an electrode composite material layer disposed on the electrode substrate, a resin structure disposed on a periphery of the electrode composite material layer, and a solid electrolyte layer disposed on the electrode composite material layer and the resin structure. The resin structure has a bicontinuous structure where a resin constitutes a skeleton of the bicontinuous structure.

An object of the present disclosure is to provide an electrode stack that can minimize damages, such as cracks, to avoid short-circuiting between a positive electrode and a negative electrode and can be used to produce a solid-state electrochemical element having excellent battery characteristics.

The present disclosure can provide an electrode stack that can minimize damages, such as cracks, to avoid short-circuiting between a positive electrode and a negative electrode and can be used to produce a solid-state electrochemical element having excellent battery characteristics.

The present inventors have found the problems existing in the related art. The electrode stack of the present disclosure has been accomplished to solve such problems.

According to existing production methods for a solid-state battery cell using a positive electrode, a positive electrode guide is disposed on a periphery of a plane of a positive-electrode active material layer facing a solid electrolyte layer, followed by stacking and pressing, in order to avoid occurrences of short-circuiting between a positive electrode and a negative electrode within a solid-state battery cell. However, there is the following problem. Since very high pressure is applied during the production of the solid-state battery cell, the pressure load is applied to a crack of the positive electrode guide or the electrode, the electrode and the solid electrolyte layer are still damaged by the pressure load.

The present inventors have diligently conducted research to solve the above-described problem. As a result, the present inventors have gained the following insight to accomplish the invention. That is, the electrode stack of the present disclosure can minimize damages, such as cracks, to avoid short-circuiting between a positive electrode and a negative electrode, and can be used to produce a solid-state electrochemical element having excellent battery characteristics.

Specifically, the insights of the present inventors are as follows. As a resin structure having a bicontinuous

structure composed of a resin skeleton is disposed on a periphery of an electrode composite material layer, an average thickness of the electrode composite material layer and an average thickness of the resin structure are easily and precisely made substantially the same (Fig. 1) by coating to form each layer, such as the electrode composite material layer and a solid electrolyte layer, or pressing. Since the resin structure has the bicontinuous structure where the resin constitutes the skeleton of the bicontinuous structure, the adverse effect of the pressure applied by pressing can be reduced even further compared to a positive electrode guide available in the related art so that damages, such as cracks, can be minimized. Moreover, the resin structure can contribute to disperse a pressure load applied to the solid electrolyte layer disposed on the electrode composite material layer and the resin structure. Therefore, the pressure is uniformly applied to the solid electrolyte layer during the process, such as pressing, so that damages, such as cracks, can be minimized during the pressing step (Fig. 2A).

By combining the above-described electrode stack where the resin structure having the bicontinuous structure composed of the resin skeleton is disposed on the periphery of the electrode composite material layer to minimize damages, such as cracks, and a counter electrode, a solid-state battery cell having excellent battery characteristics can be formed (Fig. 3), as well as further minimizing damages, such as cracks, during the pressing step to avoid short-circuiting between the positive electrode and the negative electrode.

In the present specification, an average thickness of the electrode composite material layer and an average thickness of the resin structure being substantially the same means that a ratio (B/A) of the average thickness B of the resin structure to the average thickness A of the electrode composite material layer is 0.97 or greater and 1.03 or less.

Fig. 1 illustrates an example of a partial structure of the electrode stack of the present disclosure. Fig. 1 is a cross-sectional view illustrating an electrode 25 including a resin structure, where the electrode 25 including the resin structure includes a first electrode substrate 21, an electrode composite material layer 20 disposed on the first electrode substrate 21, a resin structure 10 disposed on the periphery of the first electrode composite material layer 20 on the first electrode substrate 21. The periphery of the first electrode composite material layer 20 is the outer edge of the electrode composite material layer 20. The resin structure 10 has a bicontinuous structure where a resin constitutes a skeleton.

In Fig. 1, a structure where the electrode composite material layer 20 and the resin structure 10 are disposed on one plane of the first electrode substrate 21 is illustrated, but a combination of the electrode composite material layer 20 and the resin structure 10 may be disposed on both planes of the first electrode substrate 21 facing each other. The shapes of the electrode composite material layer 20 and resin structure 10 disposed on one plane of the first electrode substrate 21 and the shapes of the electrode composite material layer 20 and resin structure 10 disposed on the other plane of the first electrode substrate 21, where the above-mentioned planes of the first electrode substrate 21 face each other, are preferably the same. Since the shapes of the electrode composite material layer 20 and resin structure 10 disposed on one plane of the first electrode substrate 21 and the shapes of the electrode composite material layer 20 and resin structure 10 disposed on the other plane of the first electrode substrate 21, where the above-mentioned planes of the first electrode substrate 21 face each other, are the same, the pressure applied to both planes of the electrode composite material layer can be made equal to minimize damages.

Fig. 2A illustrates an example of the electrode stack of the present disclosure. Fig. 2A is a cross-sectional view illustrating the electrode stack 35. The electrode stack 35 includes a first electrode substrate 21, a first electrode composite material layer 20 disposed on the first electrode substrate 21, a resin structure 10 disposed on the periphery of the first electrode composite material layer 20 on the first electrode substrate 21, and a solid electrolyte layer 30 disposed on the first electrode composite material layer 20 and the resin structure 10. The periphery of the first electrode composite material layer 20 is the outer edge of the first electrode substrate 21. The resin structure 10 has a bicontinuous structure where a resin constitutes a skeleton.

Fig. 2A illustrates the structure where the electrode composite material layer 20, the resin structure 10, and the solid electrolyte layer 30 are disposed on one plane of the first electrode substrate 21. As illustrated in Fig. 2B, the electrode composite material layer 20, the resin structure 10, and the solid electrolyte layer 30 may be disposed on both planes of the first electrode substrate 21 facing each other. The shapes of the electrode composite material layer 20 and resin structure 10 disposed on one plane of the first electrode substrate 21 and the shapes of the electrode composite material layer 20 and resin structure 10 disposed on the other plane of the first electrode substrate 21, where the above-mentioned planes of the first electrode substrate 21 face each other, are preferably the same. Since the shapes of the electrode composite material layer 20 and resin structure 10 disposed on one plane of the first electrode substrate 21 and the shapes of the electrode composite material layer 20 and resin structure 10 disposed on the other plane of the first electrode substrate 21, where the above-mentioned planes of the first electrode substrate 21 face each other, are the same, the pressure applied to both planes of the electrode composite material layer can be made equal to minimize damages.

As illustrated in Fig. 2B, moreover, the resin structures 10 may be disposed on the periphery of the electrode composite material layer 20 to encapsulate the edges of the electrode substrate 21 in the resin structures 10. As illustrated in Fig. 2C, the resin structures 10 may be disposed in a manner that the resin structure 10 leaves a blank region of the electrode substrate 21 extending from the perimeter of the resin structures 10. As illustrated in Fig. 2D, the resin structure

10 may be disposed on the outer edge of the electrode substrate 21 to cover the edges of the electrode substrate 21.

Moreover, the resin structure 10 may be a structure having only a bicontinuous structure where a resin constitutes a skeleton of the bicontinuous structure, or a structure including a segment having a bicontinuous structure where a resin constitutes a skeleton, and a segment not including bicontinuous structure where a resin constitutes a skeleton. Examples of the segment not including a bicontinuous structure where a resin constitutes a skeleton include structures formed of inorganic insulation materials, and structures formed of materials adsorbing or absorbing gasses.

In the case where the resin structure is a structure including a segment having a bicontinuous structure where a resin constitutes a skeleton and a segment not having a bicontinuous structure where a resin constitutes a skeleton, the positional relationship between the segment having the bicontinuous structure where the resin constitutes the skeleton and the segment not having the bicontinuous structure where the resin constitutes the skeleton may be, for example, the relationship where the segments may be disposed next to each other relative to the stacking direction of the electrode, or may be disposed next to each other along the vertical direction to the stacking direction of the electrode, i.e., the horizontal direction relative to the electrode substrate, or may be disposed in the manner that the segment not including the bicontinuous structure where the resin constitutes the skeleton is encapsulated in the segment including the bicontinuous structure where the resin constitutes the skeleton.

Fig. 3 illustrates an example of the below-described electrochemical element of the present disclosure. Fig. 3 is a cross-sectional view illustrating the electrochemical element 45. The electrochemical element 45 includes a second electrode on an electrode stack 35. The second electrode includes a second electrode substrate 41 and an electrode composite material layer 40 disposed below the second electrode substrate 41. A solid electrolyte layer 30 and the electrode composite material layer 40 face each other. The electrochemical element 45 is a single cell layer, and the single cell layers are laminated to form a laminated battery cell.

Fig. 3 illustrates a structure where the electrode composite material layer 20, the resin structure 10, and the solid electrolyte layer 30 are disposed on one plane of the first electrode substrate 21, but the electrode composite material layer 20, the resin structure 10, and the solid electrolyte layer 30 may be disposed on both planes of the first electrode substrate 21 facing each other. Alternatively, a plurality of the above-described structures may be laminated to form a laminated battery cell. The shapes of the electrode composite material layer 20 and resin structure 10 on one plane of the first electrode substrate 21 and the shapes of the electrode composite material layer 20 and resin structure 10 on the other plane are preferably the same. Since the shapes of the electrode composite material layer 20 and resin structure 10 on one plane of the first electrode substrate 21 and the shapes of the electrode composite material layer 20 and resin structure 10 on the other plane are same, pressure is uniformly applied to both planes of the electrode composite material layer facing each other to minimize damages.

<Electrode (first electrode and second electrode)>

The electrode includes an electrode substrate, an electrode composite material layer, and a resin structure.

A negative electrode and a positive electrode may be collectively referred to as an "electrode." An electrode substrate for a negative electrode and an electrode substrate for a positive electrode may be collectively referred to as an "electrode substrate." A negative-electrode composite material layer and a positive-electrode composite material layer may be collectively referred to as an "electrode composite material layer."

In a case where a first electrode is a negative electrode, a second electrode is a positive electrode. In a case where a first electrode is a positive electrode, moreover, a second electrode is a negative electrode.

<Electrode substrate>

The electrode substrate is not particularly limited, except that the electrode substrate has conductivity and is a base stable to applied potential. Examples of the electrode substrate include aluminum foils, copper foils, stainless steel foils, titanium foils, etched foils that are prepared by etching any of the foregoing foils to form micro pores, and through-hole electrode substrates used for lithium ion capacitors.

<Electrode composite material layer>

The electrode composite material layer (may be referred to as an "active material layer" hereinafter) is not particularly limited, and may be appropriately selected according to the intended purpose. For example, the electrode composite material layer includes an active material (a negative-electrode active material or a positive-electrode active material), and may further include a conductive agent, a binder, a dispersing agent, a solid electrolyte, and other components, as necessary.

«Active material»

As the active material, a positive-electrode active material or a negative-electrode active material may be used. The positive-electrode active material or negative-electrode active material may be used alone, or two or more positive-electrode active materials or negative-electrode active materials may be used in combination.

The positive-electrode active material is not particularly limited, except that the positive-electrode active material is a material capable of reversibly absorbing or releasing alkali metal ions. As the positive-electrode active material, an alkali metal-containing transition metal compound can be used.

Examples of the alkali metal-containing transition metal compounds include lithium-containing transition metal compounds, such as composite oxides including lithium and at least one element selected from the group consisting of cobalt, manganese, nickel, chromium, iron, and vanadium.

Examples of the lithium-containing transition metal compounds include lithium cobalt, lithium nickelate, and lithium manganate.

As the alkali metal-containing transition metal compound, a polyanion-based compound having a XO4 tetrahedron (X is P, S, As, Mo, W, Si, etc.) in a crystal structure thereof may be also used. Among the above-listed examples, a lithium-containing transition metal phosphoric acid compound, such as lithium iron phosphate and lithium vanadium phosphate, is preferred in view of cycle characteristics, and lithium vanadium phosphate is particularly preferred in view of a diffusion coefficient of lithium and output properties.

Considering electron conductivity, a surface of the polyanion-based compound is preferably coated with a conductive agent, such as a carbon material, to form a composite.

The negative electrode active material is not particularly limited, except that the negative electrode active material can reversibly absorb and release alkali metal ions. As the negative electrode active material, a carbon material including graphite having a graphite-type crystal structure may be used.

Examples of the carbon material include natural graphite, spherical or fibrous synthetic graphite, non-graphitizing carbon (hard carbon), and graphitizing carbon (soft carbon).

Examples of materials other than the carbon material include lithium titanate and titanium oxide.

Moreover, a high-capacity material, such as silicon, tin, silicon alloys, tin alloys, silicon oxide, silicon nitride, and tin oxide, may be also suitably used as a negative electrode active material for increasing energy density of a lithium ion battery.

«Conductive agent»

As the conductive agent, a carbon material may be used. Examples of the carbon material include: carbon black produced by a furnace method, an acetylene method, gasification, etc.; carbon nanofibers; carbon nanotubes; graphene; and graphite particles. As the conductive agent other than the carbon material, for example, metal particles or metal fibers, such as particles or fibers of aluminum, may be used. The conductive agent may be formed into a composite with an active material in advance.

A mass ratio of the conductive agent to the active material is preferably 10% by mass or less, more preferably 8% by mass or less. When the mass ratio of the conductive agent to the active material is 10% by mass or less, stability of the liquid composition is improved. When the mass ratio of the conductive agent to the active material is 8% by mass or less, moreover, stability of the liquid composition is further improved.

<<Binder>>

The binder is not particularly limited, except that the binder can bind the negative electrode composite material together, bind the positive electrode composite material together, bind the negative electrode composite material with an electrode substrate for a negative electrode, or bind the positive electrode composite material with an electrode substrate for a positive electrode. When the liquid composition is used by inkjet, the binder is preferably unlikely to increase the viscosity of the liquid composition for avoiding clogging of nozzles in a liquid jet head.

An amount of the binder relative to the active material is preferably 1% by mass or greater and 15% by mass or less, more preferably 3% by mass or greater and 10% by mass or less. When the amount of the binder relative to the active material is 1% by mass or greater, the active material can be securely bound to the electrode substrate.

As the binder, a polymer compound can be used.

Examples of the polymer compound include: thermoplastic resins, such as polyvinylidene fluoride (PVDF), acrylic resins, styrene butadiene rubber, polyethylene, polypropylene, polyurethane, nylon, polytetrafluoroethylene, polyphenylene sulfide, polyethylene terephthalate, and polybutylene terephthalate; polyamide compounds; polyimide compounds; polyamide imide, ethylene-propylene-butadiene rubber (EPBR); styrene-butadiene rubber (SBR); nitrile butadiene rubber (NBR); isoprene rubber; polyisobutene; polyethylene glycol (PEO); polymethyl methacrylate (PMMA);

and polyethylene vinyl acetate (PEVA) .

<<Dispersing agent>>

The dispersing agent is not particularly limited, except that the dispersing agent can improve dispersibility of the active material in the liquid composition. Examples of the dispersing agent include: polymer dispersing agents, such as polyethylene oxide-based dispersing agents, polypropylene oxide-based dispersing agents, polycarboxylic acid-based dispersing agents, naphthalene sulfonic acid formaldehyde condensate-based dispersing agents, polyethylene glycol-based dispersing agents, partially alkylated polycarboxylic acid ester-based dispersing agents, polyether-based dispersing agents, and polyalkylene polyamine-based dispersing agents; low-molecular-weight dispersing agents, such as alkyl sulfonic acid-based dispersing agents, quaternary ammonium-based higher alcohol alkylene oxide-based dispersing agents, multivalent alcohol ester-based dispersing agents, and alkyl polyamine-based dispersing agents; and inorganic dispersing agents, such as polyphosphate-based dispersing agents.

<<Solid electrolyte>>

The material of the solid electrolyte included in the electrode composite material layer is not particularly limited, except that the material is a solid material exhibiting electron insulation and ion conduction. A sulfide solid electrolyte and oxide-based solid electrolyte are preferred in view of high ionic conductivity.

Examples of the sulfide solid electrolyte include $Li_{10}GeP_2S_{12}$, and $Li_6PS_5X$ (X is F, Cl, Br, or I) having an argyrodite-type crystal structure.

Examples of the oxide-based solid electrolyte include LLZ ($Li_7La_3Zr_2O_{12}$) having a garnet-type crystal structure, LATP ($Li1+xAlxTi_{20}x(PO_4)_3$) ($0.1 \leq x \leq 0.4$) having an NASICON-type crystal structure, LLT ($Li_{0.33}La_{0.55}TiO_3$) having a perovskite-type crystal structure, and amorphous LIPON ($Li_{2.9}PO_{3.3}N_{0.4}$).

Other than the above-listed solid electrolytes, the material of the solid electrolyte is not particularly limited, except that the material does not exceed the spirits of the present disclosure. Moreover, the above-listed solid electrolytes may be used alone or in combination.

An electrolyte material that is dissolved or dispersed in a liquid in order to form the solid electrolyte is a material that will be a precursor of a solid electrolyte. Examples of the electrolyte material include $Li_2S$ and $P_2S_5$, LiCl, and solid electrolyte materials (e.g., $Li_2S$-$P_2S_5$-based glass, $Li_7P_3S_{11}$ glass ceramic, etc.).

<<Other components>>

Examples of other components include a dispersing agent.

<Resin structure>

The resin structure is disposed on the periphery of the electrode composite material layer on the electrode substrate, and is disposed on the outer edge of the electrode substrate.

The resin structure has a bicontinuous structure where a resin constitutes a skeleton of the bicontinuous structure.

The resin structure is preferably porous, and may be referred to as a porous structure or a porous resin.

The resin structure preferably has insulation properties. In the present specification, the resin structure having insulation properties means the resin structure having volume resistivity of $1 \times 10^{12}$ ($\Omega \cdot cm$) or greater.

In the present specification, the term "bicontinuous structure" encompasses a structure of a bicontinuous phase, namely, a structure where each of two or more materials or phases has a continuous structure without forming interfaces between the materials or phases. In the present embodiment, the "bicontinuous structure" encompasses a structure where a resin phase and a gas phase (pores) form a three-dimensional network continuous phase together. For example, the above-described structure can be formed by polymerizing the below-described liquid composition by a polymerization-induced phase separation.

The shape of the resin structure and the position of the resin structure to be disposed will be described with reference to drawings. Figs. 4 to 6 are a top view illustrating the electrode 25 having the resin structure illustrated in Fig. 1, and top views illustrating other embodiments.

In Fig. 4, the resin structures 10 are disposed in a manner that the two resin structures 10 are adjacent to two sides of the electrode composite material layer 20, respectively. In Fig. 5, the resin structures 10 are disposed in a manner that the two regions of the resin structure 10 are adjacent to long sides of the electrode composite material layer 20 and the two corners of the electrode composite material layer 20 along the long side, respectively.

As illustrated in Fig. 6A, moreover, the resin structure 10 may be continuously disposed on the periphery of all

the four sides of the electrode composite material layer 20 in a manner that the resin structure 10 is adjacent to the electrode composite material layer 20. Alternatively, the resin structure 10 may be disposed intermittently on the periphery of the electrode composite material layer 20 in a manner that the resin structure 10 is adjacent to the electrode composite material layer 20, as illustrated in Fig. 6B to 6G.

When the resin structure 10 is disposed intermittently as illustrated in Figs. 6B to 6G, the embodiment of the resin structure 10 may be an embodiment where the resin structure 10 is disposed intermittently along one or more sides of the electrode composite material layer 20 (Fig. 6B), an embodiment where the resin structure 10 is disposed intermittently to be adjacent to one or more corners of the electrode composite material layer 20 (Fig. 6C), or a combination of the foregoing embodiments (Fig. 6D) .

Moreover, the area inside the perimeter of the electrode composite material layer 20 may not be coated entirely. Specifically, the electrode composite material layer 20 may have an opening or an uncoated area. Such an embodiment may be an embodiment where a resin structure 10 is disposed on the periphery of the electrode composite material layer 20 and on the area inside the perimeter of the electrode composite material layer 20 (Fig. 6E), or an embodiment where an electrode composite material layer 20' is further disposed on the area inside the perimeter of the resin structure 20 disposed in the area inside the perimeter of the electrode composite material layer 20 (Fig. 6F). In the case where the resin structure 10 is disposed on the area inside the perimeter of the electrode composite material layer 20 having the opening, moreover, the arrangement of the resin structure 10 may be an embodiment where the resin structure 10 is disposed intermittently along one or more inner sides of the electrode composite material layer 20, or an embodiment where the resin structure 10 is disposed intermittently to be adjacent to one or more inner corners of the electrode composite material layer 20, or a combination of the foregoing embodiments. Moreover, a resin structure may be disposed only on the area inside the perimeter of the electrode composite material layer 20 having the opening (Fig. 6G).

The phrase "disposed on the periphery of the electrode composite material layer" may encompasses an embodiment where the resin structure is disposed along the perimeter of the electrode composite material layer, or an embodiment where the resin structure is disposed on the area inside the perimeter of the electrode composite material layer, or a combination of the foregoing embodiments.

In the case where the resin structure is "disposed along the perimeter of the electrode composite material layer," the resin structure is disposed along at least two sides of the perimeter of the electrode composite material layer. The resin structure may be disposed along three sides of the perimeter of the electrode composite material layer, or along four sides (all of the sides) of the perimeter of the electrode composite material layer. Moreover, the resin structure may have a recess or cut-out, from which an electrode tab is extended, at an arbitrary side. A recess or cut-out may be arranged in the similar manner, when the resin structure is "disposed along the perimeter of the electrode composite material layer."

Moreover, the resin structure being "arranged on the edge of the electrode substrate" may encompass an embodiment where the resin structure is disposed in a manner that the edge of the electrode substrate is encapsulated within the resin structure, or an embodiment where the resin structure is disposed in a manner that the resin structure leaves a blank region of the electrode substrate extended from the perimeter of the resin structure, as illustrated in Figs. 4 to 6.

The resin structure may be set apart from the electrode composite material layer (Fig. 13A), or may be disposed to be adjacent to the electrode composite material layer (Figs. 13B to 13D). The resin structure is preferably disposed to be adjacent to the electrode composite material layer because the active material particles are prevented from falling off from the edge of the electrode composite material layer when pressure is applied, and a solid electrolyte slurry is prevented from entering the gap between the resin structure and the electrode composite material layer.

In the case where the resin structure is disposed to be adjacent to the electrode composite material layer, as illustrated in Figs. 13B to 13D, the plane of the resin structure and the plane of the electrode composite material layer, which face each other, may partially come into contact (Fig. 13B), the entire plane of the resin structure and the entire plane of the electrode composite material layer, which face each other, may come into contact with each other (Figs. 13C to 13D). In the case where the resin structure is disposed after the formation of the electrode composite material layer, the resin structure is leaned towards the electrode composite material layer (Fig. 13C). In the case where the electrode composite material layer is disposed after the formation of the resin structure, the electrode composite material layer is leaned towards the resin structure (Fig. 13D). Among the above-listed examples, the structure of Fig. 13C is preferred, because the particles of the active material are prevented from falling off from the edge of the electrode composite material layer when pressure is applied, and a solid electrolyte slurry is prevented from entering the gap between the resin structure and the electrode composite material layer. Within the structure of Fig. 13C, an embodiment where the thickness of the resin structure and the thickness of the electrode composite material layer are substantially the same is more preferred. Moreover, the resin structure may be set apart from the electrode composite material layer (Fig. 13A), or may be a structure where a material that is different from the material of the resin structure is disposed between the resin structure and the electrode composite material layer.

In the case where the resin structure and the electrode composite material layer are disposed with a gap

between the resin structure and the electrode composite material layer, the distance d between the resin structure and the electrode composite material layer is preferably 10 mm or less, more preferably 5 mm or less, and yet more preferably 1 mm or less.

When the distance d between the resin structure and the electrode composite material layer is 10 mm or less, the resin structure and electrode composite material layer are easily brought into contact with each other after the pressing step, thus a solid electrolyte layer is uniformly formed on the resin structure and the electrode composite material layer. When the solid electrolyte layer is pressed, moreover, pressure can be uniformly applied to the solid electrolyte layer.

The distance d between the electrode composite material layer and the resin structure (the width of the gap between the perimeter of the electrode composite material layer and the resin structure) is defined as in Figs. 16 to 17. In the state where the electrode composite material layer and the resin structure are adjacent to each other as illustrated in Fig. 16, the distance d is defined as 0. The gap indicated with the arrows in Fig. 17 is defined as the distance d between the electrode composite material layer and the resin structure.

In the case where the resin structure is leaned towards the electrode composite material layer (e.g., Figs. 13C to 13D), the distance d is represented with a negative numeric value.

A ratio (B/A) of the average thickness B of the resin structure to the average thickness A of the electrode composite material layer in the electrode stack is not particularly limited, and may be appropriately selected according to the intended purpose. The ratio (B/A) is preferably 0.97 or greater and 1.03 or less, more preferably 0.98 or greater and 1.02 or less.

The average thickness A of the electrode composite material layer and the average thickness B of the resin structure can be each determined by measuring a thickness at randomly selected three or more points and calculating the average of the measured values.

The relationship between the average thickness A of the electrode composite material layer and the average thickness B of the resin structure before and after pressing may be $A < B$, or $A = B$, or $A > B$, as schematically illustrated in Figs. 14A to 14C. The relationship between A and B may be appropriately selected. The relationship between A and B is preferably $A = B$ or $A < B$.

Moreover, compressibility of the resin structure as pressed at 500 MPa for 5 minutes is not particularly limited, and may be appropriately selected according to the intended purpose. The compressibility is preferably 1% or greater, more preferably 5% or greater, and yet more preferably 10% or greater. Moreover, the compressibility is preferably 50% or less, more preferably 40% or less, and yet more preferably 20% or less.

For example, the compressibility can be determined by cutting out a cross-section of the resin structure by a focused ion beam (FIB), observing the cross-sectional structure of the resin structure under a scanning electron microscope (SEM), and calculating the thickness of the resin structure before and after the compression.

When the compressibility of the resin structure is 50% or less, the shape of the resin structure can be adequately maintained even after the pressing step, because of the strength of the resin structure. When the compressibility is 1% or greater, the pressure applied to the solid electrolyte layer via the resin structure can be reduced in the pressing step performed after the formation of the solid electrolyte layer.

Since the resin structure has a bicontinuous structure, the thickness of the resin structure is easily and precisely controlled by pressing to make the thickness of the electrode composite material layer and the thickness of the resin structure substantially the same. Moreover, the thickness of the resin structure can be also easily controlled by forming the resin structure by the above-described coating and polymerization-induced phase separation. Since the porous resin layer having a bicontinuous structure can efficiently disperse the pressure generated by pressing, problems, such as damages of the resin layer, the uneven thickness, etc., can be avoided to produce a high quality resin layer. Moreover, interfaces within the resin structure can be reduced as the resin structure has the bicontinuous structure so that cracks of the structure can be minimized during pressing, compared to a structure having many interfaces, such as a structure where a layer of the structure is formed of a stack of inorganic particles. If the resin structure has a bicontinuous structure, i.e., a structure where all pore surfaces are communicated, for example, a gas, such as hydrogen sulfide, generated when a sulfide solid electrolyte is used as a solid electrolyte is actively guided to predetermined areas without retaining the generated gas inside the structure. The predetermined areas are members, such as a member for adsorbing the gas, and a valve for releasing the gas from the housing, in which the electrochemical element is mounted, to the outside the housing. Moreover, the member for adsorbing the gas may be disposed inside the housing. In the case where the member is disposed inside the housing, the member may be disposed within the resin structure, or a different position to the resin structure within the housing.

If the resin structure does not have a bicontinuous structure, in other words, the resin structure has a porous structure including many closed pores, the gas is encapsulated in the closed pores. Therefore, the resin structure may crack as the internal pressure increases when the active material layer is swollen during charging. Even in the above-described case, the resin structure is not easily cracked if the resin structure has a bicontinuous structure.

During production of a solid-state battery, moreover, if a gas, such as water vapor and oxygen, remains within the solid-state battery, the gas may react with the solid electrolyte or the active material to impair battery characteristics

of the solid-state battery. For this reason, a process of removing gasses present within the solid-state battery may be provided during the production process. If the resin structure has a bicontinuous structure, namely, a structure where all pore phases are communicated, the gas within the solid-state battery can be efficiently removed during the process of removing the gas, and the amount of the residual gas can be reduced because the resin structure does not have closed pores. Therefore, an electrochemical element having excellent battery characteristics can be produced.

It is common that an electrochemical element that is likely to cause short-circuiting due to precipitation of dendrites generally has a structure where a negative-electrode composite material layer is larger than a positive-electrode composite material layer. If the size of the positive electrode collector and the size of the negative electrode collector are substantially the same, the region of the positive electrode collector facing the negative-electrode composite material layer of the negative electrode has an excess part, on which the positive-electrode composite material layer is not formed, as illustrated in Fig. 15. In view of characteristics of an electrochemical element, the resin structure is preferably arranged on the excess part of the positive electrode, i.e., the periphery of the positive-electrode composite material layer. In the case where an electrochemical element has a structure where the negative-electrode composite material layer is smaller than the positive-electrode composite material layer, the resin structure is preferably disposed on the excess part of the negative electrode, i.e., the periphery of the negative-electrode-composite material.

Examples of the method for confirming whether the resin structure has a bicontinuous structure with communicated pores include a method where a cross-sectional image of the porous structure is observed by a scanning electron microscope (SEM) to confirm that pores are communicated to one another. Moreover, examples of one of the physical properties obtained by the communicated pores include air permeance.

[Image observation by scanning electrode microscope (SEM) and measurement of porosity]

The porosity of the porous structure before pressing is preferably 30% or greater, more preferably 50% or greater. Moreover, the porosity of the porous structure before pressing is preferably 90% or less, more preferably 85% or less.

When the porosity before pressing is 30% or greater, the pressure applied to the solid electrolyte layer via the resin structure can be reduced during the pressing step performed after the formation of the solid electrolyte layer. When the porosity is 90% or less, moreover, the shape of the resin structure can be adequately retained even after the pressing step because of the strength of the resin structure.

The evaluation method for the porosity of the porous structure is not particularly limited, and may be appropriately selected according to the intended purpose. Examples of the evaluation method include a method where the porous structure is dyed with osmium, followed by vacuum-impregnation with an epoxy resin, and a cross-section of the inner part of the porous structure is cut out by a focused ion beam (FIB) to measure porosity using a scanning electron microscope (SEM).

The porosity of the porous structure after pressing is preferably 1% or greater, more preferably 10% or greater. Moreover, the porosity of the porous structure after pressing is preferably 80% or less, more preferably 60% or less.

Since the porosity after the press is 1% or greater, the adhesion to a member positioned on the periphery of the resin structure can be improved. Since the porosity is 80% or less, moreover, a change in the thickness of the porous structure can be minimized even when the porous structure is used in the pressing step.

[Air permeance]

The air permeance of the porous structure before pressing is preferably 1,000 sec/100 mL or less, more preferably 500 sec/100 mL or less, and yet more preferably 300 sec/100 mL or less.

The air permeance is air permeance measured according to JIS P8117. For example, the air permeance can be measured by Gurley-type densometer (available from Toyo Seiki Seisaku-sho, Ltd.), etc.

In one example, pores may be judged as being communicated when the air permeance is 1,000 sec/100 mL or less.

The cross-sectional shapes of the pores in the porous resin may be various shapes, such as substantially circular shapes, substantially oval shapes, and substantially polygon shapes. The size of the pores may be various sizes. In the present specification, the size of the pore is the length of the longest part (maximum major axis) on the cross-sectional shape of the pore. The size of each pore and the median diameter of the pores can be determined, for example, from a cross-section photograph taken by a scanning electron microscope (SEM). A field of view, in which more than 100 pores are included and an entire area of each pore is observed, is selected, and the maximum major axis of each pore is measured as "a size of each pore." The pore size distribution is determined by plotting the sizes of pores on the horizontal axis, and the number of pores per pore size on the vertical axis. The pore size at a 50% point of the pore size distribution based on the number of pores is determined as a median diameter of the pores.

The size of the pores in the porous resin is not particularly limited, and may be appropriately selected according

to the intended purpose. The ratio of the size of the pores to a median diameter of particles of solid electrolyte included in a liquid composition for forming a solid electrolyte layer on the resin structure is preferably less than 1, more preferably 0.8 or less. When the size of pores is larger than the median diameter of the particles of the solid electrolyte, the solid electrolyte particles may be captured within the pores of the resin structure. When the ratio is within the above-described range, it is advantageous because the resin structure has a structure which does not facilitate to capture the solid electrolyte particles in the pores of the resin structure so that the pressure applied during pressing can be dispersed, and the pressure applied from the resin structure to the solid electrolyte can be reduced.

The method for adjusting the size of pores of the porous resin and the porosity of the porous resin is not particularly limited. Examples of the method include: a method where the amount of the polymerizable compound in the liquid composition is adjusted to the above-described range; a method where the amount of the porogenic solvent in the liquid composition is adjusted to the above-described range; and a method where irradiation conditions of active energy rays are adjusted.

The average thickness of the resin structure is not particularly limited, and may be appropriately selected according to various conditions, such as the average thickness of the electrode composite material layer. The average thickness of the resin structure is preferably 1.0 μm or greater and 150.0 μm or less, more preferably 10.0 μm or greater and 100.0 μm or less. Since the average thickness is 10.0 μm or greater, the pressure load can be dispersed, and short-circuiting between the positive electrode and the negative electrode can be avoided. Since the average thickness is 100.0 μm or less, moreover, a solid-state electrochemical element having a high density and excellent battery characteristics can be produced.

The average thickness can be determined by measuring a thickness at arbitrary 3 or more points, and calculating an average of the measured values.

-Adhesive resin structure-

Moreover, an embodiment of the resin structure may be an adhesive resin structure exhibiting adhesion upon application of heat and having the below-described peel strength of 2 N/m or greater. At least part of the resin structure that is the adhesive resin structure is preferably adhered to a surface of another base.

For example, at least two selected from the electrode substrate, the electrode composite material layer, the solid electrolyte layer, and a housing of the electrochemical element are thermally adhered together with the adhesive resin structure to minimize the unintentional movement of the solid electrolyte layer and the unintentional movement of the electrode stack caused during or after laminating battery cell layers. Therefore, an electrochemical element having excellent battery characteristics can be produced. Among the above-described examples, it is preferred that at least the electrode substrate and the solid electrolyte layer be thermally adhered with the resin structure.

[Glass transition temperature]

When the adhesive resin structure is heated to induce adhesion to adhere to another material, the adhesive resin structure does not cause a notable change in shape as the cross-linked resin included in the adhesive resin structure does not melt with the applied heat. Therefore, the adhesive resin structure can maintain excellent insulation properties before and after the thermal adhesion.

In order for the adhesive resin structure to function as the adhesive insulation layer, a glass transition temperature (Tg) of the cross-linked resin constituting a skeleton is important.

The glass transition temperature (Tg) of the adhesive resin structure is preferably 0°C or higher and 100°C or lower, more preferably 25°C or higher and 60°C or lower.

When the Tg is lower than 0°C, a tackiness is generated on the surface of the cross-linked resin at room temperature, causing difficult handling after formation of the resin structure.

When the Tg is higher than 100°C, excellent adhesion is not achieved after thermal adhesion. In this case, the temperature for inducing thermal adhesion is increased, but adverse effects may be caused to the surrounding base area. Therefore, the Tg of higher than 100°C is not preferred. When the Tg is 0°C or higher and 100°C or lower, on the other hand, excellent handling is achieved before and after thermal adhesion, excellent adhesion is achieved after thermal adhesion, and adverse effects are not caused by overheating. Therefore, the Tg of 0°C or higher and 100°C or lower is advantageous.

[Peel strength]

The peel strength of the adhesive resin structure is the peel strength of the following element for measuring peel strength (peel strength measurement element) measured at room temperature (25°C) by a peel measurement method.

The peel strength of the resin structure is 2 N/m or greater, preferably 5 N/m or greater, and more preferably 25 N/m or greater.

The peel strength measurement element is produced in the following manner. Two bases each in the size of 30 mm × 100 mm are provided. On an entire plane of each base, the adhesive resin structure is disposed. The bases are arranged so that the adhesive resin structures on the bases face each other. Then, the bases are thermal adhered with air-cylinder thrust of 500 N at a temperature of 140°C for 1 second.

The peel strength can be measured using, for example, an adhesive/coating peel analysis device, Versatile Peel Analyzer (available from Kyowa Interface Science Co., Ltd.) as a peel strength measurement device. Specifically, the peel strength can be measured in the following manner.

The plane of the first base of the peel strength measurement element opposite to the plane of the first base on which the adhesive resin structure is formed is fixed to a sample fixing surface of the peel strength measurement device with a thin double-sided tape. Next, the plane of the second base of the peel strength measurement element opposite to the plane of the second base on which the adhesive resin structure is formed is fixed to a tensile indenter of the peel strength measurement device with a tape. Then, the peel strength is measured under the following measurement conditions.

-Measurement conditions of peel strength-

Peel strength measurement device: adhesive/coating peel analysis device, Versatile Peel Analyzer (available from Kyowa Interface Science Co., Ltd.)
Thin double-sided tape: No. 5000 NS (width: 20 mm, available from Nitto Denko Corporation)
Tape: No. 29 (width: 18 mm, available from Nitto Denko Corporation)
Measurement speed: 30 mm/min
Peeling angle: 90°
Peeling distance: 75 mm

Since the peel distance does not significantly affect the peel strength, an arbitrary value may be set as the peel distance. Moreover, the thin double-sided tape and tape used for fixing the peel strength measurement element may be selected from tapes that have the peel strength sufficiently higher than the peel strength of the adhesive resin structure and are not peeled during the measurement.

<Solid electrolyte layer>

The solid electrolyte of the solid electrolyte layer is appropriately selected from the materials described as the solid electrolyte used in the electrode composite material layer.

The solid electrolyte layer may include a binder. Examples of the binder include: thermoplastic resins, such as polyvinylidene fluoride (PVDF), acrylic resins, styrene butadiene rubber, polyethylene, polypropylene, polyurethane, nylon, polytetrafluoroethylene, polyphenylene sulfide, polyethylene terephthalate, and polybutylene terephthalate; polyamide compounds; polyimide compounds; polyamide imide; ethylene-propylene-butadiene rubber (EPBR); styrene-butadiene rubber (SBR), nitrile butadiene rubber (NBR); polymethyl methacrylate (PMMA); polybutyl methacrylate (PBMA); isoprene rubber; polyisobutene; polyethylene glycol (PEO); and polyethylene vinyl acetate (PEVA).

[Electrode stack according to second embodiment]

The electrode stack according to the second embodiment includes an electrode substrate, an electrode composite material layer disposed on the electrode substrate, a resin structure disposed on a periphery of the electrode composite material layer, and a solid electrolyte layer disposed on the electrode composite material layer and the resin structure.

Moreover, the resin structure has a first portion and a second portion that is different from the first portion. The first portion and the second portion have mutually different compressibility as a load is applied. The first portion and the second portion are arranged along a horizontal direction relative to the electrode substrate.

In other words, the resin structure has the first portion and the second portion arranged along the horizontal direction relative to the electrode substrate, and the compressibility of the first portion of the resin structure and the compressibility of the second portion of the resin structure are different from each other, as a load is applied to the resin structure.

In association with the electrode stack of the second embodiment, the following problem of existing solid-state battery production methods in the art is considered. According to the existing solid-state battery production method using a positive electrode for a solid-state battery, as a stack including a positive electrode, a solid electrolyte layer, and a negative electrode is pressed at very high pressure, for example, a positive-electrode composite material layer is stretched greater than a positive electrode substrate (positive electrode collector), thus the stack or electrode is curled in a manner that the peak of the curvature is formed at the side of the positive-electrode composite material layer relative to the positive electrode substrate. The above-described problem becomes significant particularly in case of a single-sided electrode, or in case of a double-sided electrode in which there is a difference in a thickness, material, or size between the electrodes.

Moreover, there are also problems such that a solid electrolyte penetrates into a resin structure to impair battery characteristics, the solid electrolyte is spread out or leaked, adhesion is insufficient, etc.

In the case where a positive electrode guide is arranged as an isolated body prepared by processing a film, as in WO2020-022111, furthermore, it is difficult to adhere the positive electrode guide without forming any gap with the positive electrode. Therefore, the edges of the positive electrode cannot be adequately covered, and the above-described problem of the curling of the electrode stack or electrode cannot be solved.

In recent years, use of an inkjet system as an industrial coater has been considered. This is because the inkjet system can be applied for micro coating or coating of precise patterns to reduce loss of a material as much as possible, and the inkjet system can coat precise patterns based on CAD data etc., without using a plate (mask). Moreover, the inkjet printing achieves high uniformity in film thickness and highly accurate ink deposition, and the inkjet printing can perform selective coating, coating of different shapes, and drawing of wirings, such as fine wirings, and minute pieces. For the above-described reasons, there is a strong desire to form an active material layer guide formed of a resin by the inkjet printing using a photocurable liquid composition.

The present inventors have diligently conducted research to solve the above-described object. As a result, the present inventors have gained the following insight. The electrode stack of the second embodiment includes a resin structure that includes portions compressibility of which are mutually different, as the resin structure is horizontally pressed. As the position that is easily compressed is curled in the reverse direction to the curling direction of the electrode composite material layer, reduce curling of the electrode stack can be reduced as a whole.

With reference to Fig. 19, specifically, the electrode composite material layer 20 is stretched greater than the electrode substrate 21 (see the arrows in the electrode composite material layer 20 in Fig. 19) as the electrode 25 or electrode stack 35 is pressed at high pressure. As a result, the electrode 25 is curled in a manner that the peak of the curvature is formed at the side of the electrode composite material layer 20 relative to the electrode substrate 21. In contrast, as a load is applied to the resin structure 10 of the electrode stack 35 of the present embodiment, the compressibility of the first portion 10a of the resin structure and the compressibility of the second portion of the resin structure 10, where the second portion is different from the first portion, are mutually different, thus the portion that is not easily compressed (e.g., the first portion 10a) structurally supports the solid electrolyte 30 (not to crack the solid electrolyte 30) and the portion that is easily compressed (e.g., the second portion 10b) is curled in the reverse direction to the curling direction of the electrode composite material layer 20 to counterbalance the curling of the electrode composite material 20. Therefore, curling of the electrode stack as a whole can be reduced (Fig. 19).

In Fig. 19, a plurality of combinations of the electrode composite material layer 20 and the resin structure 10 arranged on the electrode substrate 21 are illustrated to facilitate the understanding of the state where downward curling (convex-shaped curling) due to the electrode composite material layer 20 is caused, and curling of the portion that is easily compressed in the reverse direction is caused. However, the arrangement of the electrode composite material layer 20 and the resin structure 10 is not limited to the arrangement illustrated in Fig. 19, as long as the electrode stack includes at least one set of the electrode composite material layer 20 and the resin structure 10.

Described as an example is the case where the first portion is a proximal portion that is close to the electrode composite material layer and the second portion is a distal portion that is distant from the electrode composite material layer, and a compressibility of the proximal portion is smaller than the distal portion (the case where the distal portion is a portion that is easily compressed; Embodiment 2-1). As described below, however, the case where the compressibility of the proximal portion is greater than the compressibility of the distal portion (i.e., the case where the proximal portion is a portion that is easily compressed; Embodiment 2-2) may also be applied. In any case, an electrode stack curling of which is reduced as a whole can be provided, as the portion that is easily compressed is curled in the reverse direction to the upwards curling (convex-shaped curling) of the electrode composite material layer.

Since curling of the electrode stack can be reduced as a whole, as described above, the resin structure can disperse the pressure even better than a typical positive electrode guide available in the related art, to thereby minimize damages, such as cracks. The resin structure can disperse the pressure load to apply uniform pressure to the electrode composite material layer and the solid electrolyte layer disposed on the resin structure, so that damages, such as cracks, caused in a pressing step can be minimized.

Since the electrode stack curling of which is reduced is used, a production process can be stabilized by combining

the electrode stack having minimized damages and a counter electrode, further damages caused by a pressing step can be minimized to avoid short-circuiting between the positive electrode and the negative electrode, and a solid-state battery cell having excellent battery characteristics can be formed as the electrochemical element.

The electrode stack of the second embodiment will be more specifically described hereinafter.

In the electrode stack according to the second embodiment, the resin structure includes a first portion and a second portion along the horizontal direction to the electrode substrate. The second portion is a portion that is different from the first portion. The first portion and the second portion have mutually different compressibility as a load is applied.

The resin structure includes a first portion and a second portion, which is a portion different from the first portion, along the horizontal direction to the electrode substrate, where a compressibility of the first portion and a compressibility of the second portion are different from each other.

The first portion and the second portion are not particularly limited, except that the first portion and the second portion are two arbitrary portions arranged along the horizontal direction relative to the electrode substrate. The first portion and the second portion may be appropriately selected according to the intended purpose.

Specifically, the electrode stack can be determined by evaluating the compressibility at arbitrary two points of the resin structure along the horizontal direction relative to the electrode substrate to determine whether the compressibility of the first portion and the compressibility of the second portion are different from each other.

[Method for measuring compressibility]

The compressibility of the resin structure can be determined by dividing a change (displacement) in thickness before and after applying a load to the resin structure (or a measurement target point) with a roll press, a uniaxial press, or a cold isostatic press (CIP) by the thickness of the resin structure before applying the load (see the following equation). The thickness of the resin structure can be measured, for example, by a laser microscope (VK-X3000, available from KEYENCE CORPORATION).

Compressibility (%) = [(thickness of resin structure before applying load - thickness of resin structure after applying load)/thickness of resin structure before applying load] $\times$ 100

Regarding the compressibility, moreover, whether the compression amount of the first portion and the shrinkage amount of the second portion are different from each other can be determined by evaluating a shrinkage (compression) amount from a load displacement curve obtained by a nanoindentation method according to ISO 14577: Instrumented indentation test. Specifically, the compressibility can be measured by a nanoindenter (Nano Indenter G200, available from Keysight Technologies (KLA Corporation)).

At the time when the compressibility is measured, the load applied to the resin structure is not particularly limited, and may be appropriately selected according to the intended purpose, such as pressure during pressing. The load is preferably 1 MPa or greater at which a significant difference is generated, and more preferably 250 MPa or greater at which the resin structure is mostly compressed. Moreover, the upper limit of the load is preferably equal to or lower than pressure at which pressing is performed during a production process.

The first portion and second portion of the resin structure in the electrode stack are not particularly limited, and may be appropriately selected according to the intended purpose. The first portion may be a proximal portion of the resin structure close to the electrode composite material layer, and the second portion may be a distal portion of the resin structure distant from the electrode composite material layer, where the compressibility of the proximal portion is smaller than the compressibility of the distal portion (Embodiment 2-1, low proximal compressibility). Alternatively, the compressibility of the proximal portion may be greater than the compressibility of the distal portion (Embodiment 2-2, high proximal compressibility).

[Embodiment 2-1 (low proximal compressibility)]

In the electrode stack of Embodiment 2-1, the first portion is a proximal portion of the resin structure close to the electrode composite material layer, and the second portion is a distal portion of the resin structure distant from the electrode composite material layer, where the compressibility of the proximal portion is smaller than the compressibility of the distal portion.

When a load of 1 MPa is applied to the resin structure, the compressibility of the proximal portion is preferably smaller than the compressibility of the distal portion by 10% or greater, more preferably by 20% or greater, and moreover preferably by 30% or less, and more preferably by 27% or less.

Embodiment 2-1 will be described with reference to Fig. 20. Fig. 20 is a cross-sectional view illustrating the electrode 125 of Embodiment 2-1. The resin structure 110 is formed adjacent to the electrode composite material layer 120 formed on the electrode substrate 121. Within the resin structure 110, the proximal portion 110a close to the electrode composite material layer 120 and the distal portion 110b distant from the electrode composite material layer 120 have mutually different compressibility as a load is applied so that the proximal portion 110a and the distal portion 110b are

compressed differently during pressing. The compressibility of the proximal portion 110a is smaller than the compressibility of the distal portion 110b.

Regarding the compressibility of the distal portion 110b, in order to reduce curling of the electrode stack as a whole, the distal portion 110b is preferably easily compressed to the degree that the distal portion 110b is compressed in the direction towards the plane of the electrode substrate 121 during pressing. In order to obtain an effect as a frame for structurally spurting the solid electrolyte layer during pressing, the compressibility of the proximal portion 110a is preferably similar or identical to the compressibility of the electrode composite material layer 120.

In Embodiment 2-1, an embodiment of varying the compressibility of the resin structure is not particularly limited and may be appropriately selected according to the intended purpose. The embodiment may be an embodiment where a porosity of the resin structure varies, or an embodiment where a hardness of the resin structure varies, or an embodiment where a thickness of the resin structure varies. Any of the above-listed embodiments may be suitably used.

Specifically, the resin structure preferably satisfies at least one of (1) the porosity of the proximal portion is smaller than the porosity of the distal portion, (2) the hardness of the proximal portion is greater than the hardness of the distal portion, and (3) the thickness of the proximal portion is less than the thickness of the distal portion.

-(1) Porosity-

The porosity of the proximal portion is preferably smaller than the porosity of the distal portion, more preferably smaller by 10% or greater, yet more preferably smaller by 20% or greater, and particularly preferably smaller by 30% or greater.

Regarding the porosity of the distal portion, in order to reduce curling of the electrode stack as a whole, the distal portion is preferably easily compressed to a degree that the proximal portion is compressed in the direction towards the plane of the electrode substrate during pressing. In order to impart the resin structure with a function as a frame structurally supporting a solid electrolyte during pressing, the porosity of the proximal portion is preferably similar or identical to the porosity of the electrode composite material layer.

The porosity of the distal portion of the resin structure is preferably 30% or greater, more preferably 40% or greater. Moreover, the porosity of the proximal portion is preferably 20% or less, more preferably 10% or less.

Since the porosity of the distal portion is 30% or greater, the pressure applied from the resin structure to the solid electrolyte layer can be reduced during the pressing step after formation of the solid electrolyte layer. Since the porosity of the proximal portion is 20% or less, moreover, the shape of the resin structure can be adequately maintained owing to the strength of the resin structure even after the pressing step.

-Measurement of porosity-

An evaluation method of the porosity of the resin structure is not particularly limited and may be appropriately selected according to the intended purpose. Examples of the evaluation method include a method where the resin structure is dyed with osmium, followed by impregnation with an epoxy resin in vacuum, the resulting resin piece is cut out by a focused ion beam (FIB) to obtain a cross-section presenting the inner area of the resin structure, the cross-section of the resin structure is exposed by ion milling (cross-section polishing (CP)), and a porosity of the resin structure is measured using a scanning electron microscope (SEM).

-(2) Hardness-

The hardness of the proximal portion is preferably greater than the hardness of the distal portion, more preferably greater by 10% or greater, and yet more preferably greater by 20% or greater.

Regarding the hardness of the distal portion, in order to reduce curling of the electrode stack as a whole, the distal portion is preferably easily compressed to a degree that the distal portion is compressed in the direction towards the plane of the electrode substrate during pressing. In order to impart the resin structure with a function as a frame structurally supporting a solid electrolyte during pressing, the hardness of the proximal portion is preferably similar or identical to the hardness of the electrode composite material layer.

-Method for measuring hardness-

The hardness of the resin structure can be determined from a load displacement curve obtained by a nanoindentation method according to ISO 14577: Instrumented indentation test, in the similar manner as in the measurement of the compressibility. Specifically, the hardness of the resin structure can be measured by a nanoindenter (Nano Indenter G200, available from Keysight Technologies (KLA Corporation)).

Moreover, the hardness of the resin structure can be measured by a Vickers hardness tester or a Rockwell

hardness tester.

-(3) Thickness-

The thickness of the proximal portion is preferably greater than the thickness of the distal portion, more preferably greater by 10% or greater, and yet more preferably greater by 20% or greater.
The electrode stack used to measure the thickness of the resin structure may be an electrode stack before or after pressing.
An example of the embodiment of varying the thickness of the resin structure in Embodiment 2-1 will be described with reference to Fig. 21. Fig. 21 is a cross-sectional view illustrating an electrode 225 in which the thickness of the resin structure varies in Embodiment 2-1.
The resin structure 210 is formed to be adjacent to the electrode composite material layer 220 formed on the electrode substrate 221. The compressibility of the proximal portion 210a of the resin structure 210, which is close to the electrode composite material layer 220, and the compressibility of the distal portion 210b, which is distant from the electrode composite material layer 220, are different from each other when a load is applied so that the softness differs within the resin structure 210 as the resin structure 210 is pressed. The compressibility of the proximal portion 210a is smaller than the compressibility of the distal portion 210b.
Moreover, the thickness of the proximal portion 210a is less than the thickness of the distal portion 210b within the electrode 225 before pressing. Owing to the above-described structure, as pressing is performed before forming a solid electrolyte on or above the electrode composite material layer 220, the thickness of the proximal portion 210a and the thickness of the distal portion 210b are leveled. When the electrode stack is again pressed after forming the solid electrolyte on the electrode composite material layer 220, therefore, the resin structure functions as a frame structurally supporting the solid electrolyte layer. Moreover, another electrode structure can be easily stacked on the electrode stack owing to the above-described resin structure.
The first embodiment may be an embodiment where the electrode composite material layer has a tapered face, an end of which is in contact with the electrode substrate, and the proximal portion is disposed adjacent to the electrode composite material layer to be in contact with at least part of the tapered face of the electrode composite material layer.
Specifically, as illustrated in the schematic cross-sectional views (Figs. 42 and 43) of the electrodes of Examples 5-11 and 5-12, which will be described later, the proximal portion 110a may be formed to be in contact with at least part of the tapered face of the electrode composite material layer 120 and the distal portion 110b may be formed to be adjacent to and to be in contact with the proximal portion 110a and the tapered face, or the proximal portion 110a may be formed to be in contact with the entire area of the tapered face of the electrode composite material layer 120. The tapered face of the electrode composite material layer 120 may be a shape of the electrode composite material layer 120 tapering towards the electrode substrate (see Fig. 42) or a shape of the electrode composite material layer 120 tapering towards the opposite direction to the electrode substrate (see Fig. 43).

-Method for measuring thickness-

The thickness of the resin structure can be determined by cutting out a cross-section presenting the internal structure of the electrode stack by a focused ion beam (FIB), observing arbitrary 2 portions of the resin structure along a horizontal direction relative to the electrode substrate under a scanning electrode microscope (SEM) to measure thicknesses of the proximal portion and distal portion (or the first portion and second portion).

[Embodiment 2-2 (high-proximal compressibility)]

In the electrode stack of Embodiment 2-2, the first portion is a proximal portion of the resin structure close to the electrode composite material layer, and the second portion is a distal portion of the resin structure distant from the electrode composite material layer, where the compressibility of the proximal portion is greater than the compressibility of the distal portion.
When a load of 1 MPa is applied to the resin structure, the compressibility of the proximal portion is preferably greater than the compressibility of the distal portion by 10% or greater, more preferably greater by 20% or greater, and moreover preferably by 30% or less, and more preferably by 27% or less.
Embodiment 2-2 will be described with reference to Fig. 22. Fig. 22 is a cross-sectional view of the electrode 325 in Embodiment 2-2. The resin structure 310 is formed adjacent to the electrode composite material layer 320 formed on the electrode substrate 321. Within the resin structure 310, the compressibility of the proximal portion 310a of the resin structure 310 close to the electrode composite material layer 320 and the compressibility of the distal portion 310b of the resin structure 310 distant from the electrode composite material layer 320 have mutually different compressibility as a load is applied so that the proximal portion 310a and the distal portion 310b are compressed differently during

pressing. The compressibility of the proximal portion 310a is greater than the compressibility of the distal portion 310b.

Regarding the compressibility of the proximal portion 310a, in order to reduce curing of an electrode as a whole, the proximal portion 310a is preferably easily compressed to a degree that the proximal portion 310a is compressed in the direction towards the plane of the electrode substrate 321 during pressing. To impart the resin structure with a function as a frame structurally supporting a solid electrolyte during pressing, the compressibility of the distal portion 310b is preferably similar or identical to the compressibility of the electrode composite material layer 320.

In Embodiment 2-2, an embodiment of varying the compressibility of the resin structure is not particularly limited, and may be appropriately selected according to the intended purpose. The embodiment may be an embodiment where a porosity of the resin structure varies, an embodiment where a hardness of the resin structure varies, or an embodiment where a thickness of the resin structure varies. Any of the above-described embodiments is suitably used.

Specifically, the resin structure preferably satisfies at least one of (1) the porosity of the proximal portion is greater than the porosity of the distal portion, (2) the hardness of the proximal portion is lower than the hardness of the distal portion, and (3) the thickness of the proximal portion is greater than the thickness of the distal portion.

-(1) Porosity-

The porosity of the proximal portion is preferably greater than the porosity of the distal portion, more preferably greater by 10% or greater, and yet more preferably by 20% or greater.

Regarding the porosity of the proximal portion, in order to reduce curling of the electrode stack as a whole, the proximal portion is preferably easily compressed to a degree that the proximal portion is compressed in the direction towards the plane of the electrode substrate during pressing. In order to impart the resin structure with a function as a frame structurally supporting a solid electrolyte during pressing, the porosity of the distal portion is preferably similar or identical to the porosity of the electrode composite material layer.

The porosity of the proximal portion of the resin structure is preferably 30% or greater, more preferably 40% or greater. Moreover, the porosity of the distal portion is preferably 20% or less, more preferably 10% or less.

Since the porosity of the proximal portion is 30% or greater, the pressure applied from the resin structure to the solid electrolyte layer can be reduced during the pressing step after formation of the solid electrolyte layer. Since the porosity of the distal portion is 20% or less, moreover, the shape of the resin structure can be adequately maintained owing to the strength of the resin structure even after the pressing step.

-(2) Hardness-

The hardness of the proximal portion is lower than the hardness of the distal portion, more preferably lower by 10% or greater, and yet more preferably lower by 20% or greater.

Regarding the hardness of the proximal portion, in order to reduce curling of an electrode stack as a whole, the proximal portion is preferably easily compressed to a degree that the proximal portion is compressed in the direction towards the plane of the electrode substrate during pressing. In order to impart the resin structure with a function as a frame structurally supporting a solid electrolyte during pressing, the hardness of the distal portion is preferably similar or identical to the hardness of the electrode composite material layer.

-(3) Thickness-

The thickness of the proximal portion is preferably less than the thickness of the distal portion, more preferably smaller by 10% or greater, and yet more preferably smaller by 20% or greater.

The electrode stack used to measure the thickness of the resin structure may be an electrode stack before or after pressing.

An example of the embodiment of varying the thickness of the resin structure in Example 2-2 will be described with reference to Fig. 23. Fig. 23 is a cross-sectional view illustrating the electrode 425 where the proximal portion has the thickness greater than the thickness of the distal portion in the second embodiment.

The resin structure 410 is formed to be adjacent to the electrode composite material layer 420 formed on the electrode substrate 421. The compressibility of the proximal portion 410a of the resin structure 410, which is close to the electrode composite material layer 420, and the compressibility of the distal portion 410b of the resin structure 410, which is distant from the electrode composite material layer 420, are mutually different from each other so that the softness differs within the resin structure 210 as the resin structure 210 is pressed. The compressibility of the proximal portion 410a is greater than the compressibility of the distal portion 410b.

Within the electrode 425 before pressing, the thickness of the proximal portion 410a is greater than the thickness of the distal portion 410b. Owing to the above-described structure, as pressing is performed before forming a solid electrolyte on the electrode composite material layer 420, the thickness of the proximal portion 410a and the thickness

of the distal portion 410b are leveled. When the electrode stack is again pressed after forming the solid electrolyte on the electrode composite material layer 420, therefore, the resin structure functions as a frame structurally supporting the solid electrolyte layer. Moreover, another electrode structure can be easily stacked on the electrode stack owing to the above-described resin structure.

Another example of the embodiment of varying the thickness of the resin structure in Embodiment 2-2 will be described with reference to Fig. 24. Fig. 24 is a cross-sectional view illustrating an electrode 525 in which the distal portion has the thickness greater than the thickness of the proximal portion.

The resin structure 510 is formed to be adjacent to the electrode composite material layer 520 formed on the electrode substrate 521. The compressibility of the proximal portion 510a of the resin structure 510, which is close to the electrode composite material layer 520, and the compressibility of the distal portion 510b of the resin structure 510, which is distant from the electrode composite material layer 520, are mutually different from each other when a load is applied so that the softness differs within the resin structure 510 as the resin structure 510 is pressed. The compressibility of the proximal portion 510a is greater than the compressibility of the distal portion 510b.

Regardless of the state before or after pressing the electrode 525, moreover, the thickness of the distal portion 510b is greater than the thickness of proximal portion 510a before laminating the electrode stack and pressing. Owing to the above-described structure, adhesion to a member (e.g., a resin structure of a counter electrode) facing the resin structure 510 of the electrode 525 is improved when an electrochemical element is produced, or stretching of the electrode is minimized during pressing.

The electrode stack according to Embodiment 2-1 will be described with reference to Fig. 25. Fig. 25 is a cross-sectional view illustrating the electrode stack 135 including the electrode 125 according to Embodiment 2-1. The resin structure 110 is formed to be adjacent to the electrode composite material layer 120 formed on the electrode substrate 121. Moreover, a solid electrolyte layer 130 is formed on the electrode composite material layer 120 and the resin structure 110.

The compressibility of the proximal portion 110a of the resin structure 110, which is close to the electrode composite material layer 120, and the compressibility of the distal portion 110b of the resin structure 110, which is distant from the electrode composite material layer 120, are mutually different from each other when a load is applied so that the proximal portion 110a and the distal portion 110b are compressed differently as pressed. The compressibility of the proximal portion 110a is smaller than the compressibility of the distal portion 110b.

The solid electrolyte layer 130 may cover part of the resin structure 110, or the entire resin structure 110. It is preferred that the solid electrolyte layer 130 cover part of or the entire proximal portion 110a, but do not cover the distal portion 110b. Specifically, the electrode 125 includes the solid electrolyte layer 130 on the electrode composite material layer 120 and the proximal portion 110a of the resin structure 110. Owing to the above-described structure, a coating liquid for forming the solid electrolyte layer 130 is unlikely to penetrate into the resin structure 110 when the coating liquid is applied during a production process of an electrode stack, so that desirable battery characteristics are assured.

The electrode stack according to Embodiment 2-2 will be described with reference to Fig. 26. Fig. 26 is a cross-sectional view illustrating the electrode stack 335 including the electrode 325 according to Embodiment 2-2. The resin structure 310 is formed to be adjacent to the electrode composite material layer 320 formed on the electrode substrate 321. Moreover, the solid electrolyte layer 330 is formed on the electrode composite material layer 320 and the resin structure 310.

The compressibility of the proximal portion 310a of the resin structure 310, which is close to the electrode composite material layer 320, and the compressibility of the distal portion 310b of the resin structure 310, which is distant from the electrode composite material layer 320, are mutually different from each other when a load is applied so that the proximal portion 310a and the distal portion 310b are compressed differently during pressing. The compressibility of the proximal portion 310a is greater than the compressibility of the distal portion 310b.

The solid electrolyte layer 330 may cover part of the resin structure 310, or the entire resin structure 310. The solid electrolyte layer 330 preferably covers, as well as the proximal portion 310a that is easily compressed, part of or the entire distal portion 310b, more preferably covering the entire distal portion 310b. Specifically, the electrode 325 preferably includes the solid electrolyte layer 330 on the electrode composite material layer 320, and the proximal portion 310a and distal portion 310b of the resin structure 310. Owing to the above-described structure, the distal portion 310b functions as a frame structurally supporting the solid electrolyte layer 330 so that the solid electrolyte layer is unlikely to be pushed out during pressing, and the proximal portion 310a, which is easily compressed, absorbs the deformation of the solid electrolyte layer 330 to suitably adhere the electrode composite material layer 320 and the solid electrolyte layer 330, while avoiding the solid electrolyte being pushed out.

[Double-sided electrode]

In Fig. 1 etc., a structure where the electrode composite material layer 20 and the resin structure 10 are disposed on one plane of the first electrode substrate 21 is illustrated, but the electrode composite material layer 20 and the resin

structure 10 may be disposed on both planes of the first electrode substrate 21 facing each other.

As illustrated in Figs. 27 to 29, for example, the electrode stack may be a double-sided electrode where the materials of the electrode composite material layers 20 and 20' or the resin structures 10 and 10', or the compressibility of the resin structures 10 and 10' are different between the front side and the back side of the first electrode substrate 21 (Fig. 27); a double-sided electrode where the sizes of the electrode composite material layers or resin structures are different (Fig. 28); or a double-sided electrode where thicknesses of the electrode composite material layers or the resin structures are different (Fig. 29). Any of the above-described structures may be suitably used. Owing to the structure as described, curling of the electrode can be reduced as a whole, even in the case where the electrode is an electrode that may cause curling by pressing due to the electrode composite material layer if the resin structure is not present.

[Electrode stack according to third embodiment]

The electrode stack according to the third embodiment includes an electrode substrate, an electrode composite material layer disposed on the electrode substrate, a resin structure disposed on a periphery of the electrode composite material layer, and a solid electrolyte layer disposed on the electrode composite material layer and the resin structure.

Within the resin structure, moreover, 90% or greater of the continuous region of the resin structure adjacent to the edge face of the electrode composite material layer is in contact with and connected to the edge face of the electrode composite material layer to coat an edge of the electrode composite material layer where the edge is in contact with the electrode substrate.

The electrode stack according to the third embodiment can be suitably produced by the below-described method for producing the electrode stack of the third embodiment.

(Method for producing electrode stack and electrode stack production apparatus)

The method for producing an electrode stack according to the first embodiment includes an applying step, a polymerizing step, an electrode-composite-material-layer forming step, a pressing step, and a solid-electrolyte-layer forming step, and may further include other steps, as necessary.

The electrode stack production apparatus according to the first embodiment includes a storage container, an applicator, a polymerizing unit, an electrode-composite-material-layer forming unit, a press, and a solid-electrolyte-layer forming unit, and may further include other units, as necessary.

<Storage container>

The storage container includes a container and a liquid composition for forming the resin structure. The storage container is a storage container in which the liquid composition is stored in the container.

Examples of the container include glass bottles, plastic containers, plastic bottles, stainless steel bottles, 18L square cans, and drum cans.

[Resin structure forming step and resin structure forming unit]

The method for forming a resin structure of an electrode stack includes at least an applying step and a polymerizing step.

Specifically, the method for forming the resin structure includes an applying step and a polymerizing step, and may further include other steps, as necessary. The applying step includes applying a liquid composition, which includes a polymerizable compound and a liquid, onto an edge of an electrode substrate. The polymerizing step includes applying heat or light to the liquid composition to polymerize the polymerizable compound to form a resin structure.

The resin structure forming unit includes a storage container, an applicator, and a polymerizing unit, and may further include other units, as necessary. The storage container stores therein a liquid composition including a polymerizable compound and a liquid. The applicator is configured to apply the liquid composition onto an edge of an electrode substrate. The polymerizing unit is configured to apply heat or light to the liquid composition to polymerize the polymerizable compound to form a resin structure.

[Order of forming resin structure and electrode composite material layer]

The order of forming the resin structure and the electrode composite material layer is not particularly limited, and may be appropriately selected according to the intended purpose.

The electrode-composite-material-layer forming step may be carried out before the applying step to form the electrode composite material layer, followed by forming the resin structure on the periphery of the electrode composite

material layer. In this case, the method for producing the electrode stack is carried out in the order of the electrode-composite-material-layer forming step and the resin-structure forming step (the applying step and the polymerizing step), followed by the pressing step and the solid-electrolyte-layer forming step in any order.

Among the above-described embodiments, as described later in [Method for producing electrode stack according to third embodiment], the method for producing the electrode stack preferably includes an electrode-composite-material-layer forming step, a transporting step, a resin-structure forming step (applying step and polymerizing step), which are performed in this order, followed by a pressing step and a solid-electrolyte-layer forming step in any order, where the polymerizing step is preferably performed in specific conditions.

Alternatively, the electrode-composite-material-layer forming step may be carried out after the polymerizing step to form the resin structure on the edge of the electrode substrate, followed by forming the electrode composite material layer inside the edge of the electrode substrate. In this case, the method for producing the electrode stack is carried out in the order of the resin-structure forming step (the applying step and the polymerizing step) and the electrode-composite-material-layer forming step, followed by the pressing step and the solid-electrolyte-layer forming step in any order.

<Applying step and applicator>

The applying step is a step including applying the liquid composition onto an edge of an electrode substrate. The applying step is suitably carried out by the applicator.

The applicator is a unit configured to apply the liquid composition stored in the storage container onto an edge of an electrode substrate.

The applying step and the applicator are not particularly limited, except that the liquid composition can be applied. The applying step and the applicator may be appropriately selected according to the intended purpose. For example, an arbitrary printing device corresponding to any of various printing methods may be used. Examples of the printing methods include spin coating, casting, microgravure coating, gravure coating, bar coating, roll coating, wire-bar coating, dip coating, slit coating, capillary coating, spray coating, nozzle coating, gravure printing, screen printing, flexo printing, offset printing, reverse printing, and inkjet printing. Among the above-listed examples, inkjet printing is preferred. According to the inkjet printing, a resin layer can be formed with a desirable precision on a predetermined position.

-Liquid composition-

The liquid composition is a liquid composition for forming a resin structure. The liquid composition includes a polymerizable compound and a liquid, and may further include other components, such as a polymerization initiator, as necessary.

The liquid composition is not particularly limited, and may be appropriately selected according to the intended purpose. Preferable examples of the liquid composition include the following a first embodiment, a second embodiment, and a third embodiment.

[First embodiment of liquid composition]

The liquid composition according to the first embodiment includes a polymerizable compound represented by General Formula (1) below and a non-aqueous solvent represented by General Formula (2) below, and may further include other components, such as a polymerization initiator, as necessary.

In the case where A in General Formula (2) is a hydroxyl group, a difference in the charge measured by the Millikan's experiment between a hydrogen atom and an oxygen atom in the hydroxyl group is 0.520 or greater. In the case where A in General Formula (2) is an amino group, a difference in the charge measured by the Millikan's experiment between a hydrogen atom and a nitrogen atom in the amino group is 0.470 or greater.

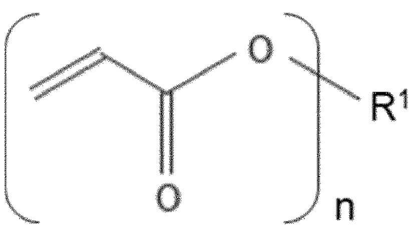

General Formula (1)

In General Formula 1, $R^1$ is a C2 or higher n-valent functional group that may include an oxygen atom, where n is an integer of 2 to 6.

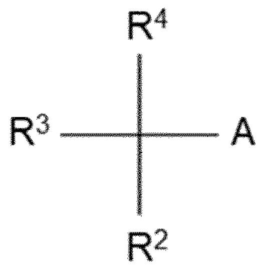

General Formula (2)

In General Formula (2), $R^2$, $R^3$, and $R^4$ are each independently a hydrocarbon group, where the total number of carbon atoms of $R^2$, $R^3$, and $R^4$ is 4 or greater; A is a hydroxyl group or an amino group represented by $-NR^5H$; and $R^5$ is a hydrogen atom, a methyl group, or an ethyl group.

The liquid composition according to the first embodiment can avoid a reduction in ionic conductivity of a sulfide solid electrolyte and can form a resin structure curling of which is minimized.

The polymerizable compound is not particularly limited and may be appropriately selected according to the intended purpose. Examples of the polymerizable compound include: bifunctional acrylates, such as bifunctional alkyl acrylate, hydroxypivalic acid neopentyl glycol acrylic acid adducts, bifunctional polyethylene glycol acrylate, bifunctional polypropylene glycol acrylate, bifunctional polytetramethylene glycol acrylate, bifunctional cyclic acrylate, bifunctional alkoxylated aromatic acrylate, and bifunctional acrylic acid multimer ester acrylate; trifunctional acrylates, such as trifunctional trimethylol propane acrylate, trifunctional alkoxylated glycerin acrylate, and trifunctional isocyanate acrylate; and tetra- to hexafunctional acrylates, such as tetrafunctional pentaerythritol acrylate, pentafunctional ditrimethylol propane acrylate, tetrafunctional diglycerin tetraacrylate, and hexafunctional dipentaerythritol hexaacrylate.

The above-listed examples may be used alone or in combination.

[Second embodiment of liquid composition]

The liquid composition according to the second embodiment includes a polymerizable compound that is represented by General Formula (3) below and having an average molecular weight of less than 700, and a solvent that is a non-aromatic compound. The liquid composition may further include other components, such as a polymerization initiator, as necessary.

$\Delta HSP^2$ and $\Delta HSP^2_{SL}$ satisfy the relationship represented by Formula (II) below, where ($\delta_D^A$, $\delta_P^A$, $\delta_H^A$) are Hansen solubility parameters (HSP), $X^A$ is a volume fraction of the polymerizable compound , ($\delta_D^B$, $\delta_P^B$, $\delta_H^B$) are HSP of the solvent, $X^B$ is a volume fraction of the solvent, ($\delta_D^C$, $\delta_P^C$, $\delta_H^C$) of HSP of the liquid composition, $X^A + X^B = 1$ is a volume fraction of the liquid composition, $\Delta HSP^2$ is represented by Equation (I) below, and $AHSP^2_{SL}$ is $\Delta HSP^2$ at which the polymerizable compound and the solvent reach a compatibility limit (solubility limit).

Equation (I)

$$\Delta HSP^2 = (\delta_D^A - \delta_D^C)^2 + (\delta_P^A - \delta_P^C)^2 + (\delta_H^A - \delta_H^C)^2$$

Formula (II)

$$0.51 \leq \Delta HSP^2 \leq \Delta HSP^2_{SL}$$

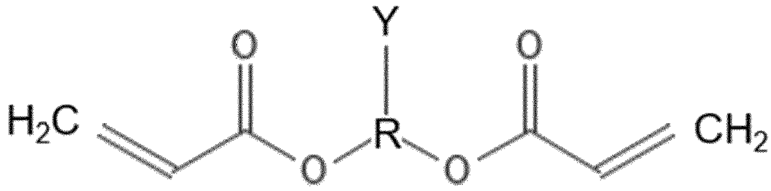

General Formula (3)

In General Formula (3), R is at least one of a non-cyclic alkylene group and a non-cyclic alkylene oxide group; Y is a hydrogen atom or a group represented by $-O-COCH=CH_2$.

The liquid composition according to the second embodiment can reduce both curing shrinkage and swelling shrinkage during formation of a resin structure, and can form a resin structure curling of which is minimized, even if the resin structure has a thickness of a micro-order, such as approximately 100 $\mu$m.

In the case where Y is a hydrogen atom, the polymerizable compound is a bifunctional acrylate. In the case where Y is a group represented by $-O-COCH=CH_2$ (i.e., a group in which an oxygen atom is bonded to an acrylic group), the polymerizable compound is a trifunctional acrylate.

Examples of the bifunctional acrylate include bifunctional non-cyclic alkyl acrylate, and bifunctional non-cyclic polyalkylene oxide acrylate (e.g., bifunctional non-cyclic polyethylene glycol acrylate, bifunctional non-cyclic polypropylene glycol acrylate, and bifunctional non-cyclic polytetramethylene glycol acrylate).

Examples of the trifunctional acrylate include trifunctional non-cyclic alkyl acrylate and trifunctional non-cyclic polyalkylene oxide acrylate.

The solvent is not particularly limited, except that the solvent is a non-aromatic compound. The solvent may be appropriately selected according to the intended purpose. Examples of the solvent include alcohol-based solvents, amine-based solvents, hydrocarbon-based solvents, ester-based solvents, ketone-based solvents, aldehyde-based solvents, and thiol-based solvents.

The above-listed examples may be used alone or in combination.

[Third embodiment of liquid composition]

The liquid composition according to the third embodiment includes a polymerizable compound and a liquid. The liquid composition may further include other components, such as a polymerization initiator, as necessary.

The liquid composition is used to form a porous resin. The light transmittance of the liquid composition as measured at a wavelength of 550 nm while stirring is 30% or greater. An increase rate of a Haze value of a Haze measurement element produced by polymerizing the liquid composition is 1.0% or greater.

The liquid composition is used to form a porous structure. Specifically, a resin structure (may be also referred to as a "porous resin" or a "porous structure") having a porous structure, in which a resin constitutes a skeleton, is formed by polymerization and curing of the polymerizable compound contained in the liquid composition.

The phrase "the liquid composition is used to form a porous resin" means, as well as a case where a porous resin is formed in the liquid composition, a case where a precursor of a porous resin (e.g., a skeleton of a porous resin) is formed in the liquid composition, followed by performing a treatment (e.g., a heat treatment, etc.) to form a porous resin.

--Polymerizable compound--

The polymerizable compound is polymerized to form a resin so that a porous resin is formed according to the composition and properties of the liquid composition.

The polymerizable compound is not particularly limited, except that the polymerization compound is polymerized to form a polymer (a resin). The polymerizable compound is appropriately selected from polymerizable compounds available in the related art according to the intended purpose. The polymerizable compound preferably includes at least one radical polymerizable functional group.

Preferable examples of the polymerizable compound include: radical polymerizable compounds, such as monofunctional, bifunctional, or trifunctional or higher radical polymerizable monomers, and radical polymerizable oligomers; and functional monomers and functional oligomers having functional groups as well as polymerizable functional groups.

Among the above-listed examples, a two-functional or higher radical polymerizable compound is preferred.

The polymerizable group of the polymerizable compound is preferably a (meth)acryloyl group or a vinyl group, or both, more preferably a (meth)acryloyl group.

The polymerizable compound is preferably polymerizable upon irradiation of active energy rays, more preferably upon application of heat or light.

The resin formed of the polymerizable compound is preferably a resin having a network structure formed by application of active energy rays (e.g., light irradiation, heat, etc.). Preferable examples of the resin include acrylate resins, methacrylate resins, urethane acrylate resins, vinyl ester resins, unsaturated polyester resins, epoxy resins, oxetane resins, vinyl ether resins, and resins formed by a thiol-ene reaction.

Among the above-listed examples, acrylate resins, methacrylate resins, and urethane acrylate resins, which are resins formed from a polymerizable compound including a (meth)acryloyl group, are preferred in view of easiness of formation of a structure utilizing highly reactive radical polymerization, and moreover, vinyl ester resins, which are resins formed from a polymerizable compound including a vinyl group, are more preferred in view of productivity.

The above-listed examples may be used alone or in combination. In the case where two or more resins are used in combination, a combination of the polymerizable compounds is not particularly limited, and may be appropriately selected according to the intended purpose. For example, a urethane acrylate resin used as a main component is preferably mixed with another resin to impart flexibility. The polymerizable compound including an acryloyl group or a methacryloyl group, or both may be referred to as a polymerizable compound including a (meth)acryloyl group.

The active energy rays are not particularly limited, except that the active energy rays can impart sufficient energy to carry out a polymerization reaction of the polymerizable compound in the liquid composition. The active energy rays may be appropriately selected according to the intended purpose. Examples of the active energy rays include ultraviolet rays, electron beams, $\alpha$ rays, $\beta$ rays, $\gamma$ rays, and X rays. Among the above-listed examples, ultraviolet rays are preferred. In the case where a light source of particularly high energy is used, a polymerization reaction can progress without a polymerization initiator.

The irradiation intensity of the active energy rays is preferably 1 $W/cm^2$ or less, more preferably 300 $mW/cm^2$ or less, and yet more preferably 100 $mW/cm^2$ or less. If the irradiation intensity of the active energy rays is too low, however, a porous structure may be uneven or may include large pores as the phase separation is excessively progressed, and moreover, productivity is reduced due to the prolonged irradiation time. For the reasons as mentioned, the irradiation intensity of the active energy rays is preferably 10 $mW/cm^2$ or greater, more preferably 30 $mW/cm^2$ or greater.

Examples of the monofunctional radical polymerizable compound include 2-(2-ethoxyethoxy)ethylacrylate, methoxypolyethylene glycol monoacrylate, methoxypolyethylene glycol monomethacrylate, phenoxypolyethylene glycol acrylate, 2-acryloyloxyethyl succinate, 2-ethylhexyl acrylate, 2-hydroxyethyl acrylate, 2-hydroxypropyl acrylate, tetrahydrofurfuryl acrylate, 2-ethylhexyl carbitol acrylate, 3-methoxybutyl acrylate, benzyl acrylate, cyclohexyl acrylate, isoamyl acrylate, isobutyl acrylate, methoxytriethylene glycol acrylate, phenoxytetraethylene glycol acrylate, cetyl acrylate, isostearyl acrylate, stearyl acrylate, and styrene monomers. The above-listed examples may be used alone or in combination.

Examples of the bifunctional radical polymerizable compound include 1,3-butanediol diacrylate, 1,4-butanediol diacrylate, 1,4-butanediol dimethacrylate, 1,6-hexanediol diacrylate, 1,6-hexanediol dimethacrylate, diethylene glycol diacrylate, polyethylene glycol diacrylate, neopentyl glycol diacrylate, EO-modified bisphenol A diacrylate, EO-modified bisphenol F diacrylate, neopentyl glycol diacrylate, and tricyclodecane dimethanol diacrylate. The above-listed examples may be used alone or in combination.

Examples of the trifunctional or higher radical polymerizable compound include trimethylolpropane triacrylate (TMPTA), trimethylolpropane trimethacrylate, EO-modified trimethylolpropane triacrylate, PO-modified trimethylolpropane triacrylate, caprolactone-modified trimethylolpropane triacrylate, HPA-modified trimethylolpropane trimethacrylate, pentaerythritol triacrylate, pentaerythritol tetraacrylate (PETTA), glycerol triacrylate, ECH-modified glycerol triacrylate, EO-modified glycerol triacrylate, PO-modified glycerol triacrylate, tris(acryloxyethyl)isocyanurate, dipentaerythritol hexaacrylate (DPHA), caprolactone-modified dipentaerythritol hexaacrylate, dipentaerythritol hydroxypentaacrylate, alkyl-modified dipentaerythritol pentaacrylate, alkyl-modified dipentaerythritol tetraacrylate, alkyl-modified dipentaerythritol triacrylate, dimethylol propane tetraacrylate (DTMPTA), pentaerythritol ethoxytetraacrylate, EO-modified phosphoric acid triacrylate, and 2,2,5,5-tetrahydroxymethyl cyclopentanone tetraacrylate. The above-listed examples may be used alone or in combination.

The amount of the polymerizable compound is preferably 5.0% by mass or greater and 70.0% by mass or less, more preferably 10.0% by mass or greater and 50.0% by mass or less, and yet more preferably 20.0% by mass or greater and 40.0% by mass or less, relative to a total amount of the liquid composition.

When the amount of the polymerizable compound is preferably 70.0% by mass or less, the size of pores in the obtained porous body is not too small (several nanometers or smaller), and the porous body has suitable porosity to suppress permeation of liquid or gas. Therefore, the above-described range of the amount of the polymerizable compound is preferred. When the amount of the polymerizable compound is preferably 5.0% by mass or greater, moreover, a porous structure where a three-dimensional network structure of the resin is sufficiently formed is obtained, and the strength of the obtained porous structure may be improved. Therefore, the above-described range of the amount of the polymerizable compound is preferred.

--Liquid--

The liquid includes a porogenic solvent, and may further include other liquids than the porogenic solvent, as necessary.

The porogenic solvent is a liquid compatible with the polymerizable compound. The porogenic solvent is a liquid that loses compatibility (causes phase separation) with a polymer (a resin) as the polymerizable compound is polymerized in the liquid composition. Since the porogenic solvent is included in the liquid composition, a porous resin is formed as the polymerizable compound is polymerized. Moreover, the porogenic solvent can preferably dissolve a compound (the polymerization initiator described later) that generates radicals or acids upon application of light or heat.

The liquid or porogenic solvent may be used alone, or two or more liquids or porogenic solvents may be used in combination.

In the present embodiment, the liquid is not polymerizable.

A boiling point of the single porogenic solvent or a boiling point of two more porogenic solvents at ambient pressure is preferably 50°C or higher and 250°C or lower, more preferably 70°C or greater and 200°C or lower, and yet more preferably 120°C or higher and 190°C or lower. As the boiling point is 50°C or higher, vaporization of the porogenic solvent at room temperature can be suppressed so that the liquid composition can be handled easily, and the amount of the porogenic solvent in the liquid composition can be easily controlled. As the boiling point is 250°C or lower, moreover, the time for the process of removing the porogenic solvent after polymerization can be reduced, and productivity of the porous resin is improved. Moreover, the amount of the porogenic solvent remaining inside the porous resin can be reduced so that the quality is improved when the porous resin is used as a material separation layer for separating between materials, or a functional layer, such as a reaction layer where a reaction is carried out.

Examples of the porogenic solvent include: ethylene glycols, such as diethylene glycol monomethyl ether, ethylene glycol monobutyl ether, ethylene glycol monoisopropyl ether, and dipropylene glycol monomethyl ether; esters, such as γ-butyrolactone, and propylene carbonate; and amides, such as N,N-dimethylacetamide. Moreover, examples of the porogenic solvent further include liquids of relatively large molecular weights, such as methyl tetradecanoate, methyl decanoate, methyl myristate, and tetradecane. Furthermore, examples further include liquids, such as acetone, 2-ethylhexanol, and 1-bromonaphthalene.

The above-listed liquids do not always function as a porogenic solvent.

As described above, the porogenic solvent is compatible with the polymerizable compound, and is liquid that loses compatibility (causes phase separation) with the polymer (resin) as the polymerizable compound is polymerized in the liquid composition. In other words, whether the liquid is a porogenic solvent or not is determined based on the relationship with the polymerizable compound and the polymer (the resin formed by polymerizing the polymerizable compound).

Moreover, the liquid composition is not limited, as long as the liquid composition includes at least one porogenic solvent having the above-described specific relationship with the polymerizable compound. Therefore, freedom of design for selecting materials for production of the liquid composition increases, and the liquid composition can be easily designed. Since the freedom of design for selecting material for production of the liquid composition increases, freedom increases when certain properties of the liquid composition are desired for forming a porous structure. When the liquid composition is ejected by an inkjet system, for example, the liquid composition is desired to have ejection stability, as well as the ability of forming a porous structure. In such a case, the liquid composition is easily designed because the freedom of choices of materials is increased.

The amount of the liquid or the porogenic solvent is preferably 30.0% by mass or greater and 95.0% by mass or less, more preferably 50.0% by mass or greater and 90.0% by mass or less, and yet more preferably 60.0% by mass or greater and 80.0% by mass or less, relative to the total amount of the liquid composition.

When the amount of the liquid or the porogenic solvent is 30.0% by mass or greater, the size of pores in the obtained porous body is not too small (several nanometers or smaller), the porous body has suitable porosity to suppress permeation of liquid or gas. Therefore, the above-mentioned amount of the liquid or the porogenic solvent is preferred. When the amount of the liquid or the porogenic solvent is 95.0% by mass or less, moreover, a porous structure, in which a three-dimensional network structure of the resin is sufficiently formed, is obtained, and the strength of the obtained porous structure may be improved. Therefore, the above-mentioned amount of the liquid or the porogenic solvent is preferred.

As described above, the liquid composition is not limited as long as the liquid composition includes at least one porogenic solvent having the above-described specific relationship with the polymerizable compound. Therefore, the liquid composition may further include other liquid(s) (liquid(s) other than porogenic solvents) that may not have the above-described specific relationship with the polymerizable compound.

The amount of the above-mentioned other liquids is preferably 10.0% by mass or less, more preferably 5.0% by mass or less, yet more preferably 1.0% by mass or less, and particularly preferably 0% by mass (free from other liquids), relative to a total amount of the liquid composition.

The mass ratio (polymerizable compound: porogenic solvent) of the amount of the polymerizable compound to the amount of the porogenic solvent in the liquid composition is preferably from 1.0:0.4 to 1.0:19.0, more preferably from 1.0:1.0 to 1.0:9.0, and yet more preferably from 1.0:1.5 to 1.0:4.0.

--Other components--

Polymerization initiator---

The liquid composition may further include other components, such as a polymerization initiator.
The polymerization initiator is a material capable of generating active species, such as radicals and cations, upon application of energy, such as light and heat, to initiate polymerization of the polymerizable compound. Examples of the polymerization initiator include radical polymerization initiators, cationic polymerization initiators, and base generators, which are available in the related art. The above-listed examples may be used alone or in combination. Among the above-listed examples, a photo radical polymerization initiator is preferred.
The photo radical polymerization initiator is not particularly limited, and may be appropriately selected from photo radical generators available in the related art according to the intended purpose. Examples of the photo radical polymerization initiator include photo radical polymerization initiators, such as Michler's ketone and benzophenone that have been known under the product names of IRGACURE or DAROCURE, and acetophenone derivatives.
Examples of specific compounds of the photo radical polymerization initiator include α-hydroxy-acetophenone, α-aminoacetophenone, 4-acryloyl-1,3-dioxolane, benzyl ketal, 2,2-diethoxyacetophenone, p-dimethylaminoacetophenone, p-dimethylaminopropiophenone, benzophenone, 2-chlorobenzophenone, pp'-dichlorobenzophenone, pp'-bisdiethylaminobenzophenone, Michler's ketone, benzyl, benzoin, benzyldimethyl ketal, tetramethylthiuram monosulfide, thioxanthone, 2-chlorothioxanthone, 2-methylthioxanthone, azobisisobutyronitrile, benzoin peroxide, di-tert-butyl peroxide, 1-hydroxycyclohexylphenylketone, 2-hydroxy-2-methyl-1-phenyl-1-one, 1-(4-isopropylphenyl)-2-hydroxy-2-methylpropan-1-one, methyl benzoylformate, benzoin isopropyl ether, benzoin methyl ether, benzoin ethyl ether, benzoin ether, benzoin isobutyl ether, benzoin n-butyl ether, benzoin n-propyl, 1-hydroxy-cyclohexyl-phenyl-ketone, 2-benzyl-2-dimethylamino-1-(4-morpholinophenyl)-butanone-1, 1-hydroxy-cyclohexyl-phenyl-ketone, 2,2-dimethoxy-1,2-diphenylethan-1-one, bis(η5-2,4-cyclopentanedien-1-yl)-bis(2,6-difluoro-3-(1H-pyrrol-1-yl)-phenyl)titanium, bis(2,4,6-trimethylbenzoyl)-phenylphosphine oxide, 2-methyl-1[4-(methylthio)phenyl]-2-morpholinopropan-1-one, 2-hydroxy-2-methyl-1-phenyl-propan-1-one (DAROCURE 1173), bis(2,6-dimethoxybenzoyl)-2,4,4-trimethyl-pentylphosphine oxide, 1-[4-(2-hydroxyethoxy)-phenyl]-2-hydroxy-2-methyl-1-propan-1-one monoacylphosphine oxide, bisacylphosphine oxide, titanocene, fluorescein, anthraquinone, thioxanthone, xanthone, lophine dimers, trihalomethyl compounds, dihalomethyl compounds, active ester compounds, and organic boron compounds.
Moreover, a photo-crosslinkable radical generator, such as a bisazide compound, may be added together with the polymerization initiator. In the case where polymerization is initiated only by heat, a thermal polymerization initiator (e.g., azobisisobutyronitrile (AIBN)), which is a typical radical generator, may be used.
When a total mass of the polymerizable compound is 100.0% by mass, the amount of the polymerization initiator is preferably 0.05% by mass or greater and 10.0% by mass or less, and more preferably 0.5% by mass or greater and 5.0% by mass or less, because a sufficient curing speed is assured.
The liquid composition may be a non-dispersed composition in which dispersed elements are not included in the liquid composition, or a dispersed composition in which dispersed elements are included in the liquid composition. The liquid composition is preferably a non-dispersed composition.

[Polymerization-induced phase separation]

The porous resin is formed by polymerization-induced phase separation. The polymerization-induced phase separation represents a state where the polymerizable compound and the porogenic solvent are compatible to each other, but a polymer (resin) generated as the polymerizable compound is polymerized is not compatible with the porogenic solvent (cases phase separation). There are other methods of obtaining a porous body by phase separation, but use of the polymerization-induced phase separation can form a porous body having a network structure, thus the formation of the porous body having high resistance to chemicals or heat can be expected. Compared to other methods, moreover, the polymerization-induced phase separation has advantages such that the process time is short and a surface modification can be easily performed.
Next, a process of forming a porous resin using a polymerization-induced phase separation of the liquid composition including the polymerizable compound will be described. The polymerizable compound causes a polymerization reaction by light irradiation etc., to form a resin. During the process of forming the resin, the generated resin gradually loses solubility to the porogenic solvent to cause phase separation between the resin and the porogenic solvent. Ultimately, the resin forms a porous structure having a bicontinuous structure, where the resin constitutes a skeleton of the

bicontinuous structure and the porogenic solvent fills the pores. As the porous structure is dried, the porogenic solvent is removed, and the porous resin having a bicontinuous structure of a three-dimensional network structure remains. In order to form a porous resin having an appropriate porosity, therefore, the compatibility between the porogenic solvent and the polymerizable compound, and the compatibility between the porogenic solvent and the resin formed by polymerizing the polymerizable compound are studied.

[Light transmittance]

The light transmittance of the liquid composition as measured at a wavelength of 550 nm while stirring is 30% or greater.

The compatibility between the porogenic solvent and the polymerizable compound can be determined by the light transmittance.

The light transmittance of 30% or greater indicates a state where the liquid includes a porogenic solvent, and the polymerizable compound and the porogenic solvent are compatible to each other. The light transmittance of less than 30% indicates a state where the polymerizable compound and the liquid are not compatible to each other.

Specifically, the light transmittance can be measured in the following manner.

First, a quartz cell is charged with the liquid composition. While stirring the liquid composition at 300 rpm by a stirrer, transmission of the liquid composition with light having a wavelength of 550 nm (visible light) is measured under the following conditions.

Quartz cell: Special micro cell with screw cap (product no.: 42016, produced by Mitorica Co., Ltd.)
Transmittance measuring device: USB4000, produced by Ocean Optics, Inc.
Stirring speed: 300 rpm
Measuring wavelength: 550 nm
Reference: light transmittance of the quartz cell charged with the air is measured with light having a wavelength of 550 nm to acquire the reference (light transmittance: 100%)

[Increase rate of Haze value]

The increase rate of the Haze value of the Haze measurement element produced by polymerizing the liquid composition is 1.0% or greater.

The compatibility between the porogenic solvent and the resin formed by polymerizing the polymerizable compound can be determined by the increase rate of the Haze value.

The increase rate of the Haze value being 1.0% or greater indicates a state where the liquid includes a porogenic solvent, and the resin and the porogenic solvent are not compatible to each other. The increase rate of the Haze value being less than 1.0% indicates a state where the resin and the liquid are compatible to each other.

The Haze value of the Haze measurement element increases, as the compatibility between the resin formed by polymerizing the polymerizable compound and the porogenic solvent decreases. The Haze value of the Haze measurement element decreases, as the compatibility increases. As the Haze value increases, moreover, the resin formed by polymerizing the polymerizable compound forms a porous structure more easily.

Specifically, the increase rate of the Haze value is an increase rate in the Haze value of a Haze measurement element, which is produced by polymerizing the liquid composition and has an average thickness of 100 μm, before and after the polymerization, and can be measured in the following manner.

-Production of Haze measurement element-

First, resin particles serving as a spacer are homogeneously dispersed on an alkali-free glass substrate by spin coating. Subsequently, the substrate on which the spacer is applied is bonded to a substrate on which a spacer is not applied in a manner that the spacer is nipped between the planes of the two substrates. Next, the gap between the bonded substrate is charged with liquid composition using a capillary action to produce a "pre-UV irradiation Haze measurement element." Subsequently, the pre-UV irradiation Haze measurement element is irradiated with UV to cure the liquid composition. Finally, the edges of the substrates are sealed with a sealing agent to produce a "Haze measurement element." The size of the spacer (average particle diameter: 100 μm) corresponds to the average thickness of the Haze measurement element. The conditions for the production are as follows.

Alkali-free glass substrate: available from Nippon Electric Glass Co., Ltd., 40 mm, t = 0.7 mm, OA-10G
Spacer: Micropearl GS-L100, resin particles, available from SEKISUI CHEMICAL CO., LTD., average particle diameter: 100 μm Spin coating conditions:

Amount of dispersion liquid dripped: 150 μL
Rotational speed: 1,000 rpm
Rotational time: 30 seconds [s]

Amount of liquid composition charged: 160 μL UV irradiation conditions:

Light source: UV-LED
Light source wavelength: 365 nm
Irradiation strength: 30 $mW/cm^2$,
Irradiation time: 20 s

Sealing agent: TB3035B (available from ThreeBond Co., Ltd.)

-Measurement of Haze value (cloudiness)-

Next, a Haze value (cloudiness) is measured using the produced pre-UV irradiation Haze measurement element and the Haze measurement element. A measurement value of the pre-UV irradiation Haze measurement element is used as a reference (Haze value: 0), and an increase rate of a measurement value (Haze value) of a Haze measurement element with respect to the measurement value of the pre-Haze measurement element is calculated.
The device used for the measurement is the following. Haze measuring device: Haze meter NDH5000, available from NIPPON DENSHOKU INDUSTRIES CO., LTD.

[Viscosity]

The viscosity of the liquid composition at 25°C is preferably 1.0 mPa·s or greater and 150.0 mPa·s or less, more preferably 1.0 mPa·s or greater and 30.0 mPa·s or less, and particularly preferably 1.0 mPa·s or greater and 25.0 mPa·s or less, considering easy handling at the time when the liquid composition is applied. Since the viscosity of the liquid composition is 1.0 mPa·s or greater and 30.0 mPa·s or less, excellent ejection behavior can be secured even when the liquid composition is applied by the inkjet system. The viscosity can be measured, for example, by a viscometer (instrument name: RE-550L, available from Toki Sangyo Co., Ltd.).

[Hansen solubility parameters (HSP)]

Compatibility between the porogenic solvent and the polymerizable compound and compatibility between the porogenic solvent and the resin formed by polymerizing the polymerizable compound can be predicted from Hansen solubility parameters (HSP).
Hansen solubility parameters (HSP) are an effective tool for estimating compatibility between two materials, and are parameters developed by Charles M. Hansen. Hansen solubility parameters (HSP) are expressed by the following three parameters (δD, δP, and δH) that are experimentally and theoretically lead. For a unit for Hansen solubility parameters (HSP), MPa0.5 or $(J/cm^3)^{0.5}$ may be used. In the present embodiment, $(J/cm^3)^{0.5}$ is used.

δD: the energy from London dispersion forces
5P: the energy from dipolar intermolecular forces
5H: the energy from hydrogen bonding forces

The Hansen solubility parameters (HSP) are a vector as represented by (δD, δP, δH), and are represented by plotting the three parameters in the three-dimensional space (Hansen space) as coordinates. There are publicly available information sources (e.g., databases) for the Hansen solubility parameters (HSP) of materials typically used. Therefore, the Hansen solubility parameters (HSP) of the predetermined material can be acquired, for example, with reference to a database. For a material the Hansen solubility parameters (HSP) of which are not registered on the database, for example, the Hansen solubility parameters (HSP) can be calculated based on a chemical structure of the material or by the below-described Hansen solubility sphere method using computer software, such as Hansen Solubility Parameters in Practice (HSPiP). Hansen solubility parameters (HSP) of a mixture of two or more materials are calculated as a sum of vectors determined by multiplying the Hansen solubility parameters (HSP) of each material by a volume ratio of each material to an entire volume of the mixture. In the present embodiment, Hansen solubility parameters (HSP) of a liquid (porogenic solvent) acquired from the publicly available information source, such as databases, may be referred to as "Hansen solubility parameters of the liquid."
Moreover, a relative energy difference (RED) based on the Hansen solubility parameters (HSP) of the solute

and the Hansen solubility parameters (HSP) of the solution is represented by the following equation.

$$\text{Relative energy difference (RED)} = \frac{Ra}{Ro} \quad \text{(Equation)}$$

In the above equation, Ra is an interaction distance between the Hansen solubility parameters (HSP) of the solute and the Hansen solubility parameters (HSP) of the solution, and Ro is an interaction radius of the solute. The interaction distance (Ra) between the Hansen solubility parameters (HSP) represents a distance between two materials. The smaller the value of the interaction distance (Ra) is, the closer the two materials are within the three-dimensional space (Hansen space) and the more likely the two materials are to dissolve into each other (to become compatible).

Assume that, the two materials (solute A and solution B) have the following Hansen solubility parameters (HSP), respectively, Ra can be calculated as follows.

$$HSP^A = (\delta D^A,\ \delta P^A,\ \delta H^A)$$

$$HSP^B = (\delta D^B,\ \delta P^B,\ \delta H^B)$$

$$Ra = [4 \times (\delta D^A - \delta D^B)^2 + (\delta P^A - \delta P^B)^2 + (\delta H^A - \delta H^B)^2]^{1/2}$$

Ro (interaction radius of the solute) can be determined, for example, by the below-described Hansen solubility sphere method.

-Hansen solubility sphere method-

First, a material Ro of which is to be determined, and several tens of evaluation liquids Hansen solubility parameters (HSP) of which are already known (liquids different from the above-described "liquid (porogenic solvent)") are prepared, and a compatibility test of the sample material to each of the evaluation liquids is carried out. The Hansen solubility parameters (HSP) of the evaluation liquids that do not exhibit compatibility in the compatibility tests and the Hansen solubility parameters (HSP) of the evaluation liquids that exhibited compatibility in the compatibility tests are each plotted in the Hansen space. Based on the plotted Hansen solubility parameters (HSP) of the evaluation liquids, a hypothetical sphere (Hansen solubility sphere) that encapsulates the Hansen solubility parameters (HSP) of the group of the evaluation liquids exhibiting the compatibility and does not encapsulate the Hansen solubility parameters (HSP) of the group of the evaluation liquids not exhibiting the compatibility is created in the Hansen space. The radius of the Hansen solubility sphere is an interaction radius Ro of the material, and the center of the Hansen solubility sphere is a point represented by the Hansen solubility parameters (HSP) of the material. The evaluation criteria (evaluation criteria whether the material and the liquid are dissolved together) for the compatibility between the material, the interaction radius Ro and the Hansen solubility parameters (HSP) of which are to be determined, and the evaluation liquid the Hansen solubility parameters (HSP) of which is known is set by an evaluator. The evaluation criteria used in the present embodiment is described later.

-Hansen solubility parameters (HSP) and interaction radius of polymerizable compound-

The Hansen solubility parameters (HSP) of the polymerizable compound, and the interaction radius of the polymerizable compound of the present embodiment are determined by the Hansen solubility sphere method. Since evaluation criteria of the compatibility in the Hansen solubility sphere are determined by evaluators themselves, as described above, the Hansen solubility parameters (HSP) of the polymerizable compound of the present embodiment determined by the following criteria are represented as "Hansen solubility parameters C of the polymerizable compound." In other words, "Hansen solubility parameters C of the polymerizable compound" and "the interaction radius D of the polymerizable compound" are different from "Hansen solubility parameters of liquids" available from information sources in the related art, such as the databases, and are acquired according to the Hansen solubility sphere method including the compatibility evaluation criteria set by the evaluators themselves.

The Hansen solubility parameters C of the polymerizable compound and the interaction radius D of the polymerizable compound are determined by the evaluation of the compatibility of the polymerizable compound against evaluation liquids (evaluation based on "transmittance of a transmittance measurement composition including the polymerizable compound and an evaluation liquid measured with light having a wavelength of 550 nm by stirring") according to the following [1-1] and the above-described light transmittance measurement method.

[1-1] Preparation of transmittance measurement composition

First, the polymerizable compound the Hansen solubility parameters (HSP) of which are to be determined, and several tens of evaluation liquids the Hansen solubility parameters (HSP) of which have been known are prepared. The polymerizable compound, each of the evaluation liquids, and a polymerization initiator are mixed at a ratio described below to prepare a transmittance measurement composition. As the several tens of evaluation liquids the Hansen solubility parameters (HSP) of which have been known, the following 21 evaluation liquids are used.

-Ratio of transmittance measurement composition-Polymerizable compound Hansen solubility parameters (HSP) of which are to be determined: 28.0% by mass

Evaluation liquid Hansen solubility parameters (HSP) of which have been known: 70.0% by mass
Polymerization initiator (IRGACURE 819, available from BASF): 2.0% by mass

-Evaluation liquid group (21 types)-

Ethanol, 2-propanol, mesitylene, dipropylene glycol monomethyl ether, N-methyl-2-pyrrolidone, γ-butyrolactone, propylene glycol monomethyl ether, propylene carbonate, ethyl acetate, tetrahydrofuran, acetone, n-tetradecane, ethylene glycol, diethylene glycol monobutyl ether, diethylene glycol butyl ether acetate, methyl ethyl ketone, methyl isobutyl ketone, 2-ethylhexanol, diisobutyl ketone, benzyl alcohol, 1-bromonaphthalene

-Hansen solubility parameters (HSP) and interaction radius of resin formed by polymerizing polymerizable compound-

The Hansen solubility parameters (HSP) of the resin formed by polymerizing the polymerizable compound and the interaction radius of the resin formed by polymerizing the polymerizable compound are determined by the Hansen solubility sphere method. Since evaluation criteria of the compatibility in the Hansen solubility sphere are determined by evaluators themselves, as described above, the Hansen solubility parameters (HSP) of the resin formed by polymerizing the polymerizable compound of the present embodiment determined by the following criteria are represented as "Hansen solubility parameters A of the resin," and the interaction radius of the resin formed by polymerizing the polymerizable compound is represented as "interaction radius B of the resin." In other words, "Hansen solubility parameters A of the resin" and "interaction radius B of the resin" are different from "Hansen solubility parameters of liquids" available from information sources in the related art, such as the databases, and are acquired according to the Hansen solubility sphere method including the compatibility evaluation criteria set by the evaluators themselves.

The Hansen solubility parameters A of the resin and the interaction radius B of the resin are determined by evaluation of compatibility of the resin against evaluation liquids (evaluation based on "an increase rate of the Haze value (cloudiness) of a Haze measurement element including the polymerizable compound and an evaluation liquid") according to the following [2-1] and the above-described measurement method for the increase rate of the Haze value.

[2-1] Preparation of Haze measurement composition

First, a precursor (polymerizable compound) of a resin Hansen solubility parameters (HSP) of which are to be determined, and several tens of evaluation liquids Hansen solubility parameters (HSP) of which have been known are prepared. The polymerizable compound, each of the evaluation liquids, and a polymerization initiator are mixed at a ratio described below to prepare a Haze measurement composition. As the several tens of evaluation liquids the Hansen solubility parameters (HSP) of which have been known, the following 21 evaluation liquids are used.

-Ratio of Haze measurement composition-

Precursor (polymerizable compound) of resin Hansen solubility parameters (HSP) of which are to be determined: 28.0% by mass Evaluation liquid Hansen solubility parameters (HSP) of which have been known: 70.0% by mass Polymerization initiator (IRGACURE 819, available from BASF): 2.0% by mass

-Evaluation liquid group (21 types)-

Ethanol, 2-propanol, mesitylene, dipropylene glycol monomethyl ether, N-methyl-2-pyrrolidone, γ-butyrolactone, propylene glycol monomethyl ether, propylene carbonate, ethyl acetate, tetrahydrofuran, acetone, n-tetradecane, ethylene glycol, diethylene glycol monobutyl ether, diethylene glycol butyl ether acetate, methyl ethyl ketone, methyl isobutyl ketone, 2-ethylhexanol, diisobutyl ketone, benzyl alcohol, 1-bromonaphthalene

-Relative energy difference (RED) between resin and liquid (porogenic solvent) based on Hansen solubility parameters (HSP)-

The relative energy difference (RED) is calculated according to the following Equation (1) based on the Hansen solubility parameters A of the resin formed by polymerizing the polymerizable compound, and the interaction radius B of the resin, which are determined based on the increase rate of the Haze value (cloudiness) of the Haze measurement element produced using the Haze measurement composition including the polymerizable compound and the evaluation liquid, as described above, and the Hansen solubility parameters of the porogenic solvent. The relative energy difference (RED) is preferably 1.00 or greater, more preferably 1.10 or greater, yet more preferably 1.20 or greater, and particularly preferably 1.30 or greater.

$$\text{Relative energy difference (RED)} = \frac{\text{Distance between “Hansen solubility parameters A of resin” and “Hansen solubility parameters of solvent”}}{\text{Interaction radius B of resin}} \qquad \text{Equation (1)}$$

The relative energy difference (RED) in the Hansen solubility parameters (HSP) between the resin and the porogenic solvent is preferably 1.00 or greater because a phase separation between the resin, which is formed by polymerizing the polymerizable compound in the liquid composition, and the porogenic solvent is facilitated to easily form a porous resin.

-Relative energy difference (RED) between polymerizable compound and liquid (porogenic solvent) based on Hansen solubility parameters (HSP)-

The relative energy difference (RED) calculated according to the following Equation 2 from the Hansen solubility parameter C of the polymerizable compound, the interaction radius D of the polymerizable compound, and the Hansen solubility parameter of the liquid is preferably 1.05 or less, more preferably 0.90 or less, yet more preferably 0.80 or less, and particularly preferably 0.70 or less. The Hansen solubility parameters C of the polymerizable compound are determined based on the transmittance of the transmittance measurement composition including the polymerizable compound and the evaluation liquid measured with light having a wavelength of 550 nm while stirring, as described above. The interaction radius D of the polymerizable compound is determined based on the compatibility between the polymerizable compound and the evaluation liquid as described above.

$$\text{Relative energy difference (RED)} = \frac{\text{Distance between “Hansen solubility parameters C of polymerizable compound” and “Hansen solubility parameters of solvent”}}{\text{Interaction radius B of resin}} \qquad \text{Equation (2)}$$

When the relative energy difference (RED) between the polymerizable compound and the porogenic solvent based on the Hansen solubility parameters (HSP) is 1.05 or less, the polymerizable compound and the porogenic solvent are likely to have compatibility to each other. As the value of the RED is closer to 0, the polymerizable compound and the porogenic solvent have the greater compatibility. When the relative energy difference (RED) is 1.05 or less, therefore, a liquid composition has a very high solution stability such that the polymerizable compound will not be precipitated even if the time passes after the polymerizable compound is dissolved in the porogenic solvent. Since the polymerizable compound has high solubility to the porogenic solvent, ejection stability of the liquid composition can be secured. Therefore, the liquid composition of the present embodiment can be suitably applied for a system where the liquid composition is ejected, such as an inkjet system. When the relative energy difference (RED) is 1.05 or less, moreover, the separation between the polymerizable compound and the porogenic solvent can be suppressed in the state of the liquid composition before initiation of a polymerization reaction, and formation of irregular or non-uniform porous resin can be avoided.

[Production method for liquid composition]

The production method for the liquid composition is not particularly limited, and may be appropriately selected according to the intended purpose. The liquid composition is preferably produced by dissolving a polymerization initiator in a polymerizable compound, further dissolving a porogenic solvent or other components, and stirring the solution to form the homogeneous solution.

<Polymerizing step and polymerizing unit>

The polymerizing step includes applying heat or light to the liquid composition to polymerize the polymerizable compound to form a resin structure. The polymerizing step is suitably performed by a polymerizing unit.

The polymerizing unit is a unit configured to apply heat or light to the liquid composition to polymerize the polymerizable compound to form a resin structure.

As the polymerization is performed, the polymerizable compound in the liquid composition is polymerized to cause polymerization-induced phase separation to form a porous resin. As a result, a resin structure is produced on an edge of an electrode substrate.

The polymerization process and polymerizing unit are not particularly limited, and may be appropriately selected according to the intended purpose, such as a polymerization initiator or polymerization system used. In case of photopolymerization, examples of the polymerization process include a light irradiation process where ultraviolet rays having a wavelength of 365 nm are applied for 3 seconds. In case of thermal polymerization, examples of the polymerization process include a heating process where heating is carried out at 150°C for 12 hours by a vacuum drier, etc.

<Other steps and other units>

Other steps in the method for producing the electrode stack are not particularly limited, except that the effects obtainable by the present invention are not impaired, and may be appropriately selected according to the intended purpose. Examples of other steps include a removing step.

Other units in the electrode stack production apparatus are not particularly limited, except that the effects obtainable by the present invention are not impaired. Other units may be appropriately selected according to the intended purpose. Examples of other units include a removing unit.

<<Removing step and removing unit>>

The removing step includes removing the liquid from the porous resin formed by polymerizing the polymerizable compound in the liquid composition in the polymerization step. The removing step is suitably performed by the removing unit.

The removing unit is a unit configured to remove the liquid from the porous resin formed by polymerizing the liquid composition in the polymerizing unit.

The method of removing the liquid is not particularly limited. Examples of the method include a method where heating is performed to remove liquids (e.g., a solvent and a dispersion liquid) from the porous resin. Heating is preferably performed under reduced pressure to accelerate removal of the liquids to reduce residual liquids in the porous resin formed.

At the time of heating, the porous resin may be heated on a stage, or may be heated by a heating system other than the stage. The heating system may be disposed at an upper side or lower side of the substrate. Alternatively, two or more heating systems may be arranged. The heating system is not particularly limited. Examples of the heating system include resistance heaters, infrared heaters, and fan heaters.

The heating temperature is not particularly limited. In view of energy consumption, the heating temperature is preferably from 70°C to 150°C.

<Electrode-composite-material-layer forming step and electrode-composite-material-layer forming unit>

The electrode-composite-material-layer forming step includes forming an electrode composite material layer on the electrode substrate. The electrode-composite-material-layer forming step is suitably performed by an electrode-composite-material-layer forming unit.

The electrode-composite-material-layer forming unit is a unit configured to form an electrode composite material layer on the electrode substrate.

The order of performing the electrode-composite-material-layer forming step may be before the applying step, or after the polymerizing step, as described above.

Specifically, after forming the electrode composite material layer, the resin structure may be formed on the periphery of the electrode composite material layer. Alternatively, after forming the resin structure on the periphery of the electrode substrate, the electrode composite material layer may be formed inside the edge (perimeter) on the electrode substrate.

The method for forming the electrode composite material layer is not particularly limited, and may be appropriately selected according to the intended purpose. Examples of the method include a method where a dispersion liquid prepared by dispersing a powdery active material, a binder, a conductive agent, etc., is applied onto the electrode substrate by coating, and the applied dispersion liquid is dried and solidified.

Examples of the coating method include spraying, dispensing, coating by a die coater, and dip coating.

<Pressing step and press>

The pressing step includes pressing the electrode composite material layer and the resin structure. The pressing step is suitably performed by a press.

The press is a unit configured to press the electrode composite material layer and the resin structure.

As the pressing is performed, the average thickness of the electrode composite material layer is made substantially equal to the average thickness of the resin structure. Even if high pressure is applied to press a solid electrolyte layer formed on the electrode, therefore, loads applied by the pressure is excellently dispersed.

The timing for performing the pressing step is not particularly limited, and may be appropriately selected according to the intended purpose. For example, after forming the electrode composite material layer and the resin structure on the electrode substrate, the electrode composite material layer and the resin structure may be pressed. Alternatively, if the thickness of the resin structure and the thickness of the electrode composite material layer are substantially the same before pressing, pressing may be performed after disposing a solid electrolyte layer. The pressing may be performed at the above-described both timings.

The method of pressing is not particularly limited as long as the electrode composite material layer and the resin structure are pressed towards the direction of the electrode substrate. The pressing may be performed using a commercially available pressure molding device. Examples of the pressure molding device include a uniaxial press, a roll press, a cold isostatic press (CIP), and a hot press. Among the above-listed examples, a cold isostatic press (CIP) that can carry out isostatic pressing is preferred.

The pressing may be performed with the pressure at which the electrode composite material can be compressed, while pressure bonding the electrode substrate and the electrode composite material layer together. The pressure for the pressing is preferably from 1 MPa to 900 MPa, more preferably from 50 MPa to 300 MPa.

<Solid-electrolyte-layer forming step and solid-electrolyte-layer forming unit>

The solid-electrolyte-layer forming step includes forming a solid electrolyte layer on the electrode composite material layer and the resin structure. The solid-electrolyte-layer forming step is suitably performed by a solid-electrolyte-layer forming unit.

The solid-electrolyte-layer forming unit is a unit configured to form a solid electrolyte layer on the electrode composite material layer and the resin structure.

The method of forming the solid electrolyte layer is not particularly limited, and may be appropriately selected according to the intended purpose. Examples of the method include a method where the liquid composition including the solid electrolyte and optionally the binder is applied onto the electrode composite material layer and the resin structure, and the applied liquid composition is dried and solidified.

The application method is not particularly limited. Examples of the coating method include liquid ejection methods (e.g., inkjet coating, spray coating, dispensing, etc.), spin coating, casting, microgravure coating, gravure coating, bar coating, roll coating, wire bar coating, dip coating, slit coating, capillary coating, nozzle coating, gravure printing, screen printing, flexo printing, offset printing, and reverse printing.

[Method of producing electrode stack according to second embodiment]

As a method for suitably producing an electrode stack according to the second embodiment, preferred is an embodiment where the applying step of the method for producing the electrode stack according to the first embodiment

includes a first applying step and a second applying step.

Specifically, the method for producing the electrode stack according to the second embodiment includes a first applying step, a second applying step, and a polymerizing step. The first applying step includes applying a first liquid composition to an adjacent area of an electrode composite material layer disposed on an electrode substrate. The second applying step includes applying a second liquid composition to an area adjacent to the adjacent area of the electrode composite material layer disposed on the electrode substrate. The polymerizing step includes applying heat or light to the first liquid composition and the second liquid composition to polymerize the first liquid composition and the second liquid composition to form a resin structure.

The resin structure has a first portion and a second portion that is different from the first portion. The first portion and the second portion have mutually different compressibility as a load is applied. The first portion and the second portion are arranged along a horizontal direction relative to the electrode substrate.

The phrase "applying to an area adjacent to the adjacent area of the electrode composite material layer" means that the second liquid composition is applied to be adjacent to the first liquid composition applied on the adjacent area of the electrode composite material layer. The order of performing the first applying step and the second applying step is not particularly limited, and any of the first applying step and the second applying step may be performed first.

The structure formed of the first liquid composition corresponds to the first portion (proximal portion) of the resin structure in the electrode.

The structure formed of the second liquid composition corresponds to the second portion (distal portion) of the resin structure in the electrode.

The first liquid composition and the second liquid composition may be the identical to or different from each other.

The first liquid composition and the second liquid composition may be appropriately selected from the descriptions of the above-described liquid composition.

Moreover, the amount of the first liquid composition applied per unit area in the first applying step and the amount of the second liquid composition applied per unit area in the second applying step may be mutually different.

In the case where the first liquid composition and the second liquid composition are mutually different from each other, the compressibility of the structure formed of the first liquid composition and the compressibility of the structure formed of the second liquid composition are mutually different from each other. Therefore, an electrode stack including a resin structure, in which a compressibility of a first portion and a compressibility of a second portion are mutually different from each other, is suitably produced by separately coating the first portion and the second portion using the first liquid composition and the second liquid composition in the first applying step and the second applying step.

[Method for producing electrode stack according to third embodiment]

Within the embodiment where the electrode-composite-material-layer forming step is performed prior to the applying step, a preferred embodiment is as follows. The method for producing the electrode stack includes an electrode-composite-material-layer forming step, which includes forming an electrode composite material layer on an electrode substrate, a transporting step, which includes transporting the electrode substrate bearing the electrode composite material layer, an applying step, which includes applying the liquid composition to a periphery of the electrode composite material layer on the transported electrode substrate to form a liquid composition layer, a polymerizing step, which includes polymerizing the polymerizable compound in the liquid composition layer to form a resin structure, a pressing step, which includes pressing the electrode composite material layer and the resin structure, and a solid-electrolyte-layer forming step, which includes forming a solid electrolyte layer on the electrode composite material layer and the resin structure. The polymerizing step is performed in the following conditions:

In 90% or greater of a continuous region of the liquid composition layer adjacent to one of the edge faces of the electrode composite material layer,

(1) both a minimum value and maximum value of the height of the liquid composition layer at an interface with the end face of the electrode composite material layer is 30% or greater and 100% or less relative to the thickness of the electrode composite material layer, and

(2) the thickness of the edge of the liquid composition layer in contact with the electrode substrate of the electrode composite material layer is 80% or greater and 140% or less relative to the thickness of the electrode composite material layer.

Each of the electrode-composite-material-layer forming step, the resin-structure forming step (the applying step and the polymerizing step), the pressing step, the solid-electrolyte-layer forming step, and other steps may be appropriately selected from the descriptions above.

<Transporting step and transporting unit>

The transporting step includes transporting an electrode substrate bearing an electrode composite material layer. The transporting step is suitably performed by the transporting unit.
The transporting unit is a unit configured to transport an electrode substrate bearing an electrode composite material layer.
The transporting step and the transporting unit are not particularly limited, except that the transporting step and the transporting unit can transport the electrode substrate bearing the electrode composite material layer from the applying step to the polymerization step, optionally to a removing step (heating step). The transporting step and the transporting unit may be appropriately selected according to the intended purpose. Examples of the transporting step and the transporting unit include a single wafer system and a roll to roll system (rotary system).
The transportation speed is desirably as fast as possible within the range that the relative distance between the position of the applied liquid composition and the edge of the positive electrode maintains $\pm 2$ mm or less in view of productivity. The transportation speed is preferably from 1 m/min to 100 m/min, more preferably from 30 m/min to 60 m/min.
An embodiment of the transporting step and the transporting unit is not particularly limited, and may be appropriately selected according to the intended purpose, such as desired transportation speed and wetting time. The embodiment may be an embodiment where the electrode substrate bearing the electrode composite material layer is continuously transported from the applying step to the polymerizing step, or an embodiment where the transportation of the electrode substrate bearing the electrode composite material layer is stopped between the applying step and the polymerizing step for the predetermined time period, followed by moving to the polymerizing step.
In the case of continuous transportation, the transportation time from the termination of the applying step to the start of the polymerizing step is determined by the transportation speed and the distance between the applicator and the polymerizing unit. Highly reproducible formation of an electrode including a resin structure and an electrode composite material layer (e.g., a positive-electrode composite material layer) can be achieved by matching the transportation time and the time (wetting time) for the liquid composition layer, which is formed by applying the liquid composition, to come into contact with the edge face of the electrode composite material layer to form a desired shape. In order to make the transportation time constant, the distance between the applicator and the polymerizing unit is preferably adjusted according to the transportation speed.

[Shape of liquid composition layer at start of polymerizing step]

The desired shape of the liquid composition layer at the start of the polymerizing step satisfies the following conditions (1) and (2) in 90% or greater of a continuous region of the liquid composition layer adjacent to one edge face of the electrode composite material layer.

(1) Both the minimum value and maximum value of the height of the liquid composition layer at an interface with the end face of the electrode composite material layer is 30% or greater and 100% or less relative to the thickness of the electrode composite material layer,
(2) The thickness of the edge of the liquid composition layer in contact with the electrode substrate of the electrode composite material layer is 80% or greater and 140% or less relative to the thickness of the electrode composite material layer.

The edge face (may be referred to a side face or tapered face) of the perimeter of the electrode composite material layer 20 has minute surface irregularities due to an error in the coating and drying. For example, the edge 20E of the electrode composite material layer 20 in contact with the electrode substrate may have variations in width in an approximate range of 500 μm (Fig. 30).
Fig. 30 is a top view schematically illustrating an electrode composite material layer 20 disposed on an electrode substrate, and an edge e of a liquid composition layer 11 applied the periphery of the electrode composite material layer 20.
Therefore, the distance d between the edge e of the liquid composition layer 11 and the edge 20E of the electrode composite material layer 20 varies (in width). The edge of the liquid composition layer 11 having the minimum distance, which is the first distance d1, with the edge 20E of the electrode composite material layer 20 is determined as the first edge el. The edge of the liquid composition layer 11 having the maximum distance, which is the second distance d2, with the edge 20E of the electrode composite material layer 20 is determined as the second edge e2.
The shape of the liquid composition layer at the start of the polymerizing step and the region in which the liquid composition layer is disposed will be described with reference to the figures. Figs. 31 to 33 are top views illustrating the method for producing the electrode 25 illustrated in Fig. 1, and the method for producing another embodiment of the electrode. As a result of the production methods of Figs. 31, 32, and 33, the liquid composition layer 11 is polymerized to form a resin structure 10 to yield the resin structures of Figs. 4, 5, and 6A, respectively.

In Fig. 31, the liquid composition layer 11 is disposed to be adjacent to two sides of the electrode composite material layer 20. In Fig. 32, two regions of the liquid composition layers 11 are each disposed to be adjacent to one long side of the electrode composite material layer 20 and two angles at the long side.

As illustrated in Fig. 33, moreover, the liquid composition layer 11 may be continuously disposed to be adjacent to all of four sides of the electrode composite material layer 20. Alternatively, although it is not illustrated, the liquid composition layer 11 may be intermittently disposed to be adjacent to the electrode composite material layer 20 (see Figs. 6B to 6G for the produced resin structures).

The phrase "in 90% or greater of the continuous region of the liquid composition layer in contact with one edge face of the electrode composite material layer" specifically means a continuous region of the liquid composition layer 11 in contact with one edge face of the electrode composite material layer 20, but excluding end portions of the liquid composition layer adjacent to ends (angles) of each side of the electrode composite material layer.

Specifically, "the continuous region of the liquid composition layer adjacent to one edge face of the electrode composite material layer" is, for example, a region of the liquid composition layer 11 marked with diagonal lines in Figs. 31 to 33.

In the case where the liquid composition layer is intermittently disposed to be adjacent to one edge face of the electrode composite material layer 20, a region(s) where the liquid composition layer is not disposed, which is created by intermittently disposing the liquid composition layer, is not included in the series of the regions of the liquid composition layers adjacent to one edge face of the electrode composite material layer.

As described above, the liquid composition layer is disposed to at least regions adjacent to two, three, or four sides among four sides of the edge face of the perimeter of the electrode composite material layer. It is acceptable if the liquid composition layer disposed along one side of the electrode composite material layer satisfies the conditions (1) and (2), among the regions of the liquid composition layer. It is preferred that the liquid composition layer disposed along two side of the electrode composite material layer satisfy both of the conditions (1) and (2).

In the case where the liquid composition layer is disposed along three sides or all the four sides of the electrode composite material layer, moreover, the liquid composition layer disposed along the three sides or all the four sides of the electrode composite material layer more preferably satisfies both of the conditions (1) and (2).

Regarding the condition (1), although the formed liquid composition layer is spread to cause wetting as the time passes (time lapsed: T1, T2, T3, and T4) to form an interface with the edge face of the electrode composite material layer 20 (see Fig. 34), at the polymerization start point (e.g., T2) after the liquid composition layer is spread to cause wetting compared to at the time of application (e.g., T1) (see Fig. 35), both the minimum value and maximum value of the height of the liquid composition layer at the interface with the edge face of the electrode composite material layer 20 is 30% or greater and 100% or less, preferably 40% or greater and 100% or less, and more preferably 50% or greater and 100% or less, relative to the thickness of the electrode composite material layer.

Since the liquid composition layer is constantly spread to cause wetting owing to the composition and properties of the liquid composition layer, the maximum value of the height of the liquid composition layer at the interface at the start of the polymerizing step (e.g., T2) is the first interface height h1 at the first edge e1 of the liquid composition layer (see Fig. 35), and the minimum value of the height of the liquid composition layer at the interface is the second interface height h2 of the second edge e2 of the liquid composition layer (see Fig. 36).

The thickness of the electrode composite material layer 20 is the maximum thickness on the plateau (flat top plane) of the electrode composite material layer 20. The interface height is 30% or greater and 100% or less (because of the characteristics of the interface height, the interface height does not exceed 100%) relative to the thickness of the electrode composite material layer. The liquid composition layer may cover part of the plateau of the electrode composite material layer 20.

The height of the interface between the electrode composite material layer and the liquid composition layer at the start of the polymerizing step can be measured by a spectral-interference laser displacement meter (SI-T10, available from KEYENCE CORPORATION).

Regarding the condition (2), the thickness t of the liquid composition layer at the edge 20E of the electrode composite material layer 20 in contact with the electrode substrate (see Fig. 36) is 80% or greater and 140% or less, more preferably 90% or greater and 120% or less, and yet more preferably 90% or greater and 100% or less, relative to the thickness of the electrode composite material layer.

The thickness of the electrode composite material layer 20 is an average thickness measured at the plateau of the electrode composite material layer 20. The thickness of the electrode composite material layer 20 can be calculated by measuring the thickness of the electrode composite material layer 20 at 3 or more points on the plateau and determining an average of the measured values.

In the case where the edge 20E of the electrode composite material layer 20 in contact with the electrode substrate has irregularities, the thickness t of the liquid composition layer may be determined by measuring the thickness or average thickness of the liquid composition layer 11 at the most projected edge (or an external tangent line of the edge of the electrode composite material layer 20).

At the start of the polymerizing step, the thickness of the liquid composition at the edge 20E of the electrode composite material layer 20 can be measured by a spectral-interference laser displacement meter (SI-T10, available from KEYENCE CORPORATION).

[Wetting time]

The time (wetting time) required for the liquid composition layer, which is formed by applying the liquid composition, to come into contact with the perimeter of the electrode composite material layer to form a desired shape satisfying the conditions (1) and (2) will be described.

The time lapse from the applying step to the time when the first edge e1 of the liquid composition layer satisfies the conditions (1) and (2) is determined as being the first time (Time 1) or longer and the second time (Time 2) or shorter. The time lapse from the applying step to the time when the second edge e2 of the liquid composition layer satisfies the conditions (1) and (2) is determined as being the third time (Time 3) or longer and the fourth time (Time 4) or shorter. In this case, the polymerization step is preferably performed when the time period, which is the third time (Time 3) or longer and the second time (Time 2) or shorter, has passed since the applying step (see Fig. 37).

When transportation is continuously performed as described above, the transportation time from the termination of the applying step to the start of the polymerizing step is determined based on the transportation speed and the distance between the applicator and the polymerizing unit. The polymerizing step is preferably performed when the desirable wetting time, which is the third time (Time 3) or longer and the second time (Time 2) or shorter, has passed since the applying step.

An embodiment where transportation is carried out in a production apparatus in which a distance between an applicator and a polymerizing unit is set will be described.

As the transportation speed increases, the time gap between the third time (Time 3) and the second time (Time 2), in other words, the starting time of the polymerizing step, is getting closer to the termination time of the applying step. During the time gap between the third time (Time 3) and the second time (Time 2), the applied and formed liquid composition layer comes into contact with the electrode composite material layer and satisfies the conditions (1) and (2).

The first time (Time 1) and the third time (Time 3) are appropriately adjusted by adjusting an ejection position of the liquid composition layer. The first time (Time 1) is the time when the first edge of the liquid composition comes into contact with the electrode composite material layer to form a desired shape. The third time (Time 3) is the time when the second edge of the liquid composition comes into contact with the electrode composite material layer to form a desired shape.

When the transportation speed is fast, specifically, the first distance and the second distance are reduced, all of the liquid composition surrounding the perimeter of the positive electrode is spread to cause wetting to reach the electrode composite material layer to form a resin structure (an insulation resin layer) having a desired shape. When the transportation speed is slow, the structure similar to the above-described structure can be formed by increasing the first distance and the second distance.

As described above, the first distance and the second distance are preferably adjusted according to the transportation speed in the transporting step.

As an amount (volume) of the liquid composition applied per unit area increases, the wetting speed of the liquid composition on the electrode substrate increases. Therefore, the first time and the third time become close to the termination time of the applying step. Even in this case, the first distance and the second distance can be increased by adjusting the ejection position of the liquid composition so that all the liquid composition layer surrounding the perimeter of the electrode composite material layer is spread to cause wetting and reaches the electrode composite material layer, and a resin structure having a desired shape can be formed.

As described above, the first distance and the second distance are preferably changed according to the amount of the liquid composition applied per unit area in the applying step.

Moreover, the distance between the applicator and the polymerizing unit can be changed according to the time lapse from the applying step to the polymerizing step (i.e., the desired wetting time that is the third time or longer and the second time or shorter). The embodiment as described can be also preferably used.

[Embodiment of directly applying liquid composition to base to form resin structure or electrode stack]

Fig. 7 is a schematic view illustrating an example of a resin structure production apparatus (liquid jet device) for carrying out the method for producing the electrode stack according to the present embodiment.

The resin structure production apparatus 500 is an apparatus for producing a resin structure using the above-described liquid composition. The resin structure production apparatus includes a printing unit 100 configured to apply a liquid composition onto a print base 5 to form a liquid composition layer to perform an applying step, a polymerizing unit 200 configured to apply heat or light to the liquid composition layer to polymerize to perform a polymerizing step,

and a heating unit configured to heat a porous resin precursor 6 to remove the solvent present within the pores to obtain a porous resin to perform a heating step. The resin structure production apparatus includes a transporting unit 7 configured to transport the print base 5. The transporting unit 7 transports the print base 5 at the speed set in advance to send the print base 5 to the printing unit 100, the polymerizing unit 200, and the heating unit 300 in the order as mentioned.

The print base 5 may be a base where an electrode composite material layer is disposed on an electrode substrate. Moreover, the print base 5 may be an electrode substrate that does not have an electrode composite material layer. In this case, an electrode composite material layer is disposed after forming a resin structure.

-Printing unit 100-

The printing unit 100 includes a printing device 1a, a storage container 1b storing a liquid composition therein, and a supply tube 1c configured to supply the liquid composition stored in the storage container 1b to the printing device 1a. The printing device 1a is one example of the applicator configured to carry out the applying step of applying a liquid composition onto the print base 5 to form a resin structure.

The storage container 1b stores a liquid composition 6. The printing unit 100 ejects the liquid composition 6 from the printing device 1a to apply the liquid composition 6 onto the print base 5 to form a thin film of the liquid composition layer. The storage container 1b may be integrated with the resin structure production apparatus or may be configured to be detachable from the resin structure production apparatus. Moreover, the storage container 1b may be a container used for supplying the liquid composition to the storage container integrated with the resin structure production apparatus or the storage container detachable from the resin structure production apparatus.

The storage container 1b and the supply tube 1c may be appropriately selected, as long as the storage container 1b and the supply tube 1c can stably store and supply the liquid composition 6. A material constituting the storage container 1b or supply tube 1c preferably has light shielding properties with ultraviolet rays and a relatively short wavelength range of visible light. Since the material has the light shielding properties, polymerization of the liquid composition 6 is not initiated by light in the atmosphere.

-Polymerizing unit 200-

As illustrated in Fig. 7, in case of photopolymerization, the polymerizing unit 200 includes a light irradiation device 2a, which is an example of the polymerizing unit that performs the polymerizing step, and a polymerization inert gas circulation device 2b configured to circulate a polymerization inert gas. The light irradiation device 2a irradiates the liquid composition layer formed by the printing unit 100 with light in the atmosphere of the polymerization inert gas to proceed with photopolymerization of the liquid composition to form a porous resin precursor.

The light irradiation device 2a is appropriately selected according to absorption wavelengths of the photopolymerization initiator included in the liquid composition. The light irradiation device 2a is not particularly limited as long as the light irradiation device can initiate and facilitate polymerization of the polymerizable compound in the liquid composition layer. Examples of the light irradiation device 2a include UV light sources, such as high-pressure mercury vapor lamps, metal halide lamps, hot cathode lamps, cold cathode lamps, and LEDs. Light having the shorter wavelength is likely to reach the deeper area of the liquid composition layer, thus the light source is preferably selected according to a thickness of a porous film to be formed.

Regarding the irradiation intensity of the light source of the light irradiation device 2a, if the irradiation intensity is excessively high, polymerization is rapidly progressed before phase separation is caused sufficiently. Therefore, it may be difficult to form a porous structure. If the irradiation intensity is too low, moreover, the phase separation is progressed at the microscale or greater to cause unevenness of the pores or to increase the size of the pores. Moreover, the irradiation time is prolonged to reduce productivity. Therefore, the intensity of the irradiation is preferably 10 $mW/cm^2$ or greater and 1 $W/cm^2$ or less, more preferably 30 $mW/cm^2$ or greater and 300 $mW/cm^2$ or less.

The polymerization inert gas circulation device 2b plays a role of reducing the concentration of polymerization active oxygen included in the atmosphere so that a polymerization reaction of the polymerizable compound present near a surface of the liquid composition layer is facilitated without being inhibited by the polymerization active oxygen. Therefore, the polymerization inert gas is not particularly limited, as long as the polymerization inert gas for use can play the above-described role. Examples of the polymerization inert gas include nitrogen, carbon dioxide, and argon.

The $O_2$ concentration in the polymerization inert gas is preferably less than 20% (the environment where the oxygen content is lower than the atmosphere), more preferably 0% or greater and 15% or less, and yet more preferably 0% or greater and 5% or less, because an inhibition reduction effect is effectively obtained. Moreover, the polymerization inert gas circulation device 2b preferably includes a temperature controlling unit configured to control a temperature to create stable conditions for progressing polymerization.

In case of thermal polymerization, the polymerizing unit 200 may be a heating device. The heating device is not particularly limited, and may be appropriately selected according to the intended purpose. Examples of the heating

device include substrate heaters (e.g., hot plates), IR heaters, and hot air heaters.

Moreover, the heating temperature and the heating time, or light irradiation conditions are appropriately selected according to the polymerizable compound included in the liquid composition 6, or a thickness of a film to be formed.

-Removing unit 300-

As illustrated in Fig. 7, the removing unit 300 includes a heating device 3a. The removing unit 300 performs a liquid removing step that includes heating the porous resin precursor 6 formed by the polymerizing unit 200 using the heating device 3a to dry and remove the residual liquids. As a result, a porous resin is formed. The removing unit 300 may perform the removal of the liquids under reduced pressure.

Moreover, the removing unit 300 performs a polymerization acceleration step and an initiator removing step. The polymerization acceleration step includes heating the porous resin precursor using the heating device 3a to further accelerate the polymerization reaction performed by the polymerizing unit 200. The initiator removing step includes heating the porous resin precursor by the heating device 3a to remove the residual photopolymerization initiator in the porous resin precursor. The polymerization acceleration step and the initiator removing step may be performed at the same time as the liquid removing step, or before or after the liquid removing step.

Moreover, the removing unit 300 performs a polymerization completion step after the liquid removing step. The polymerization completion step includes heating the porous resin under the reduced pressure. The heating device 3a is not particularly limited as long as the heating device 3a achieves the above-described functions. Examples of the heating device 3a include IR heaters and hot air heaters.

Moreover, the heating temperature and heating time may be appropriately selected according to boiling points of liquids included in the porous resin precursor, or a thickness of a formed film.

Fig. 8 is a schematic view illustrating another example of the resin structure production apparatus (liquid jet device) to carry out the method for producing the electrode stack according to the present embodiment.

The liquid jet device 300' is configured to control a pump 310 and valves 311 and 312 to circulate the liquid composition through a liquid jet head 306, a tank 307, and a tube 308.

Moreover, the liquid jet device 300' includes an external tank 313. When the amount of the liquid composition in the tank 307 is low, the liquid composition can be supplied from the external tank 313 to the tank 307 by controlling the pump 310 and the valves 311, 312, and 314.

By using the resin structure production apparatus, the liquid composition can be ejected to a target area of an application target.

Fig. 9 illustrates another example of the method for producing the resin structure according to the present embodiment.

The method for producing the electrode-resin structure stack 210, in which a porous resin is disposed on a base, includes sequentially ejecting a liquid composition 12A on a base 211 using a liquid jet device 300'.

First, a long and narrow base 211 is prepared. Then, the base 211 is wound around a cylindrical core, and the base 211 is set on a feeding roller 304 and a winding roller 305 so that the face of the base 211 on which a porous resin 212 is formed faces upwards as illustrated in Fig. 9. The feeding roller 304 and the winding roller 305 rotate in the anti-clockwise direction to transport the base 211 from the right side to the left side in Fig. 9. Then, droplets of the liquid composition 12A are sequentially ejected onto the base 211 from the liquid jet head 306 disposed above the base between the feeding roller 304 and the winding roller 305 in the similar manner as illustrated in Fig. 8.

A plurality of the liquid jet heads 306 may be disposed along the direction substantially parallel to or substantially vertical to the transporting direction of the base 211. Next, the base 211, on which the droplets of the liquid composition 12A have been ejected, is transported to a polymerizing unit 309 by the feeding roller 304 and the winding roller 305. As a result, a porous resin 212 is formed to produce an electrode-resin structure stack 210, in which the porous resin is disposed on the base. Thereafter, the electrode 210, in which the polymer electrolyte is disposed, is cut into a suitable size by punching, etc.

The polymerizing unit 309 may be arranged above or under the base 211, or a plurality of the polymerizing units 309 may be arranged.

The polymerizing unit 309 is not particularly limited, except that the polymerizing unit 309 does not directly come into contact with the liquid composition 12A. In case of thermal polymerization, examples of the polymerizing unit 309 include resistance heaters, infrared heaters, and fan heaters. In case of photopolymerization, examples of the polymerizing unit 309 include UV irradiation devices. A plurality of the polymerizing units 309 may be disposed.

Conditions for heating or light irradiation are not particularly limited and may be appropriately selected according to the intended purpose. As the polymerization is carried out, the liquid composition 12A is polymerized to form a porous resin.

As illustrated in Fig. 10, moreover, the liquid composition may be supplied to the tank 307A from the tank 313A connected to the tank 307A, and the liquid jet head 306 may include a plurality of liquid jet heads 306A and 306B.

[Embodiment of indirectly applying liquid composition to base to form resin structure or electrode stack]

Figs. 11 and 12 are schematic views illustrating an example of a printing unit employing an inkjet system and a transfer system, as the applicator of the resin structure production apparatus of the present embodiment. Fig. 11 is a schematic view illustrating a printing unit using a drum-shaped intermediate transfer member. Fig. 12 is a schematic view illustrating a printing unit using an endless-belt type intermediate transfer member.

The printing unit 400' illustrated in Fig. 11 is an inkjet printer configured to transfer the liquid composition or porous resin to a base via the intermediate transfer member 4001 to form the porous resin on the base.

The printing unit 400' includes an inkjet unit 420, a transfer drum 4000, a pre-treatment unit 4002, an absorption unit 4003, a heating unit 4004, and a cleaning unit 4005.

The inkjet unit 420 includes a head module 422 holding a plurality of heads 101. The head 101 ejects the liquid composition onto the intermediate transfer member 4001 supported by the transfer drum 4000 to form a liquid composition layer on the intermediate transfer member 4001. Each head 101 is a line head, where nozzles are aligned over a region covering a width of a recording region for a maximum size of the base that can be used. The head 101 has a nozzle face in which nozzles are formed. The nozzle face is arranged to face the face of the intermediate transfer member 4001 with a small gap between the nozzle face and the intermediate transfer member 4001. In the present embodiment, the intermediate transfer member 4001 is configured to circulate and move along a circular path, thus a plurality of the heads 101 are radially disposed.

The transfer drum 4000 is disposed to face an impression cylinder 621 to form a transfer nip. For example, the pre-treatment unit 4002 is configured to apply a reaction liquid to the intermediate transfer member 4001 to increase a viscosity of the liquid composition before ejecting the liquid composition by the head 101. The absorption unit 4003 is configured to absorb a liquid component from the liquid composition layer on the intermediate transfer member 4001 before transferring. The heating unit 4004 is configured to heat the liquid composition layer on the intermediate transfer member 4001 before transferring. As the liquid composition layer is heated, the liquid composition is thermally polymerized to form a porous resin. Moreover, the liquids are removed to improve transferring to the base. The cleaning unit 4005 is configured to clean the intermediate transfer member 4001 after transferring to remove foreign matter, such as a residual ink, and dust, on the intermediate transfer member 4001.

The outer circumferential surface of the impression cylinder 621 is pressed against the intermediate transfer member 4001. As the base passes through the transfer nip between the impression cylinder 621 and the intermediate transfer member 4001, the porous resin on the intermediate transfer member 4001 is transferred onto the base. The impression cylinder 621 may be configured to include at least one grip system that is disposed on the circumferential surface of the impression cylinder 621 and holds an edge of the base.

The printing unit 400'' illustrated in Fig. 12 is an inkjet printer configured to transfer the liquid composition or porous resin to the base via the intermediate transfer belt 4006 to form the porous resin on the base.

The printing unit 400" is configured to eject droplets of the liquid composition from a plurality of the heads 101 disposed in the inkjet unit 420 to form a liquid composition layer on the circumferential surface of the intermediate transfer belt 4006. The liquid composition layer formed on the intermediate transfer belt 4006 is heated by the heating unit 4007 to cause thermal polymerization of the liquid composition layer to form a porous resin and turn the liquid composition layer into a film of the porous resin on the intermediate transfer belt 4006.

The porous resin formed as a film on the intermediate transfer belt 4006 is transferred onto the base at the transfer nip where the intermediate transfer belt 4006 faces the transfer roller 622. The surface of the intermediate transfer belt 4006 is cleaned by the cleaning roller 4008 after the transferring.

The intermediate transfer belt 4006 is supported by a driving roller 4009a, a counter roller 4009b, a plurality (four in this example) of shape retaining rollers 4009c, 4009d, 4009e, and 4009f, and a plurality (four in this example) of support rollers 4009g to move in the direction indicated with the arrow in Fig. 12. The support roller 4009g disposed to face the head 101 maintains the tension of the intermediate transfer belt 4006 when ink droplets are ejected from the head 101.

(Electrochemical element)

The electrochemical element of the present disclosure is an electrochemical element including the above-described electrode stack of the present disclosure. The electrochemical element is preferably a solid-state battery cell including a solid electrolyte layer.

Fig. 15 illustrates an example of the solid-state battery cell that is the electrochemical element of the present disclosure.

The solid-state battery cell illustrated in Fig. 15 includes a positive electrode 20 and a negative electrode 40 that are stacked with a solid electrolyte 30 disposed between the positive electrode 20 and the negative electrode 40. The positive electrode 20 is disposed on the both faces of the negative electrode 40.

Moreover, a lead wire 50 is connected to the positive electrode substrate 21, and a lead wire 51 is connected to the negative electrode substrate 41.

The number of the positive electrodes 20 and the negative electrodes 40 stacked is not particularly limited. Moreover, the number of the positive electrodes 20 and the number of the negative electrodes 40 may be the same or different.

The lead wires 50 and 51 are drawn to the outside of the housing 60.

The shape of the electrochemical element is not particularly limited. Examples of the shape include laminate-type electrochemical elements, cylinder-type electrochemical elements, and coin-type electrochemical elements.

(Method for producing electrochemical element and electrochemical element production apparatus)

The method for producing an electrochemical element according to the present disclosure includes an electrode producing step and an element producing step, and may further includes other steps, as necessary. The electrode producing step includes producing an electrode stack by the above-described method for producing the electrode stack according to the present disclosure. The element producing step includes producing an electrochemical element using the electrode stack.

The electrochemical element production apparatus of the present disclosure includes an electrode producing unit and an element producing unit, and may further include other steps, as necessary. The electrode producing unit is configured to produce an electrode stack by the above-described electrode stack production apparatus of the present disclosure. The element producing unit is configured to produce an electrochemical element using the electrode stack.

<Electrode producing step and electrode producing unit>

The electrode producing step includes the applying step, the polymerizing step, the electrode-composite-material-layer forming step, the pressing step, and the solid-electrolyte-layer forming step, which are described in association with the method for producing the electrode stack according to the present disclosure. The electrode producing step may further include other steps, such as an electrode processing step, as necessary.

The electrode producing unit includes the storage container, the applicator, the polymerizing unit, the electrode-composite-material-layer forming unit, the press, and the solid-electrolyte-layer forming unit, which are described in association with the electrode stack production apparatus of the present disclosure. The electrode producing unit may further include other units, such as an electrode processing unit, as necessary.

In the electrode producing step using the electrode producing unit, an electrode stack including an electrode substrate, an electrode composite material layer disposed on the electrode substrate, a resin structure disposed on the periphery of the electrode composite material layer, and a solid electrolyte layer disposed on the electrode composite material layer and the resin structure can be produced.

<Element producing step and element producing unit>

The element producing step includes producing an electrochemical element using the electrode stack.

The element producing unit is configured to produce an electrochemical element using the electrode stack.

The method for producing an electrochemical elements using the electrode stack is not particularly limited, and may be appropriately selected from electrochemical-element production methods available in the related art according to the intended purpose. Examples of the method include a method where arrangement of a counter electrode, winding or stacking, or packaging in a container, or any combination thereof is performed.

The element producing step does not necessarily include an entire process for the production of an element, and may include only part of the production process of an element.

<Electrode processing step and electrode processing unit>

The electrode processing unit is a unit configured to process the electrode stack, in which the resin layer is formed, downstream of the applicator. The electrode processing unit may perform cutting, folding, or bonding, or any combination thereof. For example, the electrode stack processing unit can cut the electrode stack, in which the resin layer is formed, to produce a laminate of the electrode stack. The electrode processing unit may wind or laminate the electrode stack, in which the resin layer is formed.

For example, the electrode processing unit includes an electrode processing device, and performs cutting, multiple folding, laminating, or winding of the electrode stack, in which a porous resin layer is formed, according to the intended embodiment of a cell.

The electrode processing step performed by the electrode processing unit includes, for example, processing

the electrode stack, in which the resin layer is formed, downstream of the applying step. The electrode processing step includes a cutting step, a folding step, or a bonding step, or any combination thereof.

[Use of electrochemical element]

Use of the electrochemical element is not particularly limited. Examples of the use of the electrochemical element include moving vehicles (e.g., electric cars), smart phones, laptop computers, personal computers with graphic tablets for input, portable personal computers, electronic book readers, mobile phones, portable facsimiles, portable photocopiers, portable printers, headphones, video cameras, liquid crystal display televisions, portable cleaners, portable CD players, mini-disk players, transceivers, electronic notebooks, calculators, memory cards, portable tape recorders, radio players, backup power supplies, motors, lighting equipment, toys, game consoles, clocks, stroboscopic lamps, and cameras. Among the above-listed examples, vehicles and electronic devices are particularly preferred.

Examples of the moving vehicles include regular moving vehicles, heavy specialized moving vehicles, small specialized moving vehicles, trucks, large motorcycles (e.g., over 400 cc), and regular motorcycles (e.g., smaller than 400 cc).

[Moving vehicle]

Fig. 18 illustrates an example of a moving vehicle in which a solid-state battery cell serving as the electrochemical element of the present disclosure is mounted. For example, the moving vehicle 70 is an electric car. The moving vehicle 70 includes a motor 71, an electrochemical element 72, and wheels 73 as one example of a transporting unit. The electrochemical element 72 is the above-described electrochemical element of the present disclosure. The electrochemical element 72 supplies electricity to the motor 71 to drive the motor 71. The driven motor 71 drives the wheels 73 to move the moving vehicle 70.

According to the above-described structure, short-circuiting between the positive electrode and the negative electrode can be avoided, and the moving vehicle is driven by the electric power supplied from the solid-state electrochemical element having excellent battery characteristics. Therefore, the moving vehicle can be driven safely and efficiently.

The moving vehicle 70 is not limited to an electric car. The moving vehicle 70 may be PHEV, HEV, or trains or motorcycles that can be driven by a combination of a diesel engine and the electrochemical element. Alternatively, the moving vehicle may be a transportation robot that can be driven by the electrochemical element alone, or a combination of an engine and the electrochemical element. The transportation robot may be used inside factories, etc. Moreover, the moving vehicle may be a device the entire part of which is not moved, but only part of which is moved, such as an assembly robot arranged in a production line of a factory, where the arm of the robot, etc., can be operated by the electrochemical element alone, or a combination of an engine and the electrochemical element.

Examples

The present disclosure will be concretely described below by way of Examples. The present disclosure should not be construed as being limited to these Examples.

<Synthesis of solid electrolyte>

As a solid electrolyte, an argyrodite-type sulfide solid electrolyte $Li_6PS_5Cl$ (LPSC) was synthesized according to the method described in the literature "J. Power Sources. 2018, 396, 33-40."

A coating material for forming a solid electrolyte layer was prepared in the following manner.

As a solvent, octane (available from Tokyo Chemical Industry Co., Ltd.) was used. To use the octane as a dehydrated solvent, the moisture content of the octane was confirmed to be 100 ppm or less by Karl Fischer moisture titrator.

With 100 parts by mass of the solvent, 100 parts by mass of the above-synthesized solid electrolyte and 1 part by mass of a dispersing agent (Solspersetm™ 21000, available from The Lubrizol Corporation) were mixed to prepare a coating material for forming a solid electrolyte layer.

<Surface coating of active material with ion-conductive oxide>

As a positive-electrode active material, a nickel-based positive-electrode active material (lithium nickel cobalt manganese oxide, may be abbreviated as "NCM1" hereinafter, available from Toshima Manufacturing Co., Ltd., mean primary particle diameter: 3.5 μm) was used. As an ion-conductive oxide covering surfaces of NCM1 particles, $LiNbO_3$

was used. The $LiNbO_3$ layer was formed by carrying out hydrolysis of an alkoxide solution including lithium and niobium on surfaces of particles of NCM1 powder with reference to the literature "J. Mater. Chem. A. 2021, 9, 4117-4125." First, metal lithium (available from Honjo Metal Co., Ltd.) was dissolved in anhydrous ethanol (available from KANTO CHEMICAL CO., INC.) to prepare a lithium ethoxide ethanol solution. To the lithium ethoxide ethanol solution, moreover, niobium pentaethoxide ($Nb(OC_2H_5)_5$)(available from Kojundo Chemical Laboratory Co., Ltd.) was added to prepare an alkoxide solution including lithium and niobium. A liquidized bed of the NCM1 powder was formed using a tumbling liquid bed granulator (MP-01, available from Powrex Corporation), followed by spraying the previously-prepared alkoxide solution, to obtain precursor powder where surfaces of the particles of the NCM1 were coated with alkoxide. The powder was heated at 350°C in the dry air atmosphere to synthesize LNO/NCM1 in which a $LiNbO_3$ layer was formed on the surface of NCM1.

In the similar manner, a nickel-based positive-electrode active material (lithium nickel oxide, may be abbreviated as "NCA1" hereinafter, available from Toshima Manufacturing Co., Ltd.) was used to synthesize LNO/NCA1 in which a $LiNbO_3$ layer was formed on the surface of NCA1.

<Positive electrode production method>

<Positive Electrode 1>

In 36.4% by mass of anisole (available from Tokyo Chemical Industry Co., Ltd.), 45.3% by mass of LNO/NMC1 serving as the positive-electrode active material, 2.2% by mass of acetylene black (DENKA BLACK, available from Denka Company Limited) serving as a conductive agent, 1.4% by mass of polybutyl methacrylate (PBMA, available from Sigma-Aldrich) serving as a binder, and 14.7% by mass of Solid Electrolyte 1 were dispersed to prepare a positive electrode coating material.

The positive electrode coating material was applied onto one face of an aluminum foil base (50 mm × 50 mm, average thickness: 15 μm) serving as an electrode substrate, followed by drying the coating material to form a 20 mm × 20 mm positive-electrode composite material layer, to thereby prepare Positive Electrode 1 having a margin in the width of 15 mm along the four sides of the positive-electrode composite material layer. The average thickness of the positive-electrode composite material layer was 95 μm, and the battery capacity per unit area was 2.91 $mAh/cm^2$.

<Positive Electrode 2>

In 36.4% by mass of anisole (available from Tokyo Chemical Industry Co., Ltd.), 45.3% by mass of LNO/NCA1 serving as the positive-electrode active material, 2.2% by mass of acetylene black (DENKA BLACK, available from Denka Company Limited) serving as a conductive agent, 1.4% by mass of polybutyl methacrylate (PBMA, available from Sigma-Aldrich) serving as a binder, and 14.7% by mass of Solid Electrolyte 1 were dispersed to prepare a positive electrode coating material.

The positive electrode coating material was applied onto one face of an aluminum foil base (50 mm × 50 mm, average thickness: 15 μm) serving as an electrode substrate, followed by drying the coating material to form a 20 mm × 20 mm positive-electrode composite material layer, to thereby prepare Positive Electrode 2 having a margin in the width of 15 mm along the four sides of the positive-electrode composite material layer. The average thickness of the positive-electrode composite material layer was 97 μm, and the battery capacity per unit area was 3.11 $mAh/cm^2$.

<Negative electrode production method>

<Negative Electrode 1>

Lithium metal (available from Honjo Metal Co., Ltd.) having the average thickness of 50 μm was adhered onto a stainless steel foil base (50 mm × 50 mm, average thickness: 20 μm) serving as an electrode substrate, followed by adhering 50 μm of an indium foil (available from The Nilaco Corporation), to thereby prepare 22 mm × 22 mm Negative Electrode 1.

<Negative Electrode 2>

Lithium metal (available from Honjo Metal Co., Ltd.) having the average thickness of 50 μm was adhered onto a stainless steel foil base (50 mm × 50 mm, average thickness: 20 μm) serving as an electrode substrate, followed by adhering 50 μm of an indium foil (available from The Nilaco Corporation), to thereby prepare 22 mm × 18 mm Negative Electrode 2.

<Negative Electrode 3>

In 36.5% by mass of anisole (available from Tokyo Chemical Industry Co., Ltd.), 45.5% by mass of graphite (Gr, available from Sigma-Aldrich) serving as a negative electrode active material, 1.4% by mass of acetylene black (DENKA BLACK, available from Denka Company Limited) serving as a conductive agent, 1.8% by mass of acrylonitrile butadiene rubber (NBR, available from Sigma-Aldrich) serving as a binder, and 14.8% by mass of Solid Electrolyte 1 were dispersed to prepare a negative electrode coating material.

The negative electrode coating material was applied onto one face of a stainless steel foil (50 mm × 50 mm, average thickness: 20 μm) serving as an electrode substrate, followed by drying the coating material to form a 22 mm × 18 mm negative electrode composite material layer, to thereby prepare Negative Electrode 3. The average thickness of the negative electrode composite material layer was 61 μm, and the battery capacity per unit area was 3.38 $mAh/cm^2$.

<Negative Electrode 4>

In 36.5% by mass of anisole (available from Tokyo Chemical Industry Co., Ltd.), 45.5% by mass of silicon (Si, available from Sigma-Aldrich) serving as a negative electrode active material, 1.4% by mass of acetylene black (DENKA BLACK, available from Denka Company Limited) serving as a conductive agent, 1.8% by mass of acrylonitrile butadiene rubber (NBR, available from Sigma-Aldrich) serving as a binder, and 14.8% by mass of Solid Electrolyte 1 were dispersed to prepare a negative electrode coating material.

The negative electrode coating material was applied onto one face of a stainless steel foil, followed by drying the coating material to form a 22 mm × 18 mm negative electrode composite material layer, to thereby prepare Negative Electrode 4. The average thickness of the negative electrode composite material layer was 21 μm, and the battery capacity per unit area was 3.61 $mAh/cm^2$.

[Measurement method for capacity of electrode per unit area]

The capacity of the electrode per unit area was measured by a charge-discharge test system (TOSCAT3001, available from TOYO SYSTEM CO., LTD.) in the following manner.

First, the produced electrode was cut out into the shape of circle having a diameter of 10 mm by punching.

Next, a capacity evaluation of the electrodes was performed according to the following method. Among the electrodes, Solid Electrolyte 1 was included in the positive electrode or negative electrode.

The positive electrode or negative electrode was cut out in the argon atmosphere by punching to obtain a capacity of the positive electrode or negative electrode per unit area suitable for a circular electrode having a diameter of 10 mm.

A polyethylene terephthalate (PET) tube of a two-electrode cell (available from Hohsen Corp.) was charged with 80 mg of Solid Electrolyte 1. A press pin was placed, and Solid Electrolyte 1 was molded for 1 minute at 10 MPa as the displayed pressure using a uniaxial press (P-6, available from RIKEN SEIKI).

Next, the positive electrode or negative electrode cut out to have the diameter of 10 mm was placed inside the PET tube in a manner that the face of the active material of the positive electrode or negative electrode was brought into contact with the face of the solid electrolyte. A press pin was set, and the resulting stack was molded for 1 minute at 30 MPa as the displayed pressure using the uniaxial press (P-6, available from RIKEN SEIKI).

Indium (available from The Nilaco Corporation) having an average thickness of 50 μm was stacked on lithium (available from Honjo Metal Co., Ltd.) having an average thickness of 50 μm that was bonded onto an SUS foil having an average thickness of 10 μm at the side opposite to the side where a positive-electrode composite material layer was pressed. The resulting stack was molded for 3 seconds at 12 MPa as the displayed pressure using the uniaxial press (P-6, available from RIKEN SEIKI). The PET was placed in the two-electrode cell with a press pin set on the stack, and the stack was sealed by a digital torque ratchet (KTC tool) at the displayed pressure of 25 N·m.

The resulting electrochemical element was charged at room temperature (25°C) up to 3.6 V with the constant current value that was 20% relative to the capacity per unit area calculated from the theoretical capacity of the positive-electrode active material, followed by discharging down to 2.4 V with the constant current to perform initial charging and discharging. Further, the above-described charging and discharging were performed twice, and the capacity of the second discharge was measured as an initial capacity of the positive electrode per unit area.

In the similar manner, the negative electrode was also charged and discharged in the range of -0.55 V to 1.4 V with the current value that was 20% relative to the capacity per unit area calculated from the theoretical capacity of the negative-electrode active material.

<Preparation of liquid composition for forming resin structure>

The following materials were blended at the blending ratios presented below to prepare a liquid composition for forming an insulation layer.

<Liquid Composition 1>

2-Ethylhexanol (49.5% by mass)(available from Tokyo Chemical Industry Co., Ltd.) serving as a solvent, 50.0% by mass of Light Acrylate 4EG-A (available from KYOEISHA CHEMICAL Co., Ltd.) serving as a polymerizable compound, and 0.5% by mass of Omnirad 819 (previously known as IRGACURE 819, available from IGM Resins B.V.) serving as a polymerization initiator were mixed to prepare Insulation-Layer-Forming Liquid Composition 1.

[Distance between positive-electrode composite material layer and resin structure]

The distance d between the positive-electrode composite material layer and the resin structure (the width between the perimeter of the positive-electrode composite material layer and the resin structure) was determined as depicted in Figs. 16 and 17. The state where the positive-electrode composite material layer and the resin structure were next to each other as depicted in Fig. 16 was determined as 0, and the gap indicated by the arrows in Fig. 17 was determined as the distance d between the positive-electrode composite material layer and the resin structure.

In the case where the resin structure was overlapped with the side of the electrode composite material layer, the distance d was represented as a negative numeric value.

(Example 1-1)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between the positive-electrode composite material layer and a resin structure to be 0.5 mm and a width of the resin structure to be 10 mm.

Straight after the application of Resin Structure Forming Liquid Composition 1, the region where Resin Structure Forming Liquid Composition 1 had been applied was irradiated with UV light (light source: UV-LED (product name: FJ800, available from Phoseon Technology, Inc.), wavelength: 365 nm, irradiation intensity: 30 $mW/cm^2$, irradiation time: 20 seconds [s]) in a nitrogen atmosphere to cure Resin Structure Forming Liquid Composition 1. Next, the cured product was heated on a hotplate at 120°C for 1 minute to remove the solvent, to thereby prepare the positive electrode including the resin structure (referred to as a positive electrode-resin structure hereinafter) serving as an electrode stack. The average thickness of the resin structure was 123 μm (see Figs. 1 and 6A, and Table 1-1).

After sealing the positive electrode-resin structure by aluminum lamination, the positive electrode-resin structure was pressed by a cold isostatic press (CIP) at 500 MPa for 5 minutes. After pressing, the positive electrode-resin structure was removed from the aluminum laminate. A solid electrolyte layer was applied and formed on the positive electrode by bar coating to prepare an electrode stack (see Fig. 2). After the application, the resulting electrode stack was again sealed by aluminum lamination, followed by pressing by CIP at 500 MPa for 5 minutes. The positive electrode-resin structure and Negative Electrode 1 were arranged to face each other to form a single cell layer (see Fig. 3). After attaching leading wires to the electrodes, respectively, the resulting single cell layer was vacuum sealed by laminating to prepare Solid-State Battery Cell 1. The cell voltage of Solid-State Battery Cell 1 was measured, and was 2.04 V. As a capacity per unit area, the initial discharge capacity was 141 mAh/g. Constant-current charging was carried out without any problem up to 3.6 V with the current value that was 20% of the capacity per unit area calculated from the theoretical capacity of the positive-electrode active material, and no cracking nor short-circuiting occurred. The evaluation results are presented in Table 1-2.

(Example 1-2)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between the positive-electrode composite material layer and a resin structure to be 0 mm and a width of the resin structure to be 10 mm. The average thickness of the resin structure was 122 μm (see Figs. 1 and 6A, and Table 1-1).

Then, Solid-State Battery Cell 2 was produced in the same manner as in Example 1-1. The cell voltage of Solid-State Battery Cell 2 was measured, and was 2.06 V. Thereafter, constant-current charging could be carried out without

any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-3)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between the positive-electrode composite material layer and a resin structure to be -0.5 mm and a width of the resin structure to be 10 mm. The average thickness of the resin structure was 121 μm (see Figs. 1 and 6A, and Table 1-1).

Then, Solid-State Battery Cell 3 was produced in the same manner as in Example 1-1. The cell voltage of Solid-State Battery Cell 3 was measured, and was 2.04 V. Thereafter, constant-current charging could be carried out without any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-4)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0.5 mm and a width of the resin structure to be 10 mm.

Straight after the application of Resin Structure Forming Liquid Composition 1, the region where Resin Structure Forming Liquid Composition 1 had been applied was irradiated with UV light (light source: UV-LED (product name: FJ800, available from Phoseon Technology, Inc.), wavelength: 365 nm, irradiation intensity: 30 mW/$cm^2$, irradiation time: 20 s) in a nitrogen atmosphere to cure Resin Structure Forming Liquid Composition 1. Next, the cured product was heated on a hotplate at 120°C for 1 minute to remove the solvent, to thereby prepare a positive electrode-resin structure. The average thickness of the resin structure was 121 μm (see Figs. 1 and 4, and Table 1-1).

After sealing the positive electrode-resin structure by aluminum lamination, the positive electrode-resin structure was pressed by a cold isostatic press (CIP) at 500 MPa for 5 minutes. After pressing, the positive electrode-resin structure was removed from the aluminum laminate. A solid electrolyte layer was applied and formed on the positive electrode by bar coating to prepare an electrode stack (see Fig. 2). After the application, the resulting electrode stack was again sealed by aluminum lamination, followed by pressing by CIP at 500 MPa for 5 minutes. The positive electrode-resin structure and Negative Electrode 2 were arranged to face each other to form a single cell layer (see Fig. 3). After attaching leading wires to the electrodes, respectively, the resulting single cell layer was vacuum sealed by laminating to prepare Solid-State Battery Cell 4. The cell voltage of Solid-State Battery Cell 4 was measured, and was 2.05 V. Thereafter, constant-current charging could be carried out without any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-5)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0 mm and a width of the resin structure to be 10 mm. The average thickness of the resin structure was 123 μm (see Figs. 1 and 4, and Table 1-1).

Then, Solid-State Battery Cell 5 was produced in the same manner as in Example 1-1. The cell voltage of Solid-State Battery Cell 5 was measured, and the result was 2.07 V. Thereafter, constant-current charging could be carried out without any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-6)

An inkjet device equipped with an inkjet head (MH5421F, available from Ricoh Industry Company, Ltd.) was

charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be -0.5 mm and a width of the resin structure to be 10 mm. The average thickness of the resin structure was 119 μm (see Figs. 1 and 4, and Table 1-1).

Then, Solid-State Battery Cell 6 was produced in the same manner as in Example 1-1. The cell voltage of Solid-State Battery Cell 6 was measured, and was 2.01 V. Thereafter, constant-current charging could be carried out without any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-7)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0.5 mm and a width of the resin structure to be 5 mm. The average thickness of the resin structure was 120 μm (see Figs. 1 and 4, and Table 1-1).

Then, Solid-State Battery Cell 7 was produced in the same manner as in Example 1-1. The cell voltage of Solid-State Battery Cell 7 was measured, and was 2.03 V. Thereafter, constant-current charging could be carried out without any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-8)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0.5 mm and a width of the resin structure to be 10 mm. The average thickness of the resin structure was 95 μm (see Figs. 1 and 4, and Table 1-1).

Then, Solid-State Battery Cell 8 was produced in the same manner as in Example 1-1. The cell voltage of Solid-State Battery Cell 8 was measured, and was 2.08 V. Thereafter, constant-current charging could be carried out without any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-9)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0.5 mm and a width of the resin structure to be 10 mm. The average thickness of the resin structure was 92 μm (see Figs. 1 and 4, and Table 1-1).

Then, Solid-State Battery Cell 9 was produced in the same manner as in Example 1-1. The cell voltage of Solid-State Battery Cell 9 was measured, and was 2.09 V. Thereafter, constant-current charging could be carried out without any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-10)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0.5 mm and a width of the resin structure to be 10 mm. The average thickness of the resin structure was 112 μm (see Figs. 1 and 4, and Table 1-1).

Then, Solid-State Battery Cell 10 was produced in the same manner as in Example 1-1. The cell voltage of Solid-State Battery Cell 10 was measured, and was 2.08 V. Thereafter, constant-current charging could be carried out

without any problem up to 3.6 V with a current value that was 20% of the capacity per unit area calculated from a theoretical volume of the positive-electrode active material, and no cracking or short-circuiting was observed. The evaluation results are presented in Table 1-2.

(Example 1-11)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0.5 mm and a width of the resin structure to be 10 mm. The average thickness of the resin structure was 108 μm (see Figs. 1 and 4, and Table 1-1).

A positive electrode-resin structure was produced, followed by producing an electrode stack in the same manner as in Example 1-1. After sealing Negative Electrode 3 by aluminum lamination, Negative Electrode 3 was pressed by CIP at 500 MPa for 5 minutes. The positive electrode-resin structure and Negative Electrode 3 were arranged to face each other to form a single cell layer. After attaching leading wires to the electrodes, respectively, the resulting single cell layer was vacuum sealed by laminating to prepare Solid-State Battery Cell 11. The cell voltage of Solid-State Battery Cell 11 was measured, and was 2.67 V. Thereafter, constant-current charging could be carried out without any problem up to 4.2 V with a current value that was 20% of the capacity per unit area calculated from a theoretical volume of the positive-electrode active material, and no cracking or short-circuiting was observed. The evaluation results are presented in Table 1-2.

(Example 1-12)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0.5 mm and a width of the resin structure to be 10 mm. The average thickness of the resin structure was 105 μm (see Figs. 1 and 4, and Table 1-1).

A positive electrode-resin structure was produced, followed by producing an electrode stack in the same manner as in Example 1-1. After sealing Negative Electrode 4 by aluminum lamination, Negative Electrode 4 was pressed by CIP at 500 MPa for 5 minutes. The positive electrode-resin structure and Negative Electrode 4 were arranged to face each other to form a single cell layer. After attaching leading wires to the electrodes, respectively, the resulting single cell layer was vacuum sealed by laminating to prepare Solid-State Battery Cell 12. The cell voltage of Solid-State Battery Cell 12 was measured, and was 2.61 V. Thereafter, constant-current charging could be carried out without any problem up to 4.2 V with a current value that was 20% of the capacity per unit area calculated from a theoretical volume of the positive-electrode active material, and no cracking or short-circuiting was observed. The evaluation results are presented in Table 1-2.

(Example 1-13)

An inkjet device equipped with an inkjet head (MH5421F, available from Ricoh Industry Company, Ltd.) was charged with Resin Structure Forming Liquid Composition 1. Positive Electrode 1 was set on a stage, and Resin Structure Forming Liquid Composition 1 was ejected and applied onto Positive Electrode 1 by setting the distance d between each of the two sides of the positive-electrode composite material layer and a resin structure to be 0.5 mm and a width of the resin structure to be 10 mm. The average thickness of the resin structure was 98 μm (see Figs. 1 and 4, and Table 1-1).

Straight after the application of Resin Structure Forming Liquid Composition 1, the region where Resin Structure Forming Liquid Composition 1 had been applied was irradiated with UV light (light source: UV-LED (product name: FJ800, available from Phoseon Technology, Inc.), wavelength: 365 nm, irradiation intensity: 30 mW/cm$^2$, irradiation time: 20 s) in a nitrogen atmosphere to cure Resin Structure Forming Liquid Composition 1. Next, the cured product was heated on a hotplate at 120°C for 1 minute to remove the solvent, to thereby prepare a positive electrode-resin structure. The average thickness of the resin structure was 98 μm.

A solid electrolyte layer was applied and formed on the positive electrode by bar coating to prepare an electrode stack. After the application, the electrode stack was sealed by aluminum lamination, followed by pressing by CIP at 500 MPa for 5 minutes. The positive electrode-resin structure and Negative Electrode 2 were arranged to face each other to form a single cell layer. After attaching leading wires to the electrodes, respectively, the resulting single cell layer was vacuum sealed by laminating to prepare Solid-State Battery Cell 13. The cell voltage of Solid-State Battery Cell 13 was measured, and was 2.09 V. Thereafter, constant-current charging could be carried out without any problem up to 3.6 V with a current value that was 20% of the capacity per unit area calculated from a theoretical volume of the positive-electrode active material, and no cracking or short-circuiting was observed. The evaluation results are presented in Table 1-2.

(Comparative Example 1-1)

After sealing Positive Electrode 1 by aluminum lamination, Positive Electrode 1 was pressed by a cold isostatic press (CIP) at 500 MPa for 5 minutes. After pressing, Positive Electrode 1 was removed from the aluminum laminate.

A solid electrolyte layer was applied by bar coating to prepare an electrode stack. After the application, the resulting electrode stack was again sealed by aluminum lamination, followed by pressing by CIP at 500 MPa for 5 minutes. The electrode stack and Negative Electrode 1 were arranged to face each other to form a single cell layer. After attaching leading wires to the electrodes, respectively, the single cell layer was vacuum sealed by laminating to prepare a solid-state battery cell of Comparative Example 1-1.

The cell voltage of the produced solid-state battery cell was measured. The cell voltage as measured was 0.11 V, and the tendency of short-circuiting was observed. Thereafter, the solid-state battery cell was charged up to 3.6 V by constant-current charging with the current value that was 20% of the capacity per unit area calculated from the theoretical capacity of the positive-electrode active material. However, the charge did not reach 3.6 V.

After pressing, the cell was disassembled. As a result, cracks were observed in the solid electrolyte layer. It was assumed that the voltage was reduced to approximately 0 V because of the cracks in the solid electrolyte layer. The evaluation results are presented in Table 1-2.

(Comparative Example 1-2)

Positive Electrode 1 was disposed, and a non-continuous porous polycarbonate film (polycarbonate track-etched (PCTE) membrane 1223036, available from GVS Japan K.K.) was arranged and disposed on Positive Electrode 1 so that the distance d between the polycarbonate film and the positive-electrode composite material layer was 0.5 mm, the width was 10 mm, and the average thickness was 100 μm, to thereby prepare a positive electrode having a resin structure that did not have a bicontinuous structure (see Figs. 1 and 6A, and Table 1-1).

After sealing the positive electrode-resin structure by aluminum lamination, the positive electrode-resin structure was pressed by a cold isostatic press (CIP) at 500 MPa for 5 minutes. After pressing, the positive electrode-resin structure was removed from the aluminum laminate. A solid electrolyte layer was applied and formed on the positive electrode by bar coating to prepare an electrode stack that did not have a bicontinuous structure (see Fig. 2). After the application, the resulting electrode stack was again sealed by aluminum lamination, followed by pressing by CIP at 500 MPa for 5 minutes. The positive electrode-resin structure and Negative Electrode 1 were arranged to face each other to form a single cell layer (see Fig. 3). After attaching leading wires to the electrodes, respectively, the resulting single cell layer was vacuum sealed by laminating to prepare a solid-state battery cell of Comparative Example 1-2. The cell voltage of the produced solid-state battery cell was measured. The cell voltage as measured was 0.51 V, and the tendency of short-circuiting was observed. Thereafter, the solid-state battery cell was charged up to 3.6 V by constant-current charging with the current value that was 20% of the capacity per unit area calculated from the theoretical capacity of the positive-electrode active material. However, the charge did not reach 3.6 V.

After pressing, the cell was disassembled. As a result, cracks were observed in the solid electrolyte layer. It was assumed that the voltage was reduced to approximately 0 V because of the cracks in the solid electrolyte layer. The evaluation results are presented in Table 1-2.

[Table 1-1]

| | Positive Electrode | Solid Electrolyte | Negative Electrode | Resin Structure |
|---|---|---|---|---|
| Ex. 1-1 | 1 | 1 | 1 | Fig. 6A (bicontinuous structure) |
| Ex. 1-2 | 1 | 1 | 1 | Fig. 6A (bicontinuous structure) |
| Ex. 1-3 | 1 | 1 | 1 | Fig. 6A (bicontinuous structure) |
| Ex. 1-4 | 1 | 1 | 2 | Fig. 4 (bicontinuous structure) |
| Ex. 1-5 | 1 | 1 | 2 | Fig. 4 (bicontinuous structure) |
| Ex. 1-6 | 1 | 1 | 2 | Fig. 4 (bicontinuous structure) |
| Ex. 1-7 | 1 | 1 | 2 | Fig. 4 (bicontinuous structure) |
| Ex. 1-8 | 1 | 1 | 2 | Fig. 4 (bicontinuous structure) |

(continued)

| | Positive Electrode | Solid Electrolyte | Negative Electrode | Resin Structure |
|---|---|---|---|---|
| Ex. 1-9 | 1 | 1 | 2 | Fig. 4 (bicontinuous structure) |
| Ex. 1-10 | 2 | 1 | 2 | Fig. 4 (bicontinuous structure) |
| Ex. 1-11 | 1 | 1 | 3 | Fig. 4 (bicontinuous structure) |
| Ex. 1-12 | 1 | 1 | 4 | Fig. 4 (bicontinuous structure) |
| Ex. 13 | 1 | 1 | 2 | Fig. 4 (bicontinuous structure) |
| Comp. Ex. 1-1 | 1 | 1 | 2 | - |
| Comp. Ex. 1-2 | 1 | 1 | 1 | Fig. 6A (non-bicontinuous structure) |

[Table 1-2-1]

| | Before press | | After press | | |
|---|---|---|---|---|---|
| | Thickness of positive-electrode composite material layer | Thickness of resin structure | Thickness of positive-electrode composite material layer (A) | Thickness of resin structure (B) | B/A |
| | μm | μm | μm | Mm | % |
| Ex. 1-1 | 95 | 123 | 83 | 84 | 1.01 |
| Ex. 1-2 | 95 | 122 | 84 | 85 | 1.01 |
| Ex. 1-3 | 95 | 121 | 84 | 85 | 1.01 |
| Ex. 1-4 | 95 | 121 | 83 | 84 | 1.01 |
| Ex. 1-5 | 95 | 123 | 84 | 84 | 1.00 |
| Ex. 1-6 | 95 | 119 | 83 | 85 | 1.02 |
| Ex. 1-7 | 95 | 120 | 82 | 83 | 1.01 |
| Ex. 1-8 | 95 | 95 | 83 | 82 | 0.99 |
| Ex. 1-9 | 95 | 92 | 84 | 85 | 1.01 |
| Ex. 1-10 | 97 | 112 | 88 | 86 | 0.98 |
| Ex. 1-11 | 95 | 108 | 83 | 84 | 1.01 |
| Ex. 1-12 | 95 | 105 | 82 | 82 | 1.00 |
| Ex. 1-13 | 95 | 98 | 84 | 85 | 1.01 |
| Comp. Ex. 1-1 | 95 | - | 83 | - | - |
| Comp. Ex. 1-2 | 95 | 100 | 88 | 98 | 1.14 |

[Table 1-2-2]

| | Distance d between positive-electrode composite material layer | Width of resin structure | Open circuit voltage | Formation of cracks | Constant current charging | Short-circuits |
|---|---|---|---|---|---|---|
| | mm | mm | V | | | |
| Ex. 1-1 | 0.5 | 10 | 2.04 | None | Good | None |
| Ex. 1-2 | 0 | 10 | 2.06 | None | Good | None |
| Ex. 1-3 | -0.5 | 10 | 2.04 | None | Good | None |
| Ex. 1-4 | 0.5 | 10 | 2.05 | None | Good | None |
| Ex. 1-5 | 0 | 10 | 2.07 | None | Good | None |
| Ex. 1-6 | -0.5 | 10 | 2.01 | None | Good | None |
| Ex. 1-7 | 0.5 | 5 | 2.03 | None | Good | None |
| Ex. 1-8 | 0.5 | 10 | 2.08 | None | Good | None |
| Ex. 1-9 | 0.5 | 10 | 2.09 | None | Good | None |
| Ex. 1-10 | 0.5 | 10 | 2.08 | None | Good | None |
| Ex. 1-11 | 0.5 | 10 | 2.67 | None | Good | None |
| Ex. 1-12 | 0.5 | 10 | 2.61 | None | Good | None |
| Ex. 1-13 | 0.5 | 10 | 2.09 | None | Good | None |
| Comp. Ex. 1-1 | - | - | 0.11 | Observed | Not good | Observed |
| Comp. Ex. 1-2 | 0.5 | 10 | 0.51 | Observed | Not good | Observed |

Examples each using [First embodiment of liquid composition] will be described hereinafter.

[Evaluation of resistance of sulfide solid electrolyte against non-aqueous solvent]

Each of the non-aqueous solvents presented in Table 2-1 was dried using 4A molecular sieves (available from FUJIFILM Wako Pure Chemical Corporation) in an argon atmosphere within a globe box, until a moisture content reached 5 ppm or less. Subsequently, 1 part by mass of a sulfide solid electrolyte $Li_6PS_5Cl$ was added to 9.0 parts by mass of the non-aqueous solvent, and the resulting mixture was left to stand at room temperature for 1 week. After the standing, the non-aqueous solvent was separated by vacuum filtration, the residual component was washed with dehydrated heptane of 5 ppm or less on the vacuum filter to obtain a cake. The obtained cake was heated and dried in the globe box at 150°C for 1 hour, to thereby obtain $Li_6PS_5Cl$ that been subjected to the solvent treatment.
The obtained $Li_6PS_5Cl$ (60 mg) was pressed at 364 MPa to prepare a pellet having a diameter of 5 mm. The ionic conductivity of the pellet was measured by Solatoron Analytical 1400 (available from Solatoron Analytical).
The ionic conductivity of the sulfide solid electrolyte measured without being immersed in the solvent was 2.40 S/m. When the ionic conductivity was reduced by the numerical value of one decimal or greater, the result was judged as "not good" as the sulfide solid electrolyte could not be used in practice. The results other than the above-mentioned reduction rate were judged as "good" as there was no problem in actual use.
The measurement values of the ionic conductivity and evaluation results are presented in Table 2-1.

[Calculation of difference in Milliken charge]

When each of the non-aqueous solvents presented in Table 2-1 was tertiary alcohol, a difference (ΔMilliken(O-H)) between the Milliken charge of the hydrogen atom in the hydroxyl group and the Milliken charge of the oxygen atom

in the hydroxyl group was determined. When the non-aqueous solvent was primary or secondary amine, a difference (ΔMilliken(N-H)) between the Milliken charge of the hydrogen atom in the amino group and the Milliken charge of the nitrogen atom in the amino group was determined.

When the non-aqueous solvent was a primary amine where two hydrogen atoms were present adjacent to a nitrogen atom, a difference between the average value of the Milliken charges of the two hydrogen atoms and the Milliken charge of the nitrogen atom was determined as the difference (ΔMilliken(N-H)) of the Milliken charge.

As the Milliken charge, an amount of atomic electric charge determined by calculating with MOPAC7 (Hamiltonian was AM1) using Winmostar v11.1.2 (available from X-Ability Co., Ltd.).

The differences of the Milliken charges are presented in Table 2-1.

Moreover, the non-aqueous solvents used in Table 2-1 and the names of the manufacturers of the non-aqueous solvents are presented in Table 2-2.

[Table 2-1]

| Non-aqueous solvent | Difference in Milliken charge | Ionic conductivity | |
|---|---|---|---|
| | | Measurement value [S/m] | Evaluation |
| Linalool | 0.5270 | 2.02 | Good |
| Tetrahydrolinalool | 0.5251 | 1.95 | Good |
| 2,3-dimethyl-2-hexanol | 0.5247 | 1.99 | Good |
| 2-methyl-1-phenyl-2-propanol | 0.5222 | 1.83 | Good |
| tert-amyl alcohol | 0.5206 | 1.73 | Good |
| Dihydroterpineol | 0.5171 | 0.18 | Not good |
| 3-methyl-3-pentanol | 0.5161 | 0.21 | Not good |
| Dihydrolinalool | 0.5138 | 0.15 | Not good |
| 1-octanol | 0.5264 | 0.11 | Not good |
| 3,3-dimethyl-2-butanol | 0.5192 | 0.21 | Not good |
| 1,1,3,3-tetramethylbutylamine | 0.5001 | 1.52 | Good |
| tert-amylamine | 0.4716 | 1.61 | Good |
| tert-butylamine | 0.4692 | 0.21 | Not good |

[Table 2-2]

| Non-aqueous solvent | Name of manufacturer |
|---|---|
| Linalool | Tokyo Chemical Industry Co., Ltd. |
| Tetrahydrolinalool | FUJIFILM Wako Pure Chemical Corporation |
| 2,3-dimethyl-2-hexanol | Tokyo Chemical Industry Co., Ltd. |
| 2-methyl-1-phenyl-2-propanol | Tokyo Chemical Industry Co., Ltd. |
| tert-amyl alcohol | Tokyo Chemical Industry Co., Ltd. |
| Dihydroterpineol | NIPPON TERPENE CHEMICALS, INC. |
| 3-methyl-3-pentanol | Tokyo Chemical Industry Co., Ltd. |
| Dihydrolinalool | Tokyo Chemical Industry Co., Ltd. |
| 1-octanol | Tokyo Chemical Industry Co., Ltd. |
| 3,3-dimethyl-2-butanol | Tokyo Chemical Industry Co., Ltd. |
| 1,1,3,3-tetramethylbutylamine | Tokyo Chemical Industry Co., Ltd. |
| tert-amylamine | Tokyo Chemical Industry Co., Ltd. |

(continued)

| Non-aqueous solvent | Name of manufacturer |
|---|---|
| tert-butylamine | Tokyo Chemical Industry Co., Ltd. |

It was found from the results above that, when the tertiary alcohol-based solvent had ΔMilliken of less than 0.520 and the amine-based solvent had ΔMilliken of 0.470, ionic conductivity was significantly reduced, and such solvents could not be suitably used in practice as the solvents did not have a desirable resistance to a sulfide solid electrolyte.
When the tertiary alcohol-based solvent had ΔMilliken of 0.520 or greater, and the amine-based solvent had ΔMilliken of 0.470 or greater, on the other hand, reduction in ionic conductivity was suppressed so that such solvents had a sulfide solid electrolyte resistance.

(Example 2-1)

<Production of resin insulation layer>

<<Preparation of liquid composition>>

As presented in Table 2-3, 50 parts by mass of NK Ester A-400 (available from SHIN-NAKAMURA CHEMICAL CO., LTD.) serving as a polymerizable compound, 50 parts by mass of tetrahydrolinalool (available from FUJIFILM Wako Pure Chemical Corporation) serving as a non-aqueous solvent, and a polymerization initiator were mixed to prepare a liquid composition of Example 2-1. As the polymerization initiator, 1% by mass (0.5 parts by mass) of 1-benzoylcyclohexanol (available from Tokyo Chemical Industry Co., Ltd.) was used relative to a total amount of the polymerizable compound.
The polymerizable compound used and the name of the manufacturer are presented in Table 2-4.

<<Production of resin insulation layer for evaluation of curling>>

The liquid composition was applied on an entire region of one face of an aluminum foil substrate (50 mm × 50 mm, average thickness: 20 μm) by a bar coater. Subsequently, the region where the liquid composition had been applied was irradiated with UV light (light source: UV-LED (product name: FJ800, available from Phoseon Technology, Inc.), wavelength: 365 nm, irradiation intensity: 30 $mW/cm^2$, irradiation time: 20 s) to cure the liquid composition. The cured product was then heated on a hotplate at 120°C for 1 minute to remove the solvent, to thereby obtain a resin insulation layer of Example 2-1.

[Evaluation of curling of resin insulation layer]

In the state where one side among four sides of the obtained resin insulation layer was attached on the horizontal plane, the maximum value in height of the curl at three other sides was measured as an evaluation value. The evaluation value was evaluated based on the following evaluation criteria to evaluate curling. The result is presented in Table 2-3.

-Evaluation criteria-

Good: The curl evaluation value was 3 mm or less, and the result was excellent.
Fair: The curl evaluation value was greater than 3 mm and 5 mm or less, and the resin insulation layer was slightly curled, which was not problematic in actual use.
Not good: The curl evaluation value was greater than 5 mm, and the resin insulation layer was notably curled, which was problematic in actual use.

(Examples 2-2 to 2-23 and Comparative Examples 2-1 to 2-4)

Liquid compositions and resin insulation layers of Examples 2-2 to 2-23 and Comparative Examples 2-1 to 2-4 were each produced and evaluated for curling in the same manner as in Example 2-1, except that the formulation was changed as presented in Table 2-3. As the polymerization initiator, 1% by mass (0.5 parts by mass) of 1-benzoylcyclohexanol (available from Tokyo Chemical Industry Co., Ltd.) was used relative to a total amount of the polymerizable compound. The results are presented in Table 2-3.

[Table 2-3]

| | Polymerizable compound | | Non-aqueous solvent | Curl evaluation |
|---|---|---|---|---|
| | type | amount | | |
| Ex. 2-1 | NK Ester A-400 | 50 | tetrahydrolinalool | Good |
| Ex. 2-2 | NK Ester A-600 | 50 | tetrahydrolinalool | Fair |
| Ex. 2-3 | 1,4-bis(acryloyloxy)butane | 50 | tetrahydrolinalool | Good |
| Ex. 2-4 | 1,6-bis(acryloyloxy)hexane | 50 | tetrahydrolinalool | Fair |
| Ex. 2-5 | neopentyl glycol diacrylate | 50 | tetrahydrolinalool | Good |
| Ex. 2-6 | Light Acrylate MPD-A | 50 | tetrahydrolinalool | Fair |
| Ex. 2-7 | NK Ester ABE-300 | 50 | tetrahydrolinalool | Fair |
| Ex. 2-8 | Light Acrylate BP-4EL | 50 | tetrahydrolinalool | Fair |
| Ex. 2-9 | NK Ester A-BPE-10 | 50 | tetrahydrolinalool | Fair |
| Ex. 2-10 | NK Ester A-BPE-20L | 50 | tetrahydrolinalool | Fair |
| Ex. 2-11 | Viscoat #230D | 50 | tetrahydrolinalool | Good |
| Ex. 2-12 | NK Ester A-TMPT-3EO | 50 | tetrahydrolinalool | Fair |
| Ex. 2-13 | NK Ester A-TMPT-9EO | 50 | tetrahydrolinalool | Fair |
| Ex. 2-14 | NK Ester AD-TMP-4E | 50 | tetrahydrolinalool | Fair |
| Ex. 2-15 | NK Ester A-400 | 30 | tetrahydrolinalool | Fair |
| Ex. 2-16 | NK Ester A-400 | 40 | tetrahydrolinalool | Fair |
| Ex. 2-17 | NK Ester A-400 | 60 | tetrahydrolinalool | Fair |
| Ex. 2-18 | NK Ester A-200 | 50 | tetrahydrolinalool | Good |
| Ex. 2-19 | NK Ester A-200 | 50 | Linalool | Good |
| Ex. 2-20 | NK Ester A-200 | 50 | 2,3-dimethyl-2-hexanol | Good |
| Ex. 2-21 | NK Ester A-200 | 50 | 2-methyl-1-phenyl-2-propanol | Good |
| Ex. 2-22 | NK Ester A-200 | 50 | tert-amyl alcohol | Good |
| Comp. Ex. 2-1 | NK Ester A-200 | 100 | no solvent | Not good |
| Comp. Ex. 2-2 | NK Ester A-400 | 100 | no solvent | Not good |
| Comp. Ex. 2-3 | NK Ester A-TMPT-9EO | 100 | no solvent | Not good |
| Comp. Ex. 2-4 | NK Ester AD-TMP-4E | 100 | no solvent | Not good |

[Table 2-4]

| Polymerizable compound | Name of manufacturer |
|---|---|
| NK Ester A-200 | SHIN-NAKAMURA CHEMICAL Co., Ltd. |
| NK Ester A-400 | SHIN-NAKAMURA CHEMICAL Co., Ltd. |
| NK Ester A-600 | SHIN-NAKAMURA CHEMICAL Co., Ltd. |
| NK Ester ABE-300 | SHIN-NAKAMURA CHEMICAL Co., Ltd. |
| NK Ester A-BPE-10 | SHIN-NAKAMURA CHEMICAL Co., Ltd. |
| NK Ester A-BPE-20L | SHIN-NAKAMURA CHEMICAL Co., Ltd. |
| NK Ester A-TMPT-3EO | SHIN-NAKAMURA CHEMICAL Co., Ltd. |

(continued)

| Polymerizable compound | Name of manufacturer |
|---|---|
| NK Ester A-TMPT-9EO | SHIN-NAKAMURA CHEMICAL Co., Ltd. |
| NK Ester AD-TMP-4E | SHIN-NAKAMURA CHEMICAL Co., Ltd. |
| 1,4-bis(acryloyloxy)butane | Tokyo Chemical Industry Co., Ltd. |
| 1,6-bis(acryloyloxy)hexane | Tokyo Chemical Industry Co., Ltd. |
| neopentyl glycol diacrylate | Tokyo Chemical Industry Co., Ltd. |
| Light Acrylate MPD-A | KYOEISHA CHEMICAL CO., LTD. |
| Light Acrylate BP-4EL | KYOEISHA CHEMICAL CO., LTD. |
| Viscoat #230D | OSAKA ORGANIC CHEMICAL INDUSTRY LTD. |

It was found from the above results that the resin insulation layer was curled less when the liquid composition included the non-aqueous solvent, and curling of the resulting resin insulation layer was an excellent level or a level that did not cause any problem in actual use. In Examples 2-15 to 2-17, the curling of the resin insulation layer was increased by reduction in the amount of the non-aqueous solvent, or reduction in the amount of the polymerizable compound, but the curling of the resulting resin insulation layer was a level that did not cause any problem in actual use. When the liquid composition did not include the non-aqueous solvent as in Comparative Examples 2-1 to 2-4, on the other hand, curling of the resulting resin insulation layer was a level that caused a problem in actual use.

(Example 2-24)

An electrode including a resin insulation layer, an electrode stack, and a solid-state battery cell serving as an electrochemical element were produced, and battery characteristics were evaluated in the following manner.

<Production of electrode>

An inkjet device equipped with an inkjet head (MH5421F, available from Ricoh Industry Company, Ltd.) was charged with the liquid composition of Example 2-1. Positive Electrode 1 was set on a stage, and the liquid composition was ejected and applied onto Positive Electrode 1 by setting the distance d between the positive-electrode composite material layer and a resin insulation layer to be 0.5 mm and a width of the resin insulation layer to be 10 mm.

Straight after the application of the liquid composition, the region where the liquid composition had been applied was irradiated with UV light (light source: UV-LED (product name: FJ800, available from Phoseon Technology, Inc.), wavelength: 365 nm, irradiation intensity: 30 mW/cm$^2$, irradiation time: 20 s) in a nitrogen atmosphere to cure the liquid composition. Next, the cured product was heated on a hotplate at 120°C for 1 minute to remove the solvent, to thereby prepare an electrode of Example 2-24 (see Figs. 1 and 6A).

The average thickness of the resin insulation layer was 124 $\mu$m. The curl of the resin insulation layer was 0 mm.

In the state where one side among four sides of the obtained electrode was attached on the horizontal plane, the maximum value in height of the curl of the resin insulation layer in the electrode at three other sides was measured as an evaluation value.

After sealing the electrode with aluminum lamination, the electrode was pressed by a cold isostatic press (CIP) at 500 MPa for 5 minutes. After the pressing, the electrode was taken out from the aluminum laminate. A solid electrolyte layer was applied onto Positive Electrode 1 by bar coating, to thereby obtain an electrode stack of Example 2-24 (see Fig. 2A).

After the application, the resulting electrode stack was again sealed by aluminum lamination, followed by pressing at 500 MPa for 5 minutes. The electrode and the negative electrode were arranged to face each other to form a single cell layer (see Fig. 3). After attaching leading wires, the resulting stack was vacuum sealed by laminating to prepare a solid-state battery cell as an electrochemical element of Example 2-24.

The voltage of the produced solid-state battery cell was measured as described in [Measurement method for capacity of electrode per unit area]. The result was 2.04 V. As the capacity per unit area, the initial discharge capacity was 141 mAh/g. The solid-state battery cell could be charged up to 3.6 with the constant current value that was 20% relative to the capacity per unit area calculated from the theoretical capacity of the positive-electrode active material. The constant-current charging was carried out without any problem and short-circuiting did not occur.

(Example 2-25)

An inkjet device equipped with an inkjet head (MH5421F, available from Ricoh Industry Company, Ltd.) was charged with the liquid composition of Example 2-5. Positive Electrode 1 was set on a stage, and the liquid composition was ejected and applied onto Positive Electrode 1 by setting the distance d between the positive-electrode composite material layer and a resin insulation layer to be 0.5 mm and a width of the resin insulation layer to be 10 mm. The average thickness of the resin insulation layer was 113 μm. The curl of the resin insulation layer was 0 mm (see Figs. 1 and 6A).

The electrode of Example 2-25, an electrode stack, and a solid-state battery cell serving as an electrochemical element were produced in the same manner as in Example 2-24.

The voltage of the produced solid-state battery cell was measured. The result was 2.09 V. Thereafter, the solid-state battery cell was charged up to 3.6 V with the constant current value that was 20% relative to the capacity per unit area calculated from the theoretical capacity of the positive-electrode active material. The constant-current charging was carried out without any problem and short-circuiting did not occur.

(Example 2-26)

An inkjet device equipped with an inkjet head (MH5421F, available from Ricoh Industry Company, Ltd.) was charged with the liquid composition of Example 2-11. Positive Electrode 1 was set on a stage, and the liquid composition was ejected and applied onto Positive Electrode 1 by setting the distance d between the positive-electrode composite material layer and a resin insulation layer to be 0.5 mm and a width of the resin insulation layer to be 10 mm. The average thickness of the resin insulation layer was 121 μm. The curl of the resin insulation layer was 0 mm (see Figs. 1 and 6A).

The electrode of Example 2-26, an electrode stack, and a solid-state battery cell serving as an electrochemical element were produced in the same manner as in Example 2-24.

The voltage of the produced solid-state battery cell was measured. The result was 2.09 V. Thereafter, the solid-state battery cell was charged up to 3.6 V with the constant current value that was 20% relative to the capacity per unit area calculated from the theoretical capacity of the positive-electrode active material. The constant-current charging was carried out without any problem and short-circuiting did not occur.

(Comparative Example 2-5)

An inkjet device equipped with an inkjet head (MH5421F, available from Ricoh Industry Company, Ltd.) was charged with the liquid composition of Comparative Example 2-1. Positive Electrode 1 was set on a stage, and the liquid composition was ejected and applied onto Positive Electrode 1 by setting the distance d between the positive-electrode composite material layer and a resin insulation layer to be 0.5 mm and a width of the resin insulation layer to be 10 mm. The average thickness of the resin insulation layer was 112 μm. The curl of the resin insulation layer was 4 mm.

The electrode of Comparative Example 2-5, an electrode stack, and a solid-state battery cell serving as an electrochemical element were produced in the same manner as in Example 2-24.

The voltage of the produced solid-state battery cell was measured. The result was 0.11 V, and short-circuiting tended to occur. Thereafter, the solid-state battery cell was charged up to 3.6 V with the constant current value that was 20% relative to the capacity per unit area calculated from the theoretical capacity of the positive-electrode active material. However, the charging could not be performed up to 3.6 V.

After the pressing, the cell was disassembled. As a result, cracks were observed in the solid electrolyte layer. It was assumed that the voltage was reduced to around 0 V due to the cracks in the solid electrolyte layer.

Examples each using [Second embodiment of liquid composition] will be described hereinafter.

(Example 3-1)

<Preparation of liquid composition>

As presented in Table 3-1, 50 parts by mass of NK Ester A-HD-N (available from SHIN-NAKAMURA CHEMICAL CO., LTD.) serving as a polymerizable compound and 50 parts by mass of p-menthane (available from FUJIFILM Wako Pure Chemical Corporation) serving as a solvent were mixed, followed by mixing the resulting mixture with 1% by mass(0.5 parts by mass) of bis(2,4,6-trimethylbenzoyl)phenylphosphate (available from IGM Resins B.V.) serving as a polymerization initiator relative to a total amount of the polymerizable compound, to thereby prepare a liquid composition of Example 3-1.

The name of the manufacturer, compound name, HPS parameters, etc. of the used polymerizable compound are presented in Table 3-6. The name of the manufacturer, compound name, HPS parameters, etc. of the used solvent are presented in Table 3-7.

<Production of resin insulation layer for evaluation of curling>

The liquid composition was applied on an entire region of one face of an aluminum foil substrate (50 mm × 50 mm, average thickness: 20 μm) by a bar coater. Subsequently, the region where the liquid composition had been applied was irradiated with UV light (light source: UV-LED (product name: FJ800, available from Phoseon Technology, Inc.), wavelength: 365 nm, irradiation intensity: 30 mW/cm$^2$, irradiation time: 20 s) to cure the liquid composition. Next, the cured product was heated on a hotplate at 120°C for 1 minute to remove the solvent, to thereby obtain a resin insulation layer of Example 3-1 having the intended average thickness of 100 μm.

In each of Examples and Comparative Examples, a compatibility index (solubility index) $\Delta HSP^2$, evaluation of curling, and capacity rate characteristics of a secondary battery cell, were calculated, measured, or evaluated in the following manner.

[Calculation of HSP and compatibility index $\Delta HSP^2$]

For the HSP of the solvent, the database of the Hansen Solubility Parameters Software (Hansen Solubility Parameters in Practice, Hansen-Solubility.com) was referred to. When the HSP of the solvent for use could not be found in the database, the HSP of the solvent was calculated from the molecular structure of the solvent using the DIY function of the HSPiP software.

The HSP of the polymerizable compound was calculated from the molecular structure of the polymerizable compound using the DIY function of the HSPiP software. When the polymerizable compound had a molecular weight distribution, such that the number of the repeating units in the polymerizable compound varied, HSP was calculated from the molecular structure of the polymerizable compound A closest to the molecular structure of the polymerizable compound A having the number average molecular weight.

The HSP of the liquid composition was calculated from the HSP of the polymerizable compound and the HSP of the solvent in the following manner.

Polymerizable compound

$$\text{HSP: } (\delta_D^A,\ \delta_P^A,\ \delta_H^A) \qquad \text{volume fraction: } X^A$$

Solvent B

$$\text{HSP: } (\delta_D^B,\ \delta_P^B,\ \delta_H^B) \qquad \text{volume fraction: } X^B$$

Liquid composition

$$\text{HSP: } (\delta_D^C,\ \delta_P^C,\ \delta_H^C) \qquad \text{volume fraction: } X^C = X^A + X^B = 1$$

$$\text{HSP: } (\delta_D^C,\ \delta_P^C,\ \delta_H^C) = (\delta_D^A \cdot X^A + \delta_D^B \cdot X^B,\ \delta_P^A \cdot X^A + \delta_P^B \cdot X^B,\ \delta_H^A \cdot X^A + \delta_H^B \cdot X^B)$$

The compatibility index $\Delta HSP^2$ is a value obtained by squaring the HSP distance between the polymerizable compound and the liquid composition. The compatibility index $\Delta HSP^2$ was calculated in the following manner.

Formula (I)

$$\Delta HSP^2 = (\delta_D^A - \delta_D^C)^2 + (\delta_P^A - \delta_P^C)^2 + (\delta_H^A - \delta_H^C)^2$$

[Evaluation of compatibility]

The polymerizable compound and the solvent were mixed at the blending ratio presented in Table 3-1 without adding a polymerization initiator, to thereby prepare a liquid composition.

The liquid composition was added to a sample tube having an inner diameter of 10 mm so that the height of the liquid inside the tube became 50 mm. The sample tube was sealed, and the liquid composition in the sample tube was stored at 25°C for one week in a light-shielded environment. After the one-week storage as described, the compatibility was evaluated based on the following evaluation criteria. The result of A is an acceptable level.

-Evaluation criteria-

A: No supernatant phase was observed (height of the supernatant phase was less than 0.1 mm)
B: The height of the supernatant phase was 0.1 mm or greater and less than 0.5 mm.
C: The height of the supernatant phase was 0.5 mm or greater.

[Determination of compatibility limit $\Delta HSP^2_{SL}$]

The volume fraction $X_A$ of the polymerizable compound was varied by 0.02, the composition ratio just before the evaluation criteria for the compatibility evaluation was changed from A to B was determined as the compatibility limit (solubility limit), and the $\Delta HSP^2$ at the compatibility limit was determined as $\Delta HSP^2_{SL}$.

When the solvent was composed of two solvents $B^1$ and $B^2$, and the compatibility limit was determined by varying the blending ratio of the solvent $B^1$ and the solvent $B^2$, the volume fraction of the solvent $B^1$ and the volume fraction of the solvent $B^2$ were varied by 0.02 while maintaining the constant volume fraction of the solvent, and the evaluation criteria for the compatibility evaluation was changed from A to B was determined as the compatibility limit (solubility limit). The $\Delta HSP^2$ at the compatibility limit was determined as $\Delta HSP^2_{SL}$.

[Evaluation of curl of resin insulation layer]

In the state where one side among four sides of the obtained resin insulation layer was attached on the horizontal plane, the maximum value in height of the curl at three other sides was measured as an evaluation value for curling. The curl evaluation value was evaluated based on the following criteria to evaluate curling. The result is presented in Table 3-1.

-Evaluation criteria-

Very good: The curl evaluation value was 0 mm or greater and less than 1 mm, and the result was significantly excellent without notable curling.
Good: The curl evaluation value was 1 mm or greater and less than 3 mm, and the result was excellent without notable curling.
Fair: The curl evaluation value was 3 mm or greater and less than 5 mm, and the resin insulation layer was slightly curled, which was not problematic in actual use.
Not good: The curl evaluation value was 5 mm or greater, and the resin insulation layer was notably curled, which was problematic in actual use.

(Examples 3-2 to 3-21 and Comparative Examples 3-1 to 3-22)

Liquid compositions and resin insulation layers of Examples 3-2 to 3-21 and Comparative Examples 3-1 to 3-22 were each produced and evaluated for curling in the same manner as in Example 3-1, except that the formulation was changed as presented in Tables 3-1 to 3-5. The results are presented in Tables 3-1 to 3-5.

[Table 3-1-1]

| | Polymerizable composition | | Solvent | | Liquid composition | | | |
|---|---|---|---|---|---|---|---|---|
| | Name | Volume fraction $X^A$ | Name | Volume fraction $X^B$ | HSP | | | Volume fraction $X^C$ |
| | | | | | $\delta D^A$ | $\delta P^A$ | $\delta H^A$ | |
| Ex. 3-1 | NK ESTER A-HD-N | 0.50 | p-menthane | 0.50 | 16.23 | 2.01 | 2.59 | 1.00 |

(continued)

| | Polymerizable composition | | Solvent | | Liquid composition | | | |
|---|---|---|---|---|---|---|---|---|
| | Name | Volume fraction $X^A$ | Name | Volume fraction $X^B$ | HSP | | | Volume fraction $X^C$ |
| | | | | | $\delta D^A$ | $\delta P^A$ | $\delta H^A$ | |
| Ex. 3-2 | NK ESTER A-NOD-N | 0.50 | p-menthane | 0.50 | 16.16 | 1.68 | 2.17 | 1.00 |
| Ex. 3-3 | NK ESTER A-DOD-N | 0.50 | p-menthane | 0.50 | 16.14 | 1.64 | 2.06 | 1.00 |
| Ex. 3-4 | NK ESTER A-NPG | 0.50 | p-menthane | 0.50 | 16.10 | 1.82 | 2.52 | 1.00 |
| Comp. Ex. 3-1 | NK ESTER NPG | 0.50 | p-menthane | 0.50 | 16.07 | 1.47 | 2.10 | 1.00 |
| Ex. 3-5 | Light Acrylate TEMP-A | 0.50 | p-menthane | 0.50 | 16.26 | 1.36 | 2.70 | 1.00 |
| Comp. Ex. 3-2 | Light Acrylate PE-4A | 0.50 | p-menthane | 0.50 | 16.34 | 1.17 | 3.43 | 1.00 |
| Comp. Ex. 3-3 | Light Acrylate DCP-A | 0.50 | p-menthane | 0.50 | 16.59 | 1.54 | 1.69 | 1.00 |
| Comp. Ex. 3-4 | NK ESTER A-HD-N | 0.50 | ethyl octanoate | 0.50 | 16.06 | 3.50 | 4.39 | 1.00 |

[Table 3-1-2]

| | $\Delta HSP^2$ | Evaluation | |
|---|---|---|---|
| | | Compatibility | Curling |
| Ex. 3-1 | 9.86 | A | Good |
| Ex. 3-2 | 4.26 | A | Good |
| Ex. 3-3 | 3.37 | A | Good |
| Ex. 3-4 | 7.88 | A | Good |
| Comp. Ex. 3-1 | 3.02 | A | ND |
| Ex. 3-5 | 7.68 | A | Good |
| Comp. Ex. 3-2 | 17.55 | A | Not good |
| Comp. Ex. 3-3 | 2.10 | A | Not good |
| Comp. Ex. 3-4 | 0.10 | A | Not good |
| ND: The resin was not cured so that the evaluation could not be carried out. | | | |

[Table 3-2-1]

| | Polymerizable composition | | Solvent | | Liquid composition | | | |
|---|---|---|---|---|---|---|---|---|
| | Name | Volume fraction $X^A$ | Name | Volume fraction $X^B$ | HSP | | | Volume fraction $X^C$ |
| | | | | | $\delta D^A$ | $\delta P^A$ | $\delta H^A$ | |
| Ex. 3-6 | NK ESTER A-200 | 0.50 | ethyl octanoate | 0.50 | 16.09 | 4.18 | 5.87 | 1.00 |

(continued)

| | Polymerizable composition | | Solvent | | Liquid composition | | | |
|---|---|---|---|---|---|---|---|---|
| | Name | Volume fraction $X^A$ | Name | Volume fraction $X^B$ | HSP | | | Volume fraction $X^C$ |
| | | | | | $\delta D^A$ | $\delta P^A$ | $\delta H^A$ | |
| Ex. 3-7 | NK ESTER A-400 | 0.50 | ethyl octanoate | 0.50 | 15.80 | 4.02 | 6.82 | 1.00 |
| Comp. Ex. 3-5 | NK ESTER A-600 | 0.50 | ethyl octanoate | 0.50 | 15.62 | 3.95 | 7.99 | 1.00 |
| Comp. Ex. 3-6 | NK ESTER 4G | 0.50 | ethyl octanoate | 0.50 | 16.08 | 3.80 | 5.13 | 1.00 |
| Comp. Ex. 3-7 | KAYARAD R-604 | 0.50 | p-menthane | 0.50 | 16.36 | 1.96 | 2.19 | 1.00 |
| Comp. Ex. 3-8 | NK ESTER A-BPE-4 | 0.50 | p-menthane | 0.50 | 16.94 | 1.93 | 2.82 | 1.00 |
| Ex. 3-8 | NK ESTER A-GLY-3E | 0.50 | ethyl octanoate | 0.50 | 16.07 | 3.66 | 6.19 | 1.00 |
| Ex. 3-9 | NK ESTER A-GLY-9E | 0.50 | ethyl octanoate | 0.50 | 15.77 | 3.51 | 7.87 | 1.00 |
| Comp. Ex. 3-9 | NK ESTER A-GLY-20E | 0.50 | ethyl octanoate | 0.50 | 15.49 | 3.40 | 11.32 | 1.00 |
| Ex. 3-10 | NK ESTER A-TMPT-9EP | 0.50 | ethyl octanoate | 0.50 | 15.81 | 3.18 | 7.46 | 1.00 |
| Comp. Ex. 3-10 | Light Acrylate DPE-6A | 0.50 | ethyl octanoate | 0.50 | 16.20 | 2.42 | 7.25 | 1.00 |

[Table 3-2-2]

| | $\Delta HSP^2$ | Evaluation | |
|---|---|---|---|
| | | Compatibility | Curling |
| Ex. 3-6 | 2.01 | A | Good |
| Ex. 3-7 | 5.33 | A | Good |
| Comp. Ex. 3-5 | 12.07 | A | Not good |
| Comp. Ex. 3-6 | 0.39 | A | ND |
| Comp. Ex. 3-7 | 7.85 | A | Not good |
| Comp. Ex. 3-8 | 11.39 | A | Not good |
| Ex. 3-8 | 2.77 | A | Good |
| Ex. 3-9 | 11.21 | A | Good |
| Comp. Ex. 3-9 | 46.35 | A | Not good |
| Ex. 3-10 | 8.89 | A | Fair |
| Comp. Ex. 3-10 | 9.26 | A | Not good |
| ND: The resin was not cured so that the evaluation could not be carried out. | | | |

[Table 3-3-1]

| | Polymerizable composition | | Solvent | | Liquid composition | | | |
|---|---|---|---|---|---|---|---|---|
| | Name | Volume fraction $X^A$ | Name | Volume fraction $X^B$ | HSP | | | Volume fraction $X^C$ |
| | | | | | $\delta D^A$ | $\delta P^A$ | $\delta H^A$ | |
| Ex. 3-11 | NK ESTER A-200 | 0.50 | ethyl decanoate | 0.50 | 16.11 | 3.83 | 5.59 | 1.00 |
| Ex. 3-12 | NK ESTER A-200 | 0.50 | ethyl heptanoate | 0.50 | 16.09 | 4.21 | 6. 04 | 1.00 |
| Ex. 3-13 | NK ESTER A-200 | 0.50 | ethyl hexanoate | 0.50 | 16.12 | 4.47 | 6.53 | 1.00 |
| Ex. 3-14 | NK ESTER A-200 | 0.50 | isoamyl isovalerate | 0.50 | 15.89 | 3.77 | 5.47 | 1.00 |
| Ex. 3-15 | NK ESTER A-200 | 0.50 | isoamyl isobutyrate | 0.50 | 15.96 | 3.97 | 5.73 | 1.00 |
| Ex. 3-16 | NK ESTER A-200 | 0.50 | isobutyl isobutyrate | 0.50 | 15.68 | 3.71 | 6.51 | 1.00 |
| Ex. 3-17 | NK ESTER A-200 | 0.50 | ethyl butyrate | 0.50 | 15.88 | 5.11 | 6.11 | 1.00 |
| Comp. Ex. 3-11 | NK ESTER A-200 | 0.50 | ethyl acetate | 0.50 | 16.03 | 4.96 | 7.21 | 1.00 |
| Comp. Ex. 3-12 | NK ESTER A-200 | 0.50 | 2, 6-diisopropyl phenol | 0.50 | 16.79 | 3.93 | 6.36 | 1.00 |

[Table 3-3-2]

| | $\Delta HSP^2$ | Evaluation | |
|---|---|---|---|
| | | Compatibility | Curling |
| Ex. 3-11 | 3.26 | A | Good |
| Ex. 3-12 | 1.56 | A | Fair |
| Ex. 3-13 | 0.51 | A | Fair |
| Ex. 3-14 | 3.89 | A | Good |
| Ex. 3-15 | 2.70 | A | Good |
| Ex. 3-16 | 1.65 | A | Fair |
| Ex. 3-17 | 1.61 | A | Fair |
| Comp. Ex. 3-11 | 0.17 | A | Not good |
| Comp. Ex. 3-12 | 1.48 | A | Not good |

[Table 3-4-1]

| | Polymerizable composition | | Solvent | | Liquid composition | | | |
|---|---|---|---|---|---|---|---|---|
| | Name | Volume fraction $X^A$ | Name | Volume fraction $X^B$ | HSP | | | Volume fraction $X^C$ |
| | | | | | $\delta D^A$ | $\delta P^A$ | $\delta H^A$ | |
| Comp. Ex. 3-13 | NK ESTER A-200 | 0.50 | 1,3,5-trimethyl benzene | 0.50 | 17.13 | 2.81 | 4.11 | 1.00 |
| Comp. Ex. 3-14 | NK ESTER A-200 | 0.50 | mesitylene | 0.50 | 17.13 | 2.61 | 3.91 | 1.00 |
| Comp. Ex. 3-15 | NK ESTER A-200 | 0.50 | p-cymene | 0.50 | 16.83 | 3.44 | 4.83 | 1.00 |
| Comp. Ex. 3-16 | NK ESTER A-200 | 0.50 | diisopentyl ether | 0.50 | 15.74 | 3.56 | 4.85 | 1.00 |
| Comp. Ex. 3-17 | NK ESTER A-200 | 0.50 | p-menthane | 0.50 | 16.19 | 2.36 | 3.66 | 1.00 |
| Comp. Ex. 3-18 | NK ESTER A-200 | 0.50 | cyclooctane | 0.50 | 16.43 | 2.36 | 3.66 | 1.00 |
| Comp. Ex. 3-19 | NK ESTER A-200 | 0.50 | decane | 0.50 | 15.98 | 2.31 | 3.61 | 1.00 |
| Comp. Ex. 3-20 | NK ESTER A-400 | 0.50 | p-menthane | 0.50 | 15.90 | 2.19 | 4.61 | 1.00 |

[Table 3-4-2]

| | $\Delta HSP^2$ | Evaluation | |
|---|---|---|---|
| | | Compatibility | Curling |
| Comp. Ex. 3-13 | 13.66 | A | Not good |
| Comp. Ex. 3-14 | 15.70 | A | Not good |
| Comp. Ex. 3-15 | 7.38 | A | Not good |
| Comp. Ex. 3-16 | 6.98 | C | Not good |
| Comp. Ex. 3-17 | 17.73 | C | Not good |
| Comp. Ex. 3-18 | 17.75 | C | Not good |
| Comp. Ex. 3-19 | 18.39 | C | Not good |
| Comp. Ex. 3-20 | 24.71 | C | Not good |

[Table 3-5-1]

| | Polymerizable composition | | Solvent | | | | Liquid composition | | | |
|---|---|---|---|---|---|---|---|---|---|---|
| | Name | Volume fraction $X^A$ | Solvent $B^1$ | | Solvent $B^2$ | | HSP | | | Volume fraction $X^C$ |
| | | | Name | Volume fraction $X^{B1}$ | Name | Volume fraction $X^{B2}$ | $\delta D^A$ | $\delta P^A$ | $\delta H^A$ | |
| Comp. Ex. 3-21 | NK ESTER A-200 | 0.50 | p-menthane | 0.25 | diethylene glycol diethyl ether | 0.25 | 15.82 | 3.64 | 5.98 | 1.00 |
| Comp. Ex. 3-22 | | 0.50 | | 0.20 | | 0.30 | 15.80 | 3.93 | 6.26 | 1.00 |
| Ex. 3-18 | | 0.50 | | 0.18 | | 0.32 | 15.80 | 4.05 | 6.37 | 1.00 |
| Ex. 3-19 | | 0.50 | | 0.16 | | 0.34 | 15.79 | 4.16 | 6.48 | 1.00 |
| Ex. 3-2 0 | | 0.50 | | 0.14 | | 0.36 | 15.78 | 4.28 | 6.59 | 1.00 |
| Ex. 3-21 | | 0.50 | | 0.12 | | 0.38 | 15.78 | 4.39 | 6.70 | 1.00 |

[Table 3-5-2]

| | $\Delta HSP^2$ | $\Delta HSP^2_{SL}$ | Evaluation | |
|---|---|---|---|---|
| | | | Compatibility | Curling |
| Comp. Ex. 3-21 | 10.23 | 7.60 | C | Not good |
| Comp. Ex. 3-22 | 8.29 | 7.60 | B | Not good |
| Ex. 3-18 | 7.60 | 7.60 | A (compatibility limit) | Very good |
| Ex. 3-19 | 6.97 | 7.60 | A | Very good |
| Ex. 3-20 | 6.39 | 7.60 | A | Good |
| Ex. 3-21 | 5.85 | 7.60 | A | Good |

[Table 3-6]

| Polymerizable compound | | | | | HSP | | |
|---|---|---|---|---|---|---|---|
| Name | Manufacturer name | Compound name | Mw | Note | $\delta D^A$ | $\delta P^A$ | $\delta H^A$ |
| NK ESTER A-HD-N | SHIN-NAKAMURA | 1,6-hexanediol diacrylate | 226 | | 16.33 | 3.92 | 5.08 |
| NK ESTER A-NOD-N | SHIN-NAKAMURA | 1,9-nonanediol diacrylate | 268 | | 16.20 | 3.25 | 4.24 |
| NK ESTER A-DOD-N | SHIN-NAKAMURA | 1,10-decanediol diacrylate | 282 | | 16.15 | 3.17 | 4.01 |
| NK ESTER A-NPG | SHIN-NAKAMURA | neopentyl glycol diacrylate | 212 | | 16.08 | 3.54 | 4.94 |
| NK ESTER NPG | SHIN-NAKAMURA | neopentyl glycol dimethacrylate | 240 | Methacrylic group | 16.01 | 2.84 | 4.10 |
| Light Acrylate TEMP-A | KYOEISHA CHEMICAL | trimethylol propane triacrylate | 296 | | 16.40 | 2.61 | 5.29 |
| Light Acrylate PE-4A | KYOEISHA CHEMICAL | pentaerythritol tetraacrylate | 352 | Number of functional group: 4 | 16.56 | 2.23 | 6.76 |
| Light Acrylate DCP-A | KYOEISHA CHEMICAL | tricyclodecane dimethanol diacrylate | 300 | Cyclic alkyl | 17.06 | 2.98 | 3.27 |
| NK ESTER A-200 | SHIN-NAKAMURA | polyethylene glycol diacrylate (n ≈ 4) | 302 | | 16.26 | 4.61 | 7.21 |
| NK ESTER A-400 | SHIN-NAKAMURA | polyethylene glycol diacrylate (n ≈ 9) | 522 | | 15.68 | 4.28 | 9.11 |
| NK ESTER A-600 | SHIN-NAKAMURA | polyethylene glycol diacrylate (n ≈ 14) | 742 | | 15.31 | 4.15 | 11.44 |
| NK ESTER 4G | SHIN-NAKAMURA | polyethylene glycol methacrylate (n ≈ 4) | 330 | Methacrylic group | 16.24 | 3.85 | 5.73 |
| KAYARAD R-604 | Nippon Kayaku | 2-[5-ethyl-5-[(acryloyloxy) methyl]-1,3-dioxan-2-yl]-2,2-dimethylethyl acrylate | 326 | Cyclic alkylene oxide | 16.60 | 3.81 | 4.27 |

(continued)

| Polymerizable compound | | | | | HSP | | |
|---|---|---|---|---|---|---|---|
| Name | Manufacturer name | Compound name | Mw | Note | δD[A] | δP[A] | δH[A] |
| NK ESTER A-BPE-4 | SHIN-NAKAMURA | ethoxylated bisphenol A diacrylate (n+m ≈ 4) | 512 | Noncyclic alkylene oxide bisphenol A | 17.76 | 3.76 | 5.53 |
| NK ESTER A-GLY-3E | SHIN-NAKAMURA | ethoxylated glycerin triacrylate (i+n+m ≈ 3) | 386 | | 16.22 | 3.56 | 7.84 |
| NK ESTER A-GLY-9E | SHIN-NAKAMURA | ethoxylated glycerin triacrylate (i+n+m ≈ 9) | 650 | | 15.61 | 3.26 | 11.20 |
| NK ESTER A-GLY-20E | SHIN-NAKAMUR A | ethoxylated glycerin t riacrylate (i+n+m ≈ 2 0) | 1,134 | | 15.05 | 3.05 | 18.10 |
| NK ESTER A-TMPT-9E O | SHIN-NAKAMUR A | ethoxylated trimethylo l propane triacrylate | 692 | | 15.70 | 2.61 | 10.38 |
| Light Acrylate DPE-6A | KYOEISHA CHEMICAL | Dipentaerythritol hexaacrylate | 578 | Number of functional groups: 6 | 16.47 | 1.08 | 9.97 |
| SHIN-NAKAMURA: SHIN-NAKAMURA CHEMICAL CO., LTD.<br>KYOEISHA CHEMICAL: KYOEISHA CHEMICAL Co., Ltd.<br>Nippon Kayaku: Nippon Kayaku Co., Ltd. | | | | | | | |

[Table 3-7]

| Solvent | | | HSP | | |
|---|---|---|---|---|---|
| Name | Manufacturer | Structure information | δD[A] | δP[A] | δH[A] |
| p-menthane | FUJIFILM Wako Pure Chemical | hydrocarbon | 16.12 | 0.10 | 0.10 |
| ethyl octanoate | Tokyo Chemi cal | ester | 15.92 | 3.75 | 4.53 |
| ethyl decanoate | Tokyo Chemi cal | ester | 15.96 | 3.05 | 3.97 |
| ethyl heptanoate | Tokyo Chemi cal | ester | 15.92 | 3.81 | 4.87 |
| ethyl hexanoate | Tokyo Chemi cal | ester | 15.98 | 4.33 | 5.84 |
| isoamyl isovalerate | Tokyo Chemi cal | ester | 15.51 | 2.93 | 3.72 |
| isoamyl isobutyrate | Tokyo Chemi cal | ester | 15.66 | 3.32 | 4.25 |
| isobutyl isobutyrate | Tokyo Chemi cal | ester | 15.10 | 2.80 | 5.80 |
| ethyl butyrate | Tokyo Chemi cal | ester | 15.50 | 5.60 | 5.00 |
| 2,6-diisopropylphenol | Tokyo Chemi cal | aromatic | 17.31 | 3.24 | 5.50 |
| 1,3,5-trimethylbenzene | Tokyo Chemi cal | aromatic | 18. 00 | 1.00 | 1.00 |
| mesitylene | Tokyo Chemi cal | aromatic | 18.00 | 0.60 | 0.60 |
| p-cymene | Tokyo Chemi cal | aromatic | 17.40 | 2.27 | 2.44 |
| diisopentyl ether | Tokyo Chemi cal | ether | 15.22 | 2.50 | 2.48 |
| cyclooctane | Tokyo Chemi cal | hydrocarbon | 16.60 | 0.10 | 0.10 |
| decane | Tokyo Chemi cal | hydrocarbon | 15.70 | 0.00 | 0.00 |

(continued)

| Solvent | | | HSP | | |
|---|---|---|---|---|---|
| Name | Manufacturer | Structure information | $\delta D^A$ | $\delta P^A$ | $\delta H^A$ |
| diethylene glycol diethyl ether | Tokyo Chemi cal | ether | 15.80 | 5.90 | 5.60 |

It was found from the above results that, as the liquid composition, which included the polymerizable compound represented by General Formula (1) and having the average molecular weight of less than 700 and the non-aromatic compound serving as the solvent, satisfied the relationship represented by the formula (II): $0.51 \leq \Delta HSP^2 \leq \Delta HSP^2_{SL}$, curling of the resulting resin layer is minimized, which was at a level that was not problematic in actual use, or excellent or significantly excellent.

When any of the conditions for the polymerizable compound, the solvent, and the relationship represented by the formula (II) was not satisfied, the obtained resin layer was curled to the level that was problematic in actual use, or the resin was not cured.

Specifically, as understood from Examples 3-1 to 3-5, curling of the obtained resin layer was minimized when a combination of non-cyclic alkyl-based bifunctional or trifunctional acrylate having a molecular weight of less than 700 and the solvent satisfying the relationship of $0.51 \leq \Delta HSP^2 \leq \Delta HSP^2_{SL}$ was used.

As understood from Comparative Example 3-1, the polymerization reaction did not progress and a resin layer was not obtained when a non-cyclic alkyl-based bifunctional methacrylate having a molecular weight of less than 700 was used as a comparative polymerizable compound having a methacrylic group the polymerization speed of which was slower than the acrylic group.

As understood from Comparative Example 3-2, a sufficient effect of reducing curling was not obtained when non-cyclic alkyl-based tetrafunctional acrylate having a molecular weight of less than 700 was used as a tetrafunctional or higher comparative polymerizable compound.

As understood from Comparative Example 3-3, a sufficient effect of reducing curling was not obtained when cyclic alkyl-based bifunctional acrylate having a molecular weight of less than 700 was used as a comparative polymerizable compound.

As understood from Comparative Example 3-4, even in the case where the non-cyclic alkyl-based bifunctional acrylate having a molecular weight of less than 700 was used, a sufficient effect of reducing curling was not obtained if a combination of the non-cyclic alkyl-based bifunctional acrylate having a molecular weight of less than 700 and the solvent having $\Delta HSP^2$ of less than 0.51 was used.

As understood from Examples 3-6 to 3-10, curling of the obtained resin layer was minimized when a combination of non-cyclic alkylene oxide-based bifunctional or trifunctional acrylate having a molecular weight of less than 700 and the solvent satisfying the relationship of $0.51 \leq \Delta HSP^2 \leq \Delta HSP^2_{SL}$ was used.

As understood from Comparative Examples 3-5 and 3-9, a sufficient effect of reducing curling was not obtained when various types of non-cyclic alkylene oxide-based bifunctional acrylate having a molecular weight of 700 or greater were used.

As understood from Comparative Example 3-6, the polymerization reaction did not progress and a resin layer was not obtained when non-cyclic alkylene oxide-based bifunctional methacrylate having a molecular weight of less than 700 was used as a comparative polymerizable compound having a methacrylic group.

As understood from Comparative Example 3-7, a sufficient effect of reducing curling was not obtained, when cyclic alkylene oxide-based bifunctional acrylate having a molecular weight of less than 700 was used as a comparative polymerizable compound.

As understood from Comparative Example 3-8, a sufficient effect of reducing curling was not obtained, when bifunctional acrylate composed of a combination of non-cyclic alkylene oxide and bisphenol A and having a molecular weight of less than 700 was used as a comparative polymerizable compound.

As understood from Comparative Example 3-9, a sufficient effect of reducing curling was not obtained, when non-cyclic alkylene oxide-based hexafunctional acrylate having a molecular weight of less than 700 was used as a tetrafunctional or higher comparative polymerizable compound.

As understood from Examples 3-11 to 3-17 and Comparative Example 3-11, curling was reduced only when the relationship of $0.51 \leq \Delta HSP^2 \leq \Delta HSP^2_{SL}$ was satisfied even though the solvent for use was limited to the same type of the solvent.

As understood from Comparative Examples 3-12 to 3-15, when the aromatic compound was used as a solvent, the relationship of $0.51 \leq \Delta HSP^2 \leq \Delta HSP^2_{SL}$ was satisfied, but the solvent does not have a compatibility limit. Therefore, nucleation of the polymer was not accelerated, and a sufficient effect of reducing curling was not obtained. It was assumed that, as the Hansen solubility sphere of the aromatic compound is larger than other solvents, the nucleation time was

prolonged, and a resulting resin layer did not have a high porosity because nuclei had small particle diameters.

As understood from Comparative Examples 3-16 to 3-20, a sufficient effect of reducing curling was not obtained when the relationship of $0.51 \leq \Delta HSP^2 \leq \Delta HSP^2_{SL}$ was not satisfied even though various types of the non-aromatic compound were used as the solvent.

In Examples 3-18 to 3-21 and Comparative Examples 3-21 to 3-22, the composition ratio for reaching a compatibility limit was found by varying the volume fractions of the two solvents, the solvent $B^1$ and the solvent $B^2$ (Example 3-21). The $\Delta HSP^2$ of the composition that reaches the compatibility limit was determined as $\Delta HSP^2_{SL}$. It was confirmed that the obtained resin layer was not curled, and significantly desirable results were obtained, when the ratio of $\Delta HSP^2$ to $\Delta HSP^2_{SL}$ was within the range of 0.9 to 1.0, i.e., $\Delta HSP^2/\Delta HSP^2_{SL}=0.9$ to 1.0 (satisfying $0.90\Delta HSP^2_{SL} \leq \Delta HSP^2 \leq \Delta HSP^2_{SL}$) (Example 21, 22). When the compatibility limit was exceeded, on the other hand, the obtained resin layer became a non-uniform film, and an effect of reducing curling was significantly lost (Comparative Examples 3-25, 3-26).

(Example 3-22)

An electrode including a resin insulation layer, an electrode stack, and a solid-state battery cell serving as an electrochemical element were produced, and battery characteristics were evaluated in the following manner.

<Production of electrode>

An inkjet device equipped with an inkjet head (MH5421F, available from Ricoh Industry Company, Ltd.) was charged with the liquid composition of Example 3-6. Positive Electrode 1 was set on a stage, and the liquid composition was ejected and applied onto Positive Electrode 1 by setting the distance d between the positive-electrode composite material layer and a resin insulation layer to be 0.5 mm and a width of the resin insulation layer to be 10 mm.

Straight after the application of the liquid composition, the region where the liquid composition had been applied was irradiated with UV light (light source: UV-LED (product name: FJ800, available from Phoseon Technology, Inc.), wavelength: 365 nm, irradiation intensity: 30 $mW/cm^2$, irradiation time: 20 s) in a nitrogen atmosphere to cure the liquid composition. Next, the cured product was heated on a hotplate at 120°C for 1 minute to remove the solvent, to thereby prepare an electrode of Example 3-22 (see Figs. 1 and 6A).

The average thickness of the resin insulation layer was 121 μm. The curl of the resin insulation layer was 1.0 mm.

In the state where one side among four sides of the obtained electrode was attached on the horizontal plane, the maximum value in height of the curl of the resin insulation layer in the electrode at three other sides was measured as an evaluation value.

After sealing the electrode with aluminum lamination, the electrode was pressed by a cold isostatic press (CIP) at 500 MPa for 5 minutes. After the pressing, the electrode was taken out from the aluminum laminate. A solid electrolyte layer was applied onto Positive Electrode 1 by bar coating, to thereby obtain an electrode stack of Example 3-22 (see Fig. 2A).

After the application, the resulting electrode stack was again sealed by aluminum lamination, followed by pressing by CIP at 500 MPa for 5 minutes. The electrode and the negative electrode were arranged to face each other to form a single cell layer (see Fig. 3). After attaching leading wires, the resulting stack was vacuum sealed by laminating to prepare a solid-state battery cell as an electrochemical element of Example 3-22.

The voltage of the produced solid-state battery cell was measured as described in [Measurement method for capacity of electrode per unit area]. The result was 2.05 V. As the capacity per unit area, the initial discharge capacity was 141 mAh/g. The solid-state battery cell could be charged up to 3.6 V with the constant current value that was 20% relative to the capacity per unit area calculated from the theoretical capacity of the positive-electrode active material. The constant-current charging was carried out without any problem and short-circuiting did not occur.

(Example 3-23)

An inkjet device equipped with an inkjet head (MH5421F, available from Ricoh Industry Company, Ltd.) was charged with the liquid composition of Example 3-5. Positive Electrode 1 was set on a stage, and the liquid composition was ejected and applied onto Positive Electrode 1 by setting the distance d between the positive-electrode composite material layer and a resin insulation layer to be 0.5 mm and a width of the resin insulation layer to be 10 mm. The average thickness of the resin insulation layer was 113 μm. The average thickness of the resin insulation layer was 113 μm. The curl of the resin insulation layer was 1.2 mm (see Figs. 1 and 6A).

The electrode of Example 23, an electrode stack, and a solid-state battery cell serving as an electrochemical element were produced in the same manner as in Example 3-22.

The voltage of the produced solid-state battery cell was measured. The result was 2.09 V. Thereafter, the solid-state battery cell was charged up to 3.6 V with the constant current value that was 20% relative to the capacity per unit area calculated from the theoretical capacity of the positive-electrode active material. The constant-current charging was carried out without any problem and short-circuiting did not occur.

(Example 3-24)

An inkjet device equipped with an inkjet head (MH5421F, available from Ricoh Industry Company, Ltd.) was charged with the liquid composition of Example 3-11. Positive Electrode 1 was set on a stage, and the liquid composition was ejected and applied onto Positive Electrode 1 by setting the distance d between the positive-electrode composite material layer and a resin insulation layer to be 0.5 mm and a width of the resin insulation layer to be 10 mm. The average thickness of the resin insulation layer was 121 $\mu$m. The curl of the resin insulation layer was 1.2 mm (see Fig. 6A).

The electrode of Example 24, an electrode stack, and a solid-state battery cell serving as an electrochemical element were produced in the same manner as in Example 3-22.

The voltage of the produced solid-state battery cell was measured. The result was 2.09 V. Thereafter, the solid-state battery cell was charged up to 3.6 V with the constant current value that was 20% relative to the capacity per unit area calculated from the theoretical capacity of the positive-electrode active material. The constant-current charging was carried out without any problem and short-circuiting did not occur.

(Comparative Example 3-23)

After sealing Electrode 1 with aluminum lamination, Electrode 1 was pressed by a cold isostatic press (CIP) at 500 MPa for 5 minutes. After the pressing, Electrode 1 was taken out from the aluminum laminate.

A solid electrolyte layer was applied onto Electrode 1 by bar coating, to thereby obtain an electrode stack. After the application, the resulting electrode stack was again sealed by aluminum lamination, followed by pressing at 500 MPa for 5 minutes. The electrode and the negative electrode were arranged to face each other to form a single cell layer (see Fig. 3). After attaching leading wires, the resulting stack was vacuum sealed by laminating to prepare a solid-state battery cell as an electrochemical element of Comparative Example 3-23.

The voltage of the produced solid-state battery cell was measured. The result was 0.11 V, and short-circuiting tended to occur. Thereafter, the solid-state battery cell was charged up to 3.6 V with the constant current value that was 20% relative to the capacity per unit area calculated from the theoretical capacity of the positive-electrode active material. However, the charging could not be performed up to 3.6 V.

After the pressing, the cell was disassembled. As a result, cracks were observed in the solid electrolyte layer. It was assumed that the voltage was reduced to around 0 V due to the cracks in the solid electrolyte layer.

(Comparative Example 3-24)

An inkjet device equipped with an inkjet head (MH5421F, available from Ricoh Industry Company, Ltd.) was charged with the liquid composition of Comparative Example 3-8. Positive Electrode 1 was set on a stage, and the liquid composition was ejected and applied onto Positive Electrode 1 by setting the distance d between the positive-electrode composite material layer and a resin insulation layer to be 0.5 mm and a width of the resin insulation layer to be 10 mm. The average thickness of the resin insulation layer was 118 $\mu$m. The curl of the resin insulation layer was 24.5 mm.

The electrode of Comparative Example 3-24, an electrode stack, and a solid-state battery cell serving as an electrochemical element were produced in the same manner as in Example 3-22.

The voltage of the produced solid-state battery was measured. The result was 0.11 V, and short-circuiting tended to occur. Thereafter, the solid-state battery cell was charged up to 3.6 V with the constant current value that was 20% relative to the capacity per unit area calculated from the theoretical capacity of the positive-electrode active material. However, the charging could not be performed up to 3.6 V.

After the pressing, the cell was disassembled. As a result, cracks were observed in the solid electrolyte layer. It was assumed that the voltage was reduced to around 0 V due to the cracks in the solid electrolyte layer.

Examples according to [Third embodiment of electrode stack] will be described hereinafter.

<Preparation of liquid composition for resin insulation layer>

The following materials were mixed at the following blending ratio to prepare a liquid composition for forming an insulation layer.

<Liquid composition 4-1>

Tetrahydrolinalool (available from FUJIFILM Wako Pure Chemical Co., Ltd.) (49.5% by mass) serving as a solvent, 50.0% by mass of NK Ester A-200 (polyethylene glycol (200) diacrylate, available from SHIN-NAKAMURA CHEMICAL CO., LTD.) serving as a polymerizable compound, and 0.5% by mass of bis(2,4,6-trimethylbenzoyl)phenylphosphate (available from IGM Resins B.V.) serving as a polymerization initiator were mixed to obtain Liquid composition 1 for forming a resin insulation layer.

(Example 4-1)

An inkjet device equipped with an inkjet head (MH5421F, available from Ricoh Industry Company, Ltd.) was charged with Liquid Composition 1 for forming a resin insulation layer. Positive Electrode 1 was set on a stage in a manner that one side of Positive Electrode 1 was aligned parallel to the direction of transportation. Liquid Composition 1 was ejected and applied onto Positive electrode 1 by setting the distance d between the positive-electrode composite material layer and a resin insulation layer to be 1 mm to 1.5 mm, and a width of the resin insulation layer to be 10 mm with respect to the direction of the transportation and the direction orthogonal to the transportation direction.

Note that, in Positive Electrode 1, the edge face or tapered face of the perimeter of the positive-electrode composite material layer 20 had minute surface irregularities, and the edge 20E of the positive-electrode composite material layer in contact with the electrode substrate had variations in width in an approximate range of 500 $\mu$m (see Fig. 30).

Straight after the application, the region where Liquid Composition 1 was applied was irradiated with UV light (light source: UV-LED (product name: FJ800, available from Phoseon Technology, Inc.), wavelength: 365 nm, irradiation intensity: 30 mW/cm$^2$, irradiation time: 20 s) in a nitrogen atmosphere, while moving the stage at the transportation speed of 1.2 m/min, to thereby cure Liquid Composition 1. Next, the cured product was heated on a hotplate at 120°C for 1 minute to remove the solvent, to thereby produce an electrode of Example 4-1 (see Figs. 1 and 6A) .

The time period from the applying step and the polymerizing step, namely, the wetting time of the liquid composition layer, was 5 seconds.

[Distance between positive-electrode composite material layer and liquid composition layer in applying step]

The distance d between the positive-electrode composite material layer and the liquid composition layer, and a gap (width) between the perimeter (edge) of the positive-electrode composite material layer and the edge of the liquid composition layer in the applying step were defined as illustrated in Figs. 16 to 17. In the state where the positive-electrode composite material layer and the liquid composition layer were adjacent to each other, as illustrated in Fig. 16, the distance d was defined as 0. The gap indicated with the arrows in Fig. 17 was defined as the distance d between the positive-electrode composite material layer and the liquid composition layer.

The edge of the positive-electrode composite material layer in contact with the electrode substrate had variations in width in the range of 500 $\mu$m. Therefore, the distance d being in the range of 1 mm to 1.5 mm means that the first distance is 1 mm, and the second distance is 1.5 mm, where the first distance is the minimum distance between the edge of the electrode composite material layer and the edge of the liquid composition layer, and the second distance is the maximum distance between the edge of the electrode composite material layer and the liquid composition layer.

When the resin insulation layer is overlapped with the electrode composite material layer, the distance d is represented with a negative numeric value. The negative numeric value can be determined according to the distance the ejection position of the liquid composition moved from the ejection position of the liquid composition where the distance is a positive numeric value. When the ejection position was moved by 2 mm from the distance d (1 mm), the distance can be calculated as 1-2 [mm] = -1 [mm]. [Measurement of height of interface between positive-electrode composite material layer and liquid composition layer at start of polymerizing step]

The height of the interface between the positive-electrode composite material layer and the liquid composition layer was measured by a spectral-interference laser displacement meter (SI-T10, available from KEYENCE CORPORATION).

Specifically, in the applying step, at the first edge e1 of the liquid composition layer, with which the first distance (the minimum distance between the edge of the electrode composite material layer and the edge of the liquid composition layer) was 1 mm, the liquid composition layer was spread to cause wetting and covered the edge of the positive-electrode composite material layer so that the liquid composition layer came into contact with the edge of the positive-electrode composite material layer to form an interface. The height of the interface at the start of the polymerizing step was measured, and the result was 46 $\mu$m (see Fig. 35).

In a similar manner, at the second edge e2 of the liquid composition layer with which the second distance d2 (the maximum distance between the edge of the electrode composite material layer and the edge of the liquid composition

layer) was 1.5 mm in the applying step, the height of the interface at the start of the polymerizing step was measured, and the result was 44 μm (see Fig. 36).

For the interface between the positive-electrode composite material layer and the liquid composition layer, the height of the part of the interface at which the distance d became the minimum in the applying step was the maximum value of the height of the interface, and the height of the part of the interface at which the distance d became the maximum in the applying step was the minimum value of the height of the interface.

The results are presented in Table 4-1.

[Measurement of thickness of liquid composition layer at start of polymerizing step]

In the similar manner to the measurement of the height of the interface, the thickness of the liquid composition layer at the start of the polymerizing step was measured by a spectral-interference laser displacement meter (SI-T10, available from KEYENCE CORPORATION).

The thickness was the thickness of the liquid composition layer at the edge of the positive-electrode composite material layer at the start of the polymerizing step. Specifically, the thickness of the liquid composition layer at the most projected edge of the positive-electrode composite material layer was measured.

The results are presented in Table 4-1.

After sealing the electrode with aluminum lamination, the electrode of Example 4-1 was pressed by a cold isostatic press (CIP) at 500 MPa for 5 minutes. After the pressing, the electrode was taken out from the aluminum laminate. A solid electrolyte layer was applied onto the positive electrode by bar coating, to thereby obtain an electrode stack (see Fig. 2). After the application, the resulting electrode stack was again sealed by aluminum lamination, followed by pressing by CIP at 500 MPa for 5 minutes. The electrode and Negative Electrode 1 were arranged to face each other to form a single cell layer (see Fig. 3). After attaching leading wires, the resulting stack was vacuum sealed by laminating to prepare a solid-state battery cell of Example 4-1.

The voltage of the produced solid-state battery cell was measured as described in [Measurement method for capacity of electrode per unit area]. The result was 2.01 V. As the capacity per unit area, the initial discharge capacity was 141 mAh/g. Thereafter, the solid-state battery cell was charged up to 3.6 V with the constant current value that was 20% relative to the capacity per unit area calculated from the theoretical capacity of the positive-electrode active material. The constant-current charging was carried out without any problem and short-circuiting did not occur.

(Examples 4-2 to 4-11)

Electrodes, electrode stacks, and solid-state battery cells of Examples 4-2 to 4-11 were each produced and evaluated in the same manner as in Example 4-1, except that the conditions were changed as presented in Table 1.

The results are presented in Table 4-1.

Voltage of each of the produced solid-state battery cells of Examples 4-2 to 4-11 was measured, and each of the solid-state battery cells exhibited the open-circuit voltage presented in Table 4-1. Thereafter, each of the solid-state battery cells was charged up to 3.6 V with the constant current value that was 20% relative to the capacity per unit area calculated from the theoretical capacity of the positive-electrode active material. The constant-current charging was carried out without any problem and short-circuiting did not occur.

(Comparative Example 4-1)

After sealing Positive Electrode 1 with aluminum lamination, Positive Electrode 1 was pressed by a cold isostatic press (CIP) at 500 MPa for 5 minutes. After the pressing, the positive electrode was taken out from the aluminum laminate.

A solid electrolyte layer was applied onto the positive electrode by bar coating, to thereby obtain an electrode stack. After the application, the resulting electrode stack was again sealed by aluminum lamination, followed by pressing by CIP at 500 MPa for 5 minutes. The electrode stack and Negative Electrode 1 were arranged to face each other to form a single cell layer. After attaching leading wires, the resulting stack was vacuum sealed by laminating to prepare a solid-state battery cell of Comparative Example 4-1.

The voltage of the produced solid-state battery cell was measured. The result was 0.11 V, and short-circuiting tended to occur. Thereafter, the solid-state battery cell was charged up to 3.6 V with the constant current value that was 20% relative to the capacity per unit area calculated from the theoretical capacity of the positive-electrode active material. However, the charging could not be performed up to 3.6 V.

After the pressing, the cell was disassembled. As a result, cracks were observed in the solid electrolyte layer. It was assumed that the voltage was reduced to around 0 V due to the cracks in the solid electrolyte layer.

(Comparative Example 4-2)

A PET resin film (Cosmoshine™, available from TOYOBO CO., LTD.) having a thickness of 100 μm was cut into the size of 40 mm × 40 mm, where the cut piece of the PET resin film had an opening of 20 mm × 20 mm to surround the perimeter of Positive Electrode 1. The cut piece of the PET resin film was arranged on Positive Electrode 1 as a resin frame, followed by sealing with aluminum lamination. The resulting product was pressed by a cold isostatic press (CIP) at 500 MPa for 5 minutes. After the pressing, the positive electrode was taken out from the aluminum laminate.

A solid electrolyte layer was applied by bar coating to thereby obtain an electrode stack. After the application, the resulting electrode stack was again sealed by aluminum lamination, followed by pressing by CIP at 500 MPa for 5 minutes. The electrode stack and Negative Electrode 1 were arranged to face each other to form a single cell layer. After attaching leading wires, the resulting stack was vacuum sealed by laminating to prepare a solid-state battery cell of Comparative Example 4-2.

The voltage of the produced solid-state battery cell was measured. The result was 0.11 V, and short-circuiting tended to occur. Thereafter, the capacity per unit area was reduced by 20% from the value calculated from the theoretical capacity of the positive-electrode active material.

[Table 4-1]

| | Applying step | | Transport speed [m/min] | Wetting time [s] | Polymerizing step | | |
|---|---|---|---|---|---|---|---|
| | Distance d between positive-electrode composite material layer and liquid composition layer | Amount of liquid composition per unit area [g/cm$^2$] | | | Height of interface between positive-electrode composite material layer and liquid composition layer [μm] | | Thickness of liquid composition layer [μm] |
| | | | | | Max. value | Min. value | |
| Ex. 4-1 | 1 mm to 1.5 mm | 0. 02 | 1.2 | 5 | 46 | 45 | 100 |
| Ex. 4-2 | 1 mm to 1.5 mm | 0. 02 | 0.6 | 10 | 95 | 94 | 95 |
| Ex. 4-3 | 1 mm to 1.5 mm | 0. 02 | 0. 4 | 15 | 95 | 94 | 96 |
| Ex. 4-4 | 0 mm to 0.5 mm | 0. 02 | 12 | 0.5 | 50 | 50 | 110 |
| Ex. 4-5 | 0 mm to 0.5 mm | 0. 02 | 3 | 2 | 94 | 93 | 95 |
| Ex. 4-6 | 0 mm to 0.5 mm | 0. 02 | 1.2 | 5 | 95 | 95 | 96 |
| Ex. 4-7 | 0 mm to 0.5 mm | 0. 02 | 0.6 | 10 | 95 | 95 | 97 |
| Ex. 4-8 | 0 mm to 0.5 mm | 0. 02 | 0. 4 | 15 | 95 | 95 | 97 |
| Ex. 4-9 | -1 mm to -0.5 mm | 0. 02 | 12 | 0. 5 | 95 | 95 | 110 |
| Ex. 4-10 | -1 mm to -0.5 mm | 0. 02 | 3 | 2 | 95 | 95 | 96 |
| Ex. 4-11 | -1 mm to -0.5 mm | 0. 02 | 1.2 | 5 | 95 | 95 | 98 |
| Comp. Ex. 4-1 | | | | | | | |
| Comp. Ex. 4-2 | 0 mm | | | | | | |

[Table 4-2]

| | Evaluations | |
|---|---|---|
| | Open-circuit voltage [V] | Short-circuiting |
| Ex. 4-1 | 2.01 | Not occurred |

(continued)

| | Evaluations | |
|---|---|---|
| | Open-circuit voltage [V] | Short-circuiting |
| Ex. 4-2 | 2.07 | Not occurred |
| Ex. 4-3 | 2.08 | Not occurred |
| Ex. 4-4 | 2.03 | Not occurred |
| Ex. 4-5 | 2.09 | Not occurred |
| Ex. 4-6 | 2.08 | Not occurred |
| Ex. 4-7 | 2.09 | Not occurred |
| Ex. 4-8 | 2.08 | Not occurred |
| Ex. 4-9 | 2.09 | Not occurred |
| Ex. 4-10 | 2.08 | Not occurred |
| Ex. 4-11 | 2.09 | Not occurred |
| Comp. Ex. 4-1 | 0.11 | Occurred |
| Comp. Ex. 4-2 | 0.52 | Not occurred |

<Preparation Example of Resin Material 1>

As Monomer A, tricyclodecane dimethanol diacrylate (product name: A-DCP, available from SHIN-NAKAMURA CHEMICAL CO., LTD.) was used. Monomer A was diluted with diethylene glycol diethyl ether (available from Tokyo Chemical Industry Co., Ltd.) to adjust the solid content to 50% by mass, to thereby prepare Resin Material 1 that was a solution in which the solid content of the Monomer A was 50% by mass.

<Preparation Examples of Resin Materials 2 to 5>

As Monomer B, polyethylene glycol #200 diacrylate (product name: A-200, available from SHIN-NAKAMURA CHEMICAL CO., LTD.) was used. Monomer B was diluted with paramethane (available from Tokyo Chemical Industry Co., Ltd.) to adjust the solid content to 50% by mass, to thereby prepare a solution in which the solid content of the Monomer B was 50% by mass.

Subsequently, the solution, in which the solid content of Monomer A was 50% by mass, and the solution, in which the solid content of Monomer B was 50% by mass, were mixed at the ratio (mass ratio) of Monomer A:Monomer B presented in Table 1 to prepare Resin Material 2 to 5 where the ratio between Monomer A and Monomer B was varied.

<Formation Example of Resin Structure 1>

Resin Material 1 was applied onto an aluminum foil base (50 mm $\times$ 50 mm, average thickness: 15 $\mu$m) serving as a substrate by inkjet printing, UV light having a wavelength of 365 nm was applied at 100 mW/cm$^2$ to polymerize Resin Material 1, followed by vacuum drying at 80°C, to thereby form Resin Structure 1 having the average thickness of approximately 100 $\mu$m.

<Formation Examples of Resin Structures 2 to 5>

Resin Structures 2 to 5 were formed in the same manner as in Formation Example of Resin Structure 1, except that Resin Material 1 was replaced with Resin Materials 2 to 5, respectively.

A ratio of elastic deformation work, shrinkage rate, and porosity of each of Resin Structures 1 to 5 obtained were measured in the following manner.

<Measurement of ratio of elastic deformation work and shrinkage rate>

Each of Resin Structures 1 to 5 formed on the substrate was set on a nanoindenter (Nano Indenter G200, available from Keysight Technologies (KLA Corporation)), and a probe was operated substantially vertically relative to

the plane of the substrate and the plane of the resin structure to measure in the thickness direction of the resin structure. The ratio of elastic deformation work and shrinkage rate were determined from a load displacement curve obtained by a nanoindentation method according to International Organization for Standard (ISO)14577 (Instrumented indentation test). The results are presented in Table 5-1.

<Measurement of porosity>

Each of Resin Structure 1 to 5 obtained was cut with a focused ion beam (FIB) (device name: Helios Nanolab G3 CX, available from FEI Company Japan Ltd./Thermo Fisher Scientific) to obtain a cross-section presenting an inner area of the resin structure, and the cross-section of the resin structure was polished and exposed by ion milling (cross-section polishing (CP), device name: IB-19520CCP, available from JEOL Ltd.). The obtained cross-section of the resin structure was observed under a scanning electron microscope (SEM) (device name: PhenomProX, available from Phenom) to measure porosity. The results are presented in Table 5-1.

As presented in Table 5-1, it was found that Resin Structures 1 to 5 each having mutually different compressibility could be formed using Resin Materials 1 to 5, in which the ratio between Monomer A and Monomer B was varied, respectively.

The obtained results demonstrated that the shrinkage rate was increased, as the ratio of elastic deformation work decreased. Therefore, it was found that the compressibility of the resin structure could be determined by measurement performed by the nanoindenter.

[Table 5-1]

| | Resin Structure | | | | |
|---|---|---|---|---|---|
| | 1 | 2 | 3 | 4 | 5 |
| Resin Material | 1 | 2 | 3 | 4 | 5 |
| Monomer A:Monomer B (mass ratio) | 100:0 | 75:25 | 50:50 | 25:75 | 5:95 |
| Ratio of elastic deformation work of resin structure | 34.4% | 30.40% | 27.80% | 25.30% | 25.00% |
| Shrinkage rate of resin structure | 11.47% | 21.00% | 31.60% | 40.60% | 43.20% |
| Porosity of resin structure (before pressing) | 40% | 41% | 42% | 43% | 43% |

In association with Embodiment 2-1 illustrated in Fig. 20 and Embodiment 2-2 illustrated in Fig. 22, electrodes of Examples 5-1 to 5-8, in which the proximal portion 110a of the resin structure and the distal portion 110b of the resin structure had mutually different shrinkage rates, and an electrode of Comparative Example 5-1, in which the proximal portion 110a and the distal portion 110b had the same shrinkage rate, were produced as illustrated in Fig. 38.

(Example 5-1)

<Formation of electrode composite material layer>

In 36.4% by mass of anisole (available from Tokyo Chemical Industry Co., Ltd.), 45.3% by mass of LNO/NMC1 serving as a positive-electrode active material, 2.2% by mass of acetylene black (DENKA BLACK, available from Denka Company Limited) serving as a conductive agent, 1.4% by mass of polybutyl methacrylate (PBMA, available from Sigma-Aldrich) serving as a binder, and 14.7% by mass of solid electrolyte were dispersed to prepare a positive electrode coating material.

Fig. 38 is a cross-sectional view illustrating the electrode of Example 5-1 (a view illustrating a surface of a substrate and a cross-sectional view of the electrode cut along a horizontal direction).

As illustrated in Fig. 38, the positive-electrode coating material was applied onto one face of an aluminum foil base (50 mm × 50 mm, average thickness: 15 μm) serving as a substrate, followed by drying, to form a 30 mm × 30 mm electrode composite material layer 120, to thereby obtain an electrode having a margin in the width of 10 mm along the four sides of the electrode composite material layer 120. The average thickness of the electrode composite material layer 120 at the flat top plane was 100 μm, and the battery capacity per unit area was 2.91 $mAh/cm^2$.

<Formation of resin structure>

Subsequently, along one side of the electrode composite material layer 120, 30 mm × 15 mm Resin Structure

1 constituting a proximal portion 110a and 30 mm × 15 mm Resin Structure 2 constituting a distal portion 110b were formed next to each other to have an average thickness of approximately 100 μm, to thereby produce an electrode of Example 5-1.

(Examples 5-2 to 5-4)

Electrodes of Examples 5-2 to 5-4 were produced in the same manner as in Example 5-1, except that Resin Structure 2 constituting the distal portion 110b was replaced with Resin Structures 3 to 5, respectively.

(Comparative Example 5-1)

An electrode of Comparative Example 5-1 was produced in the same manner as in Example 5-1, except that Resin Structure 2 constituting the distal portion 110b was replaced with Resin Structure 1.

(Examples 5-5 to 5-8)

Electrodes of Examples 5-5 to 5-8 were produced in the same manner as in Comparative Example 5-1, except that Resin Structure 1 constituting the proximal portion 110a was replaced with Resin Structures 2 to 5, respectively.

<Method for pressing electrode>

Each of the obtained electrodes of Examples 5-1 to 5-8 and Comparative Example 5-1 was pressed by a cold isostatic press (CIP) (device name: CP900M, available from Kobe Steel, Ltd.) for 5 minutes to apply pressure at 250 MPa in the vertical direction relative to the plane of the substrate, to thereby obtain each of the electrodes after pressing.

<Method for measuring curling of electrode after pressing>

The degree of curling of each of the electrodes after pressing was measured and evaluated with flatness (unit: mm or smaller) according to JIS G 3193. According to JIS G 3193, the flatness is expressed as a value of a distance of the electrode, which is created by curling, from a flat surface used as a reference.

The results are depicted in Fig. 39. In Fig. 39, the horizontal axis represents a difference between the shrinkage rate (a%) of the proximal portion 110a and the shrinkage rate (b%) of the distal portion 110b (an absolute value of the difference |a-b|%), and the vertical axis represents a relative value of the flatness, when the point having the smallest flatness value on the graph is determined as 1 (a reference point). As the relative value is increased, the value of the flatness is increased, which means that curling of the electrode after pressing occurred. The smaller relative values means the larger effect of reducing curling. It should be noted that the point having the smallest flatness value does not necessarily represent the electrode that is completely flat, and may represent the electrode that is curled slightly.

Examples 5-1 to 5-4, in which the distal portion 110b was changed, and Comparative Example 5-1 (Sample Group A) and Examples 5-5 to 5-8, in which the proximal portion 110a was changed, and Comparative Example 5-1 (Sample Group B) demonstrated the same result. Specifically, the anti-curling effect started to be notable at the shrinkage rate difference of approximately 10%, and the anti-curling effect became the maximum at the shrinkage rate difference of approximately 20%. When the shrinkage rate difference was approximately 25% or greater, curling due to polymerization of the resin structure became significant so that it was less likely to achieve a significant anti-curling effect.

(Example 5-9)

In association with another example of Embodiment 2-1 illustrated in Fig. 21, an electrode of Example 5-9, in which a proximal portion 110a of a resin structure and the distal portion 110b of the resin structure had mutually different shrinkage rates and thicknesses, was produced as illustrated in Fig. 40.

Fig. 40 is a cross-sectional view illustrating the electrode of Example 5-9 (a view illustrating a surface of a substrate and a cross-sectional view of the electrode cut along a vertical direction).

As illustrated in Fig. 40, an electrode composite material layer 220 (30 mm × 30 mm, average thickness at flat top plane: 65 μm) was formed on an aluminum foil base (50 mm × 50 mm, average thickness: 15 μm) serving as a substrate. Along one side of the electrode composite material layer 220, Resin Structure 1 (30 mm × 5 mm, maximum thickness: 80 μm to 100 μm) constituting the proximal portion 210a was formed using Resin Material 1, and Resin Structure 3 (30 mm × 5 mm, maximum thickness: 130 μm to 170 μm) constituting the distal portion 210b was formed using Resin Material 3, to thereby produce an electrode of Example 5-9 before pressing.

Subsequently, pressing was performed according to the method described in <Method for pressing electrode>,

to thereby produce an electrode of Example 5-9 after pressing, where the electrode after pressing had the average thickness of 65 μm.

Electrodes having different combinations of thicknesses were produced. Specifically, relative to the thickness (65 μm) of the electrode after pressing, the thickness of the proximal portion before pressing was set at approximately 1.2 times to approximately 1.5 times, and the thickness of distal portion before pressing was set at approximately 2 times to approximately 2.6 times.

As a result, it was found that, if pressing was performed by CIP at 250 MPa, curling of the electrodes was minimized, and electrodes after pressing, in each of which the electrode composite material layer and the resin structure were substantially flat, and had substantially the same thickness, could be produced.

(Examples 5-10)

In association with another example of Embodiment 2-2 illustrated in Fig. 23, an electrode of Example 5-10, in which a proximal portion 110a of a resin structure and the distal portion 110b of the resin structure had mutually different shrinkage rates and thicknesses, was produced as illustrated in Fig. 41.

Fig. 41 is a cross-sectional view illustrating the electrode of Example 5-10 (a view illustrating a surface of a substrate and a cross-sectional view of the electrode cut along a vertical direction).

As illustrated in Fig. 41, an electrode composite material layer 420 (30 mm × 30 mm, average thickness of flat top plane: 65 μm) was formed on an aluminum foil base (50 mm × 50 mm, average thickness: 15 μm) serving as a substrate. Along one side of the electrode composite material layer 420, Resin Structure 3 (30 mm × 5 mm, maximum thickness: 130 μm to 170 μm) constituting the proximal portion 410a was formed using Resin Material 3, and Resin Structure 1 (30 mm × 5 mm, maximum thickness: 80 μm to 100 μm) constituting the distal portion 410b was formed using Resin Material 1, to thereby produce an electrode of Example 5-10 before pressing.

Subsequently, pressing was performed according to the method described in <Method for pressing electrode>, to thereby produce an electrode of Example 5-10 after pressing, where the electrode after pressing had the average thickness of 65 μm.

Electrodes having different combinations of thicknesses were produced. Specifically, relative to the thickness (65 μm) of the electrode after pressing, the thickness of the proximal portion before pressing was set at approximately 2 times to approximately 2.6 times, and the thickness of distal portion before pressing was set at approximately 1.2 times to approximately 1.5 times.

As a result, it was found that, if pressing was performed by CIP at 250 MPa, curling of the electrodes was minimized, and electrodes after pressing, in each of which the electrode composite material layer and the resin structure were substantially flat, and had substantially the same thickness, could be produced.

(Example 5-11)

As a variation of Embodiment 2-1 illustrated in Fig. 20 and Fig. 38 (Example 5-1), as illustrated in Fig. 42, an electrode of Example 5-11, in which a proximal portion 110a and distal portion 110b of a resin structure had mutually different shrinkage rates, and the distal portion 110b was disposed to be in contact with an electrode composite material layer 120, was produced.

Fig. 42 is a cross-sectional view illustrating the electrode of Example 5-11 (a view illustrating a surface of a substrate and a cross-sectional view of the electrode cut along a vertical direction).

As illustrated in Fig. 42, an electrode composite material layer 120 (30 mm × 30 mm, average thickness of flat top plane: 65 μm) was formed on an aluminum foil base (50 mm × 50 mm, average thickness: 15 μm) serving as a substrate. Resin Structure 3 constituting a proximal portion 110a was formed to be in contact with the edge of the electrode composite material layer 120, and Resin Structure 1 constituting a distal portion 110b was formed, to thereby produce an electrode of Example 11.

The shrinkage rate of the distal portion 110b was greater than the shrinkage rate of the proximal portion 110a, and the proximal portion 110a was formed along the tapered face of the electrode composite material layer 120 (i.e., the proximal portion 110a was not extended to the flat top plane of the electrode composite material layer 120).

It was found that the above-described structure could minimize the sinking or compression of the resin structure corresponding to (or engaged with) the compression of the electrode by pressing. In addition, it was found that the width (frame size) of the resin structure disposed adjacent to the electrode composite material layer could be reduced compared to Examples 5-1 to 5-10.

(Example 5-12)

As another variation of Embodiment 2-1 illustrated in Fig. 20, Fig. 38 (Example 5-1), and Fig. 42 (Example

5-11), an electrode of Example 5-12, in which an electrode composite material layer 120 was reversely tapered, was produced as illustrated in Fig. 43.

Fig. 43 is a cross-sectional view illustrating the electrode of Example 5-12 (a view illustrating a surface of a substrate and a cross-sectional view of the electrode cut along a vertical direction).

As illustrated in Fig. 43, the electrode of Example 5-12 was produced in the same manner as in Example 11, except that a proximal portion 110a and a distal portion 110b were formed on an aluminum foil base (50 mm × 50 mm, average thickness: 15 μm) serving as a substrate, followed by forming the electrode composite material layer 120. As a result, the formed electrode composite material layer 120 had the reversely tapered shape. Moreover, the proximal portion 110a and the distal portion 110b were formed adjacent to the edge of the electrode composite material layer 120, the shrinkage rate of the distal portion 110b was greater than the shrinkage rate of the proximal portion 110a, and the proximal portion 110a was formed as part of the tapered face of the distal portion 110b (i.e., the electrode composite material layer 120 was extended over the proximal portion 110a and the distal portion 110b).

It was found that the above-described structure could minimize the sinking or compression of the resin structure corresponding to (or engaged with) the compression of the electrode by pressing. In addition, it was found that the width (frame size) of the resin structure disposed adjacent to the electrode composite material layer could be reduced compared to other Examples.

(Examples 5-13 to 5-15)

Electrodes of Examples 5-13 to 5-15 were each produced in the same manner as in Example 2, where the proximal portion 110a was Resin Structure 1 and the distal portion 110b was Resin Structure 3, except that a ratio between a width of the proximal portion 110a and a width of the distal portion 110b was changed.

Specifically, as illustrated in Figs. 44 to 46, a width of the resin structure, which was a combination of the proximal portion 110a and the distal portion 110b, adjacent to the electrode composite material layer 120 was set to a constant value, i.e., approximately 5 mm, and the ratio [(the width of the distal portion 110b):(the width of the proximal portion 110a)] was changed to 1:2, 1:1, and 2:1 to produce electrodes of Examples 5-13 to 5-15, respectively.

Subsequently, each of the produced electrodes was pressed by CIP at 250 MPa according to the method described in <Method for pressing electrode>. As a result, curling of all of the electrodes of Examples 5-13 to 5-15 was reduced. Among Examples mentioned, the curling of the electrode could be reduced more effectively at the ratio of (the width of the distal portion):(the width of the proximal portion) = 1:1 (Example 5-14) than at the ratio of (the width of the distal portion):(the width of the proximal portion) = 1:2 (Example 5-13), and could be reduced more effectively the ratio of (the width of the distal portion):(the width of the proximal portion) = 2:1 (Example 5-15) than at the ratio of (the width of the distal portion):(the width of the proximal portion) = 1:1 (Example 5-14).

(Examples 5-16 to 5-18)

Electrodes of Examples 5-16 to 5-18 were each produced in the same manner as in Example 2, where the proximal portion 110a was Resin Structure 1 and the distal portion 110b was Resin Structure 3, except that the width (length) of the proximal portion 110a and the width (length) of the distal portion 110b were changed.

Specifically, as illustrated in Figs. 47 to 49, within the resin structure adjacent to the electrode composite material layer 120, the ratio of the width of the distal portion 110b to the width of the proximal portion 110a was fixed to approximately 1:1, and a total width that was a sum of the width of the proximal portion 110a and the width of the distal portion 110b was changed to approximately 2 mm, approximately 5 mm, and approximately 10 mm to produce the electrodes of Examples 5-16 to 5-18, respectively.

Subsequently, each of the produced electrodes was pressed by CIP at 250 MPa according to the method described in <Method for pressing electrode>. As a result, curling of all of the electrodes of Examples 5-16 to 5-18 was reduced. Among Examples mentioned, the curling of the electrode could be reduced more effectively with the total resin structure width of 5 mm (Example 5-17) than with the total resin structure width of 2 mm (Example 5-16), and could be reduced more effectively with the total resin structure width of 10 mm (Example 5-18) than with the total resin structure width of 5 mm (Example 5-17).

For example, embodiments of the present disclosure are as follows.

<1> An electrode stack including:

an electrode substrate;
an electrode composite material layer disposed on the electrode substrate;
a resin structure disposed on a periphery of the electrode composite material layer; and
a solid electrolyte layer disposed on the electrode composite material layer and the resin structure,

wherein the resin structure has a bicontinuous structure where a resin constitutes a skeleton of the bicontinuous structure.

<2> The electrode stack according to <1>,
wherein a ratio (B/A) of an average thickness B of the resin structure to an average thickness A of the electrode composite material layer is 0.97 or greater and 1.03 or less.
<3> The electrode stack according to <1> or <2>, wherein the resin structure is porous.
<4> The electrode stack according to any one of <1> to <3>,
wherein the rein structure has a porosity of 30% or greater.
<5> The electrode stack according to any one of <1> to <4>,
wherein the resin structure has air permeance of 1,000 sec/100 mL or less.
<6> The electrode stack according to any one of <1> to <5>,
wherein the resin structure is an adhesive resin structure.
<7> The electrode stack according to <6>,
wherein the adhesive resin structure has a peel strength of 2 N/m or greater.
<8> The electrode stack according to any one of <1> to <7>,
wherein the resin structure has a compressibility of 1% or greater and 50% or less as pressed at 500 MPa for 5 minutes.
<9> The electrode stack according to any one of <1> to <8>,
wherein the resin structure is adjacent to the electrode composite material layer.
<10> The electrode stack according to any one of <1> to <9>,
wherein at least part of the resin structure is adhered to a surface of another base.
<11> The electrode stack according to any one of <1> to <10>,
wherein the resin structure has a first portion and a second portion that is different from the first portion, where the first portion and the second portion have mutually different compressibility as a load is applied, and the first portion and the second portion are arranged along a horizontal direction relative to the electrode substrate.
<12> An electrochemical element including
the electrode stack according to any one of <1> to <11>.
<13> A method for producing an electrode stack, the method including:

applying a liquid composition onto an edge of an electrode substrate, the liquid composition including a polymerizable compound and a liquid;
applying heat or light to the liquid composition to polymerize the polymerizable compound to form a resin structure;
forming an electrode composite material layer on the electrode substrate;
pressing the electrode composite material layer and the resin structure; and
forming a solid electrolyte layer on the electrode composite material layer and the resin structure,

wherein the forming the electrode composite material layer is performed before the applying the liquid composition or after the applying heat or light,

the electrode composite material layer and the resin structure are formed to be adjacent to each other,
light transmittance of the liquid composition measured at a wavelength of 550 nm under stirring is 30% or greater, and
an increase rate of a Haze value of a Haze measurement element prepared by polymerizing the liquid composition is 1.0% or greater.

<14> The method according to <13>, further including:
transporting the electrode substrate on which the electrode composite material layer is formed,

wherein the forming the electrode composite material layer is performed before the applying the liquid composition,
the applying the liquid composition includes applying the liquid composition onto a periphery of the electrode composite material layer on the transported electrode substrate to form the liquid composition layer,
wherein the applying heat or light is carried out when 90% or greater of a continuous region of the liquid composition layer in contact with one edge face of the electrode composite material layer satisfies (1) and (2):

(1) both a minimum value and a maximum value of a height of the liquid composition layer at an interface with the edge face of the electrode composite material layer are 30% or greater and 100% or less relative

to a thickness of the electrode composite material layer, and
(2) a thickness of an edge of the liquid composition layer in contact with the electrode substrate on which the electrode composite material layer is formed is 80% or greater and 140% or less relative to the thickness of the electrode composite material layer.

<15> An electrode stack production apparatus including:

a storage container, in which a liquid composition is stored, the liquid composition including a polymerizable compound and a liquid;
an applicator configured to apply the liquid composition onto an edge of an electrode substrate;
a polymerizing unit configured to apply heat or light to the liquid composition to polymerize the liquid composition to form a resin structure;
an electrode-composite-material-layer forming unit configured to form an electrode composite material layer on the electrode substrate;
a press configured to press the electrode composite material layer and the resin structure in a direction towards a plane of the electrode substrate; and
a solid-electrolyte-layer forming unit configured to form a solid electrolyte layer on the electrode composite material layer and the resin structure,

wherein the electrode composite material layer and the resin structure are formed to be adjacent to each other, light transmittance of the liquid composition measured at a wavelength of 550 nm under stirring is 30% or greater, and
an increase rate of a Haze value of a Haze measurement element prepared by polymerizing the liquid composition is 1.0% or greater.

The electrode stack according to any one of <1> to <11>, the electrochemical element according to <12>, the method for producing an electrode stack according to <13> or <14>, and the method for producing an electrode stack according to <15> can solve the above-described various problems existing in the related art, and can achieve the above-described object of the present disclosure.

## Claims

1. An electrode stack comprising:

   an electrode substrate;
   an electrode composite material layer disposed on the electrode substrate;
   a resin structure disposed on a periphery of the electrode composite material layer; and
   a solid electrolyte layer disposed on the electrode composite material layer and the resin structure,

   wherein the resin structure has a bicontinuous structure where a resin constitutes a skeleton of the bicontinuous structure.

2. The electrode stack according to claim 1, wherein a ratio (B/A) of an average thickness B of the resin structure to an average thickness A of the electrode composite material layer is 0.97 or greater and 1.03 or less.

3. The electrode stack according to claim 1, wherein the resin structure is porous.

4. The electrode stack according to claim 1, wherein the resin structure has a porosity of 30% or greater.

5. The electrode stack according to claim 1, wherein the resin structure has air permeance of 1,000 sec/100 mL or less.

6. The electrode stack according to claim 1, wherein the resin structure is an adhesive resin structure.

7. The electrode stack according to claim 6, wherein the adhesive resin structure has a peel strength of 2 N/m or greater.

8. The electrode stack according to claim 1, wherein the resin structure has a compressibility of 1% or greater and 50% or less as pressed at 500 MPa for 5 minutes.

**9.** The electrode stack according to claim 1, wherein the resin structure is adjacent to the electrode composite material layer.

**10.** The electrode stack according to claim 1, wherein at least part of the resin structure is adhered to a surface of another base.

**11.** The electrode stack according to claim 1, wherein the resin structure has a first portion and a second portion that is different from the first portion, where the first portion and the second portion have mutually different compressibility as a load is applied, and the first portion and the second portion are arranged along a horizontal direction relative to the electrode substrate.

**12.** An electrochemical element comprising:
the electrode stack according to any one of claims 1 to 11.

**13.** A method for producing an electrode stack, the method comprising:

applying a liquid composition onto an edge of an electrode substrate, the liquid composition including a polymerizable compound and a liquid;
applying heat or light to the liquid composition to polymerize the polymerizable compound to form a resin structure;
forming an electrode composite material layer on the electrode substrate;
pressing the electrode composite material layer and the resin structure; and
forming a solid electrolyte layer on the electrode composite material layer and the resin structure,
wherein the forming the electrode composite material layer is performed before the applying the liquid composition or after the applying heat or light,
the electrode composite material layer and the resin structure are formed to be adjacent to each other,
light transmittance of the liquid composition measured at a wavelength of 550 nm under stirring is 30% or greater, and
an increase rate of a Haze value of a Haze measurement element prepared by polymerizing the liquid composition is 1.0% or greater.

**14.** The method according to claim 13, further comprising:
transporting the electrode substrate on which the electrode composite material layer is formed,

wherein the forming the electrode composite material layer is performed before the applying the liquid composition,
the applying the liquid composition includes applying the liquid composition onto a periphery of the electrode composite material layer on the transported electrode substrate to form the liquid composition layer,
wherein the applying heat or light is carried out when 90% or greater of a continuous region of the liquid composition layer in contact with one edge face of the electrode composite material layer satisfies (1) and (2):

(1) both a minimum value and a maximum value of a height of the liquid composition layer at an interface with the edge face of the electrode composite material layer are 30% or greater and 100% or less relative to a thickness of the electrode composite material layer, and
(2) a thickness of an edge of the liquid composition layer in contact with the electrode substrate on which the electrode composite material layer is formed is 80% or greater and 140% or less relative to the thickness of the electrode composite material layer.

**15.** An electrode stack production apparatus, comprising:

a storage container, in which a liquid composition is stored, the liquid composition including a polymerizable compound and a liquid;
an applicator configured to apply the liquid composition onto an edge of an electrode substrate;
a polymerizing unit configured to apply heat or light to the liquid composition to polymerize the liquid composition to form a resin structure;
an electrode-composite-material-layer forming unit configured to form an electrode composite material layer on the electrode substrate;
a press configured to press the electrode composite material layer and the resin structure in a direction towards

a plane of the electrode substrate; and

a solid-electrolyte-layer forming unit configured to form a solid electrolyte layer on the electrode composite material layer and the resin structure,

wherein the electrode composite material layer and the resin structure are formed to be adjacent to each other, light transmittance of the liquid composition measured at a wavelength of 550 nm under stirring is 30% or greater, and

an increase rate of a Haze value of a Haze measurement element prepared by polymerizing the liquid composition is 1.0% or greater.

FIG.1

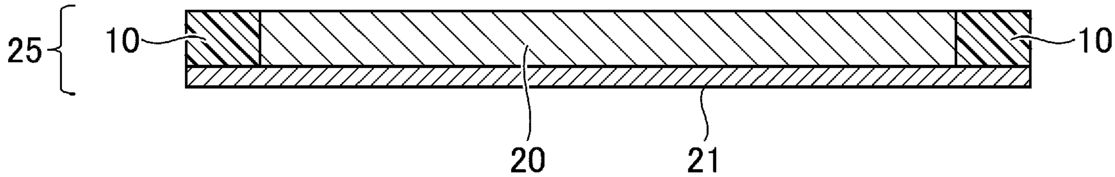


FIG.2A

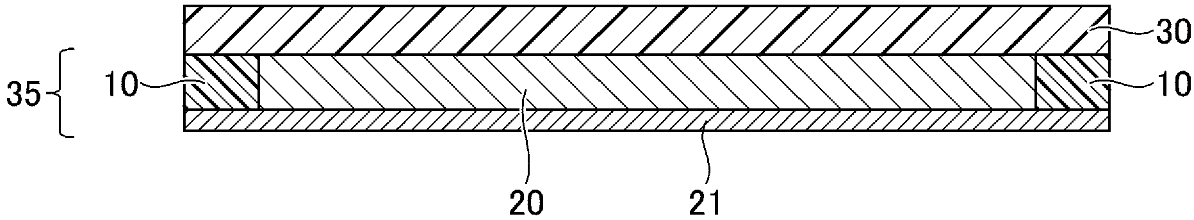


FIG.2B

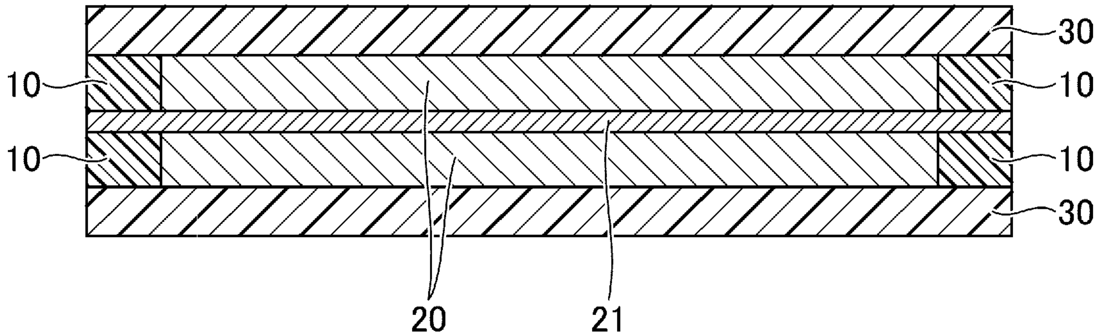

FIG.2C

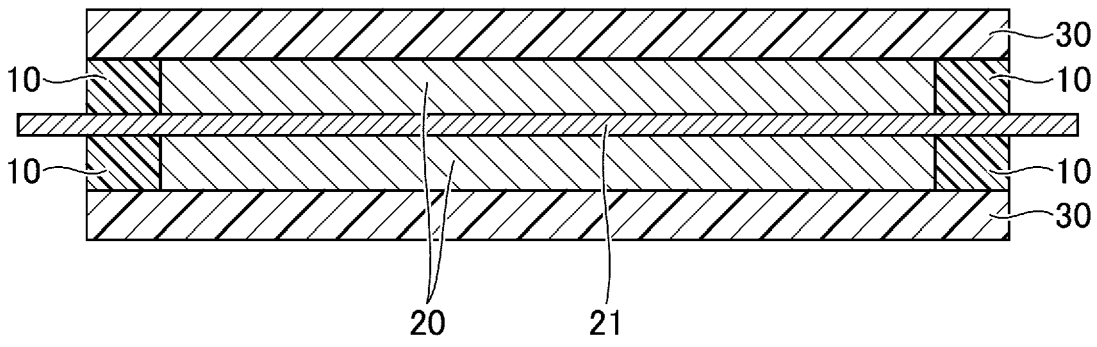


FIG.2D

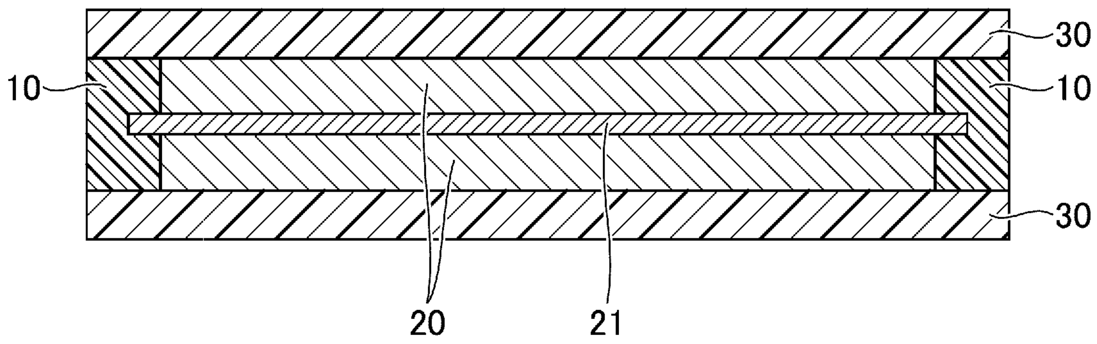


FIG.3

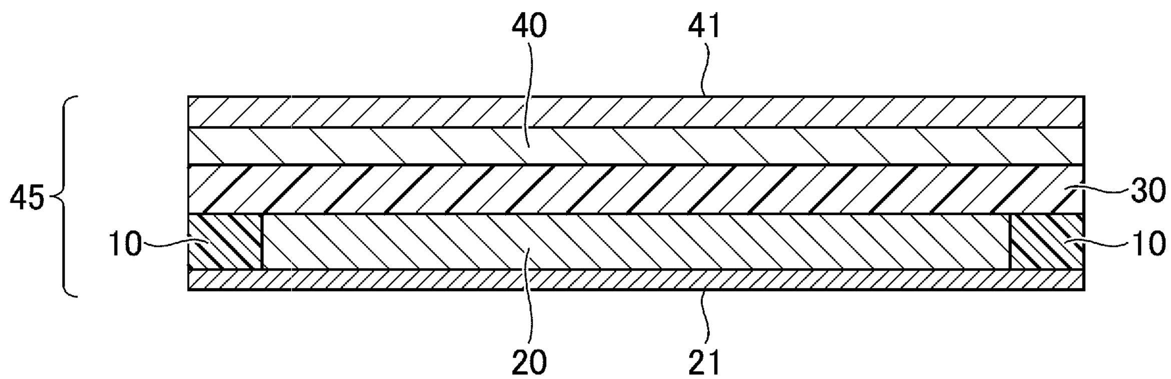

FIG.4

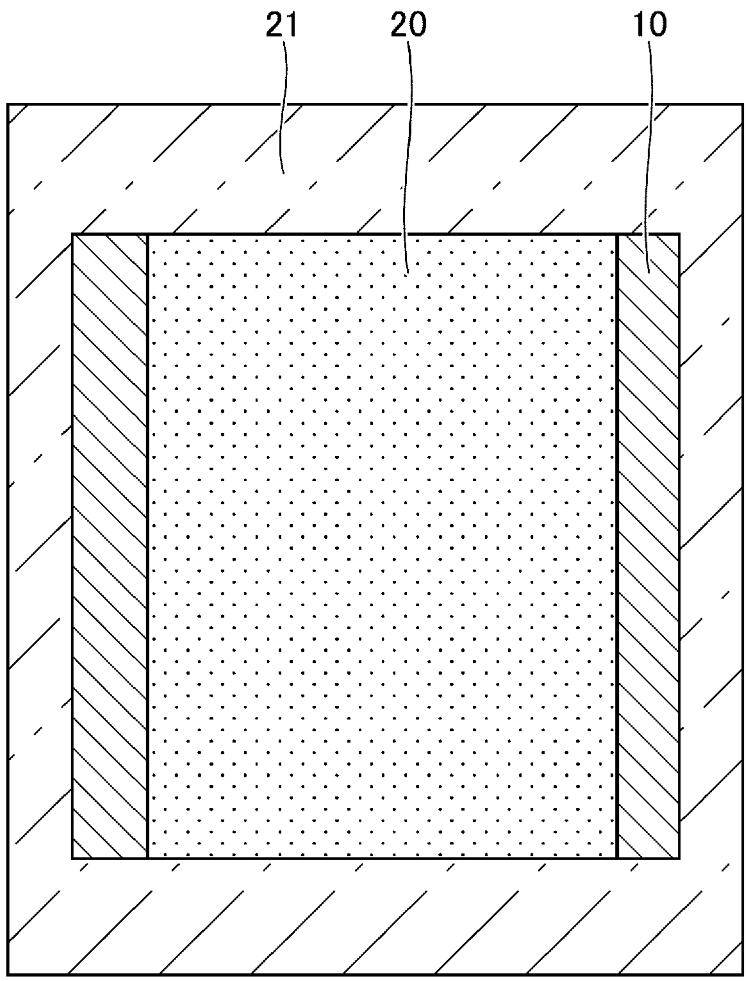

FIG.5

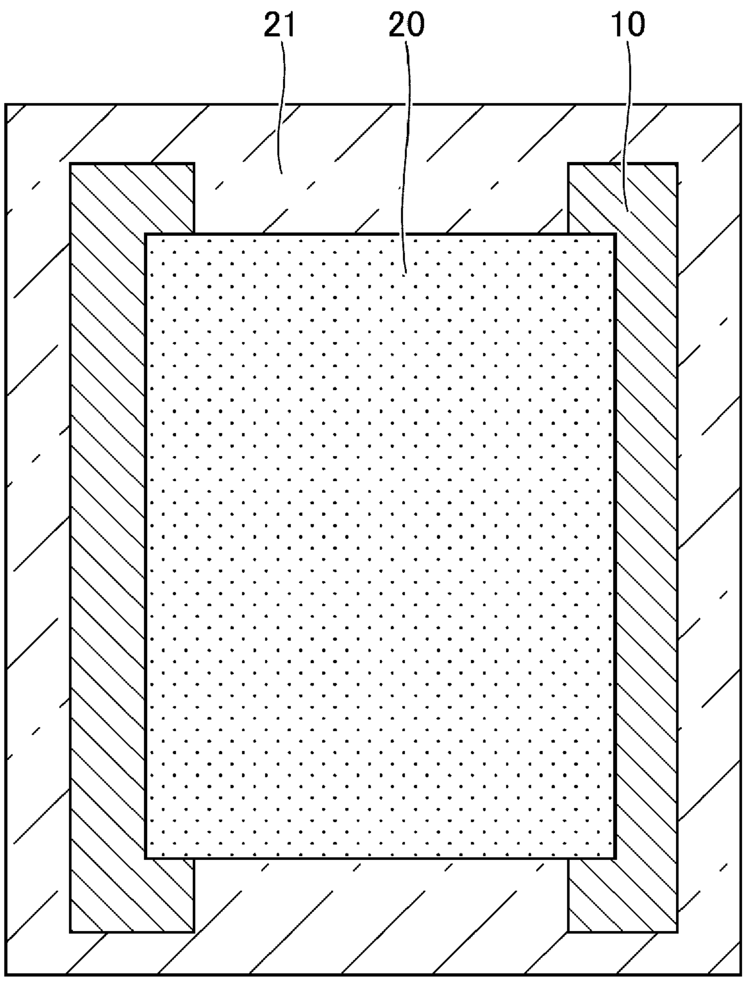

FIG.6A

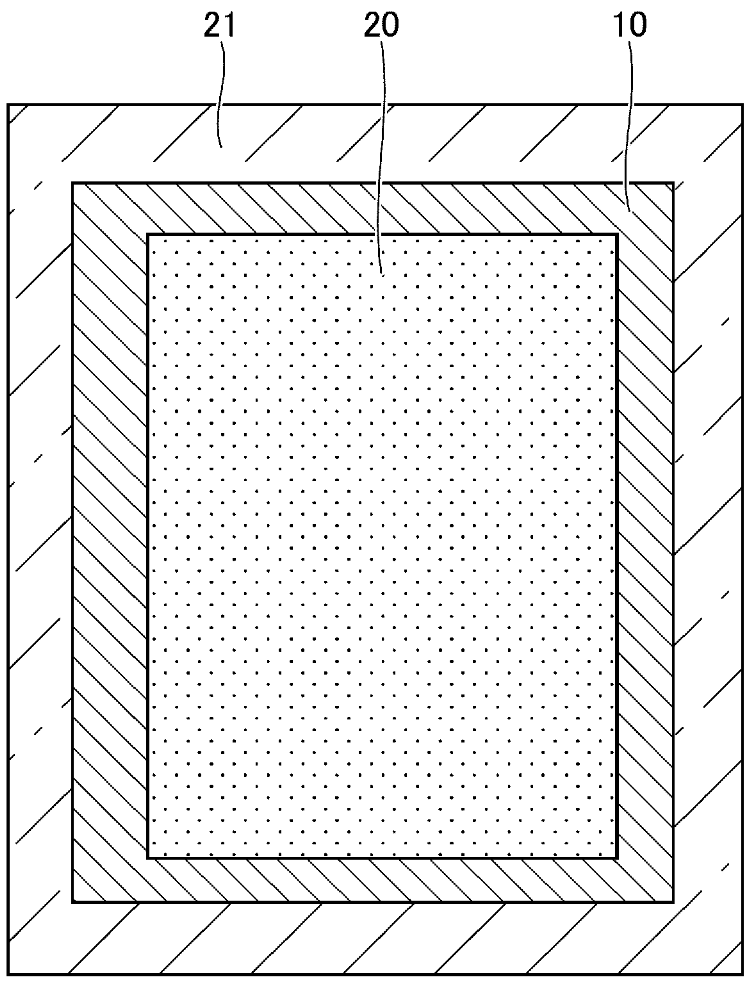

FIG.6B

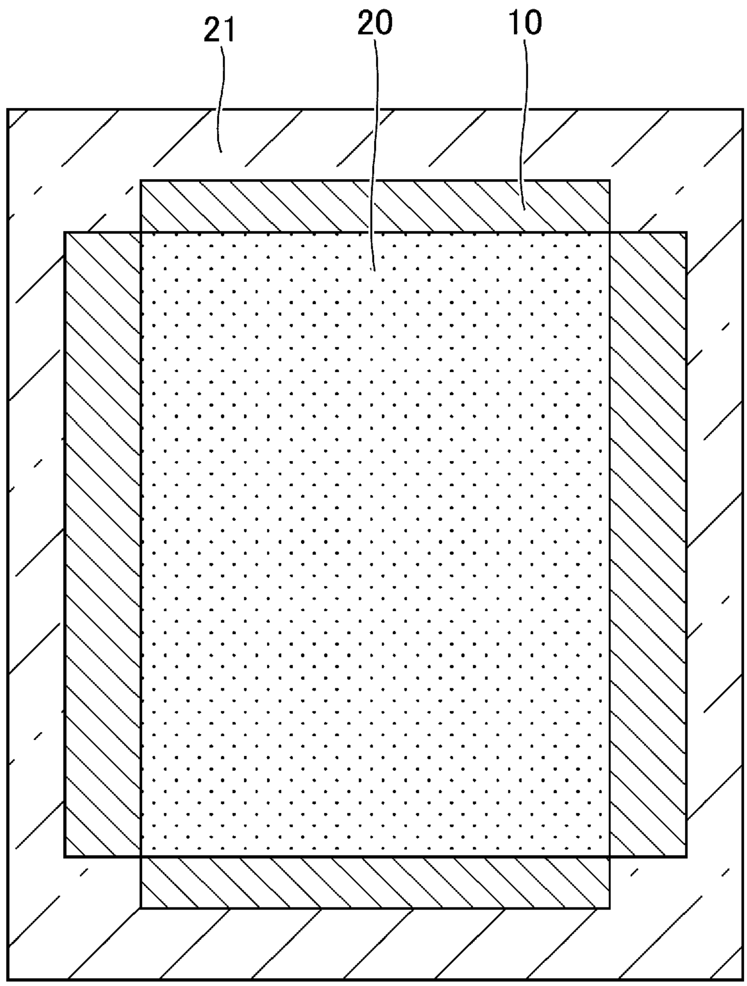

FIG.6C

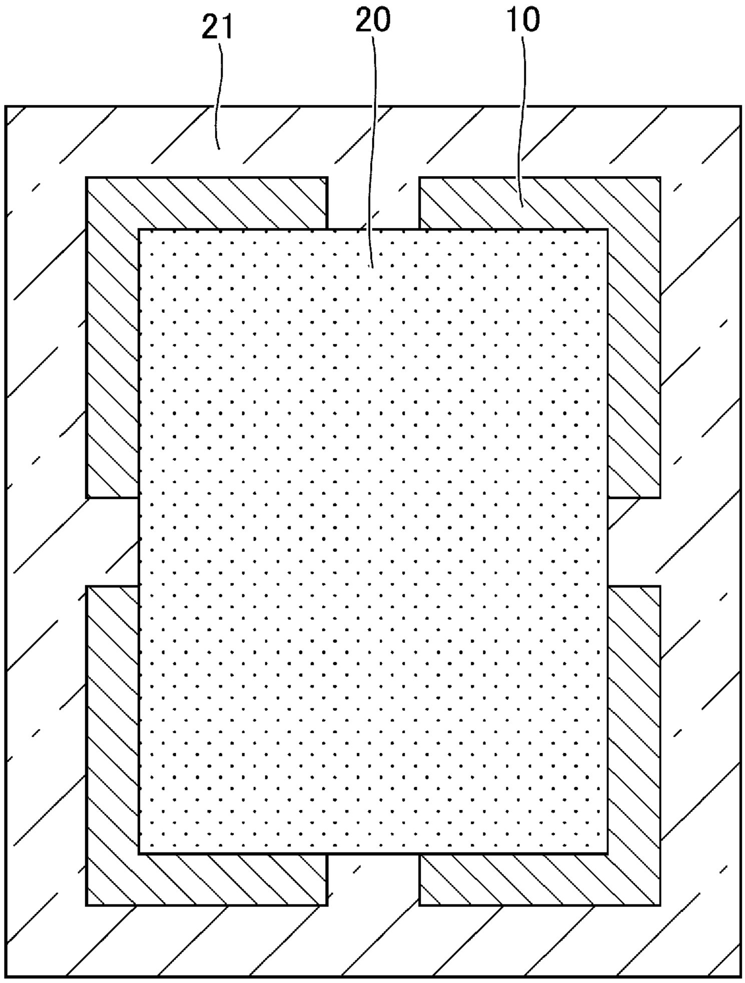

FIG.6D

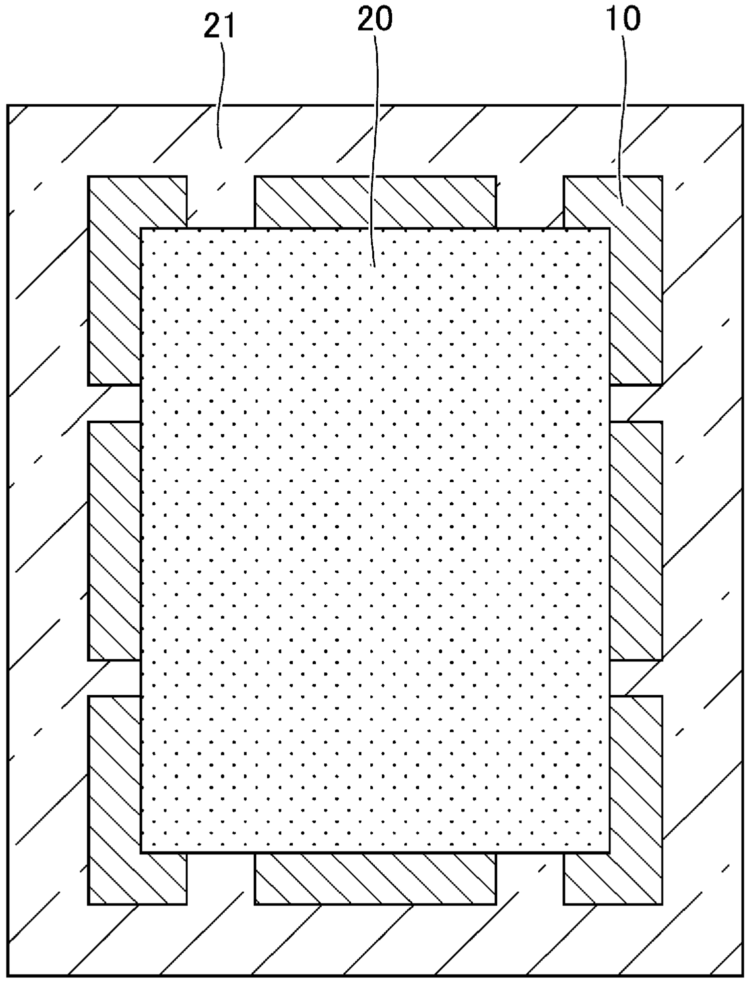

FIG.6E

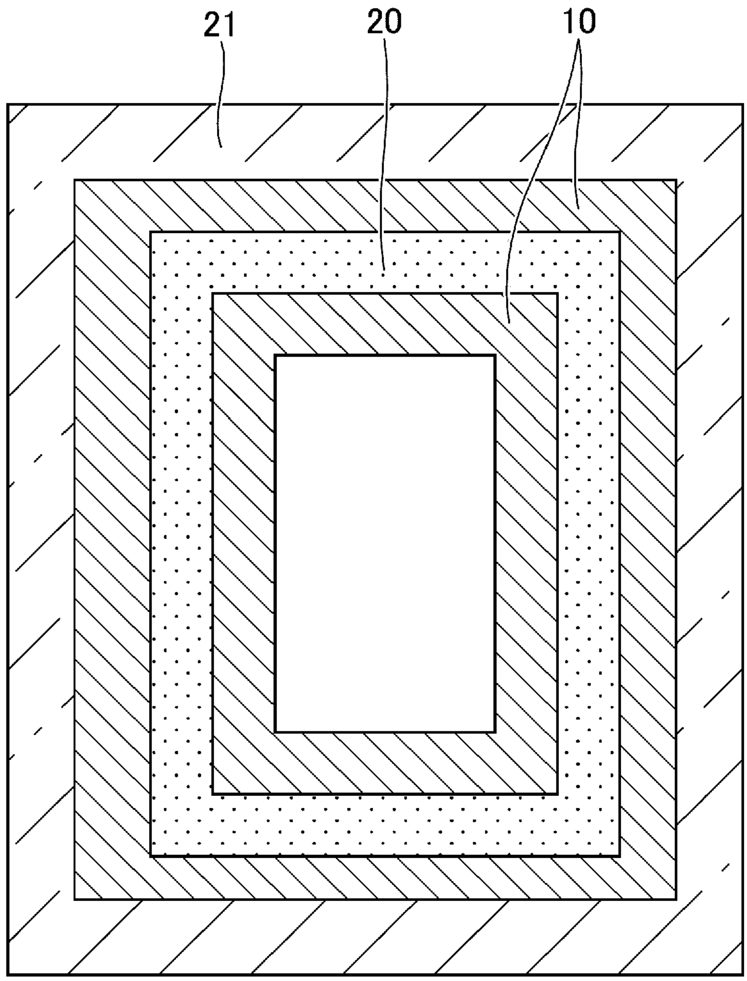

FIG.6F

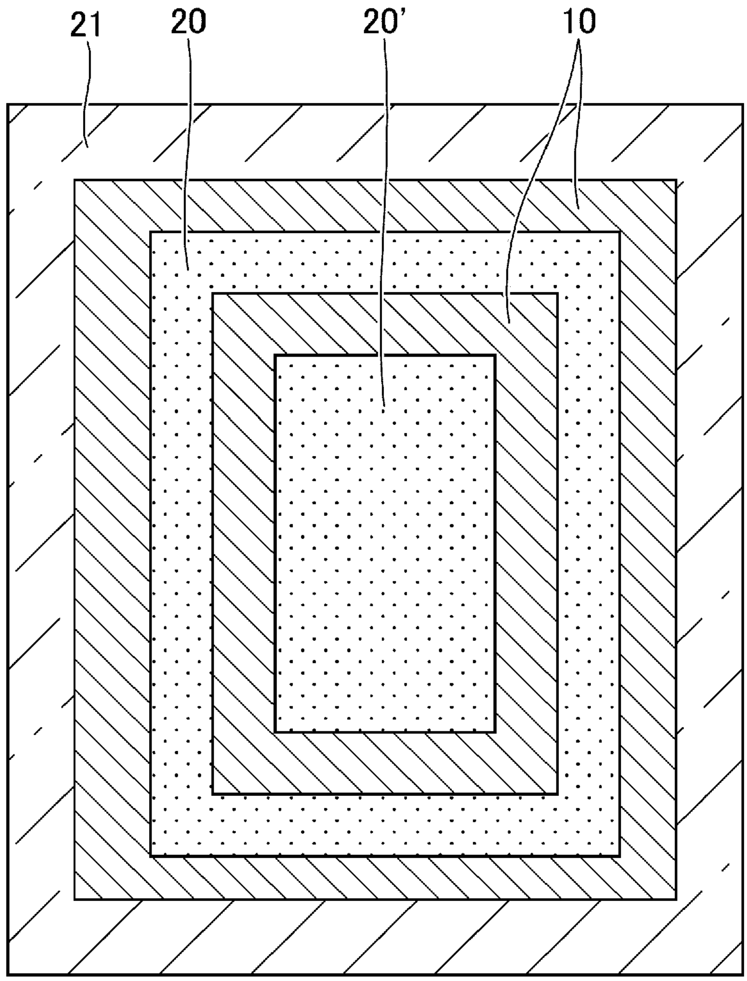

FIG.6G

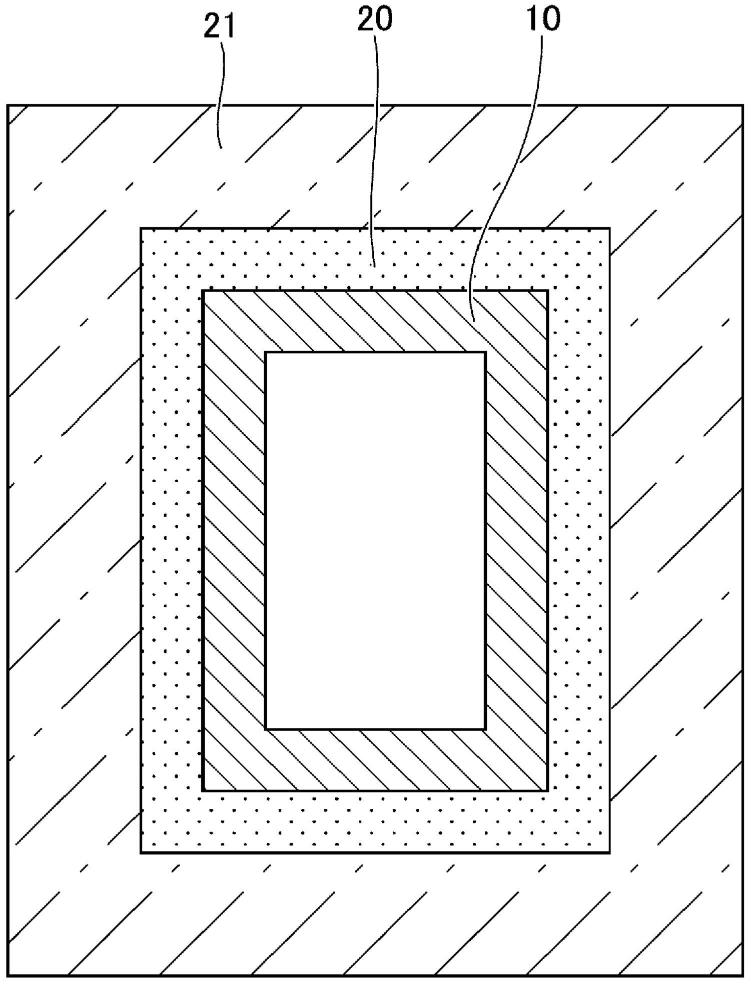

FIG.7

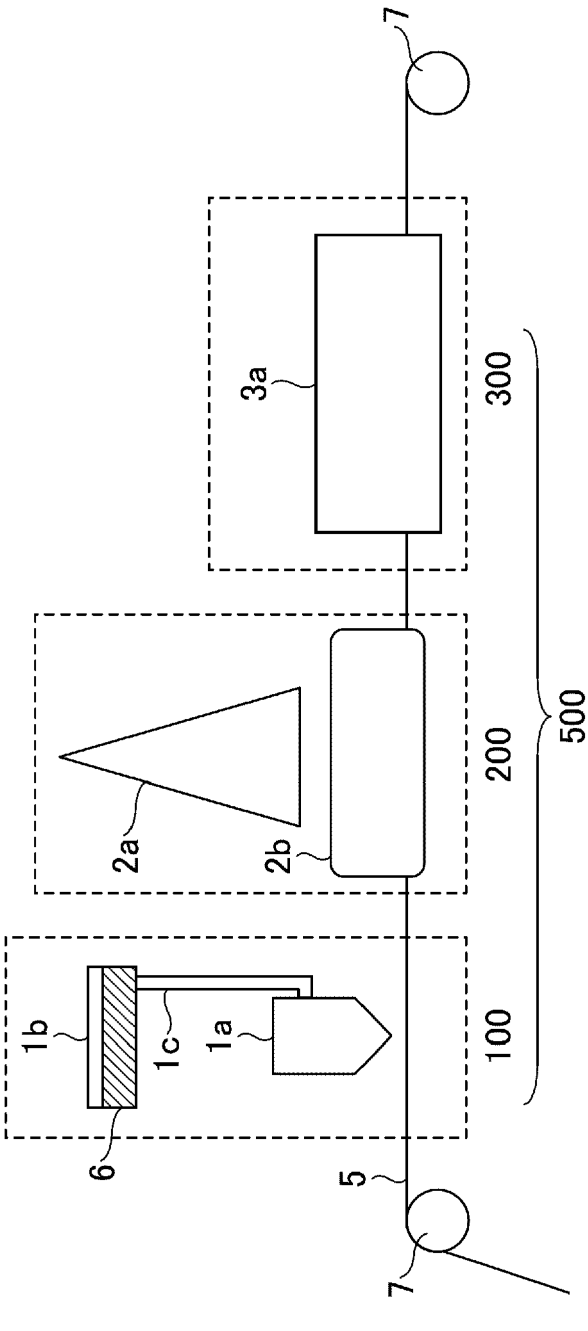

FIG.8

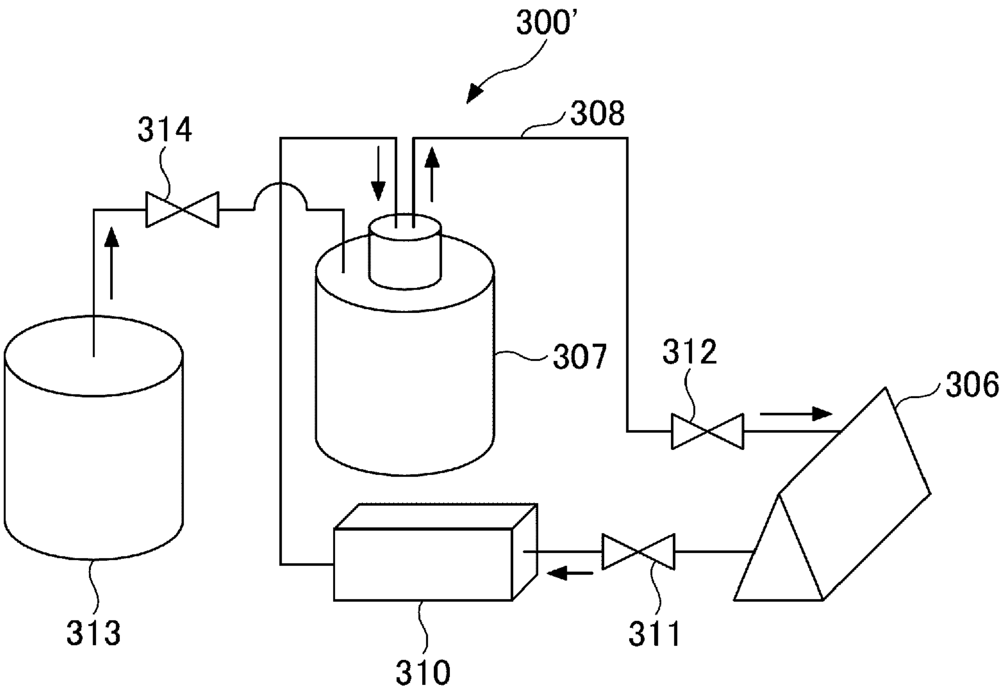

FIG.9

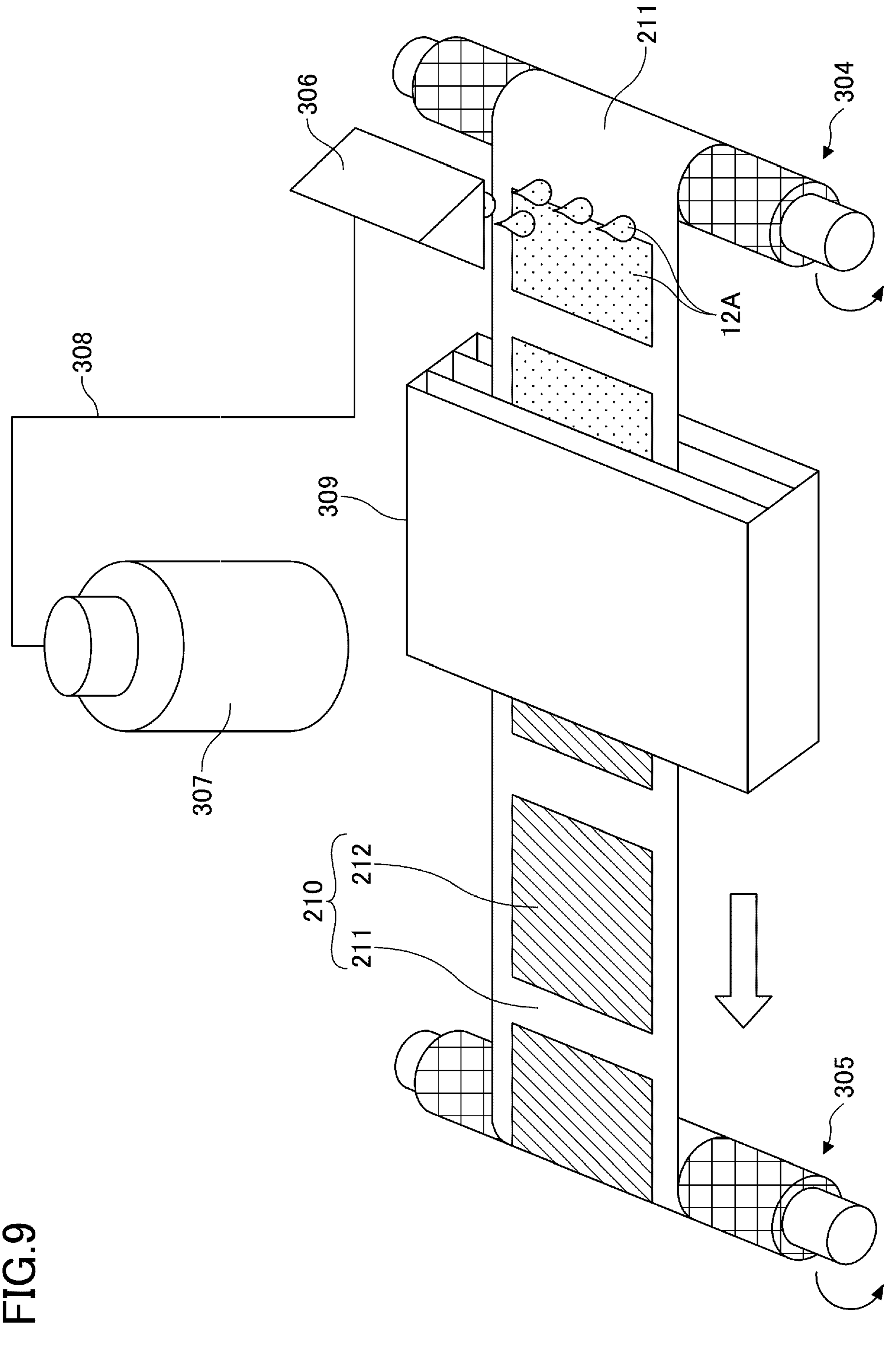

FIG.10

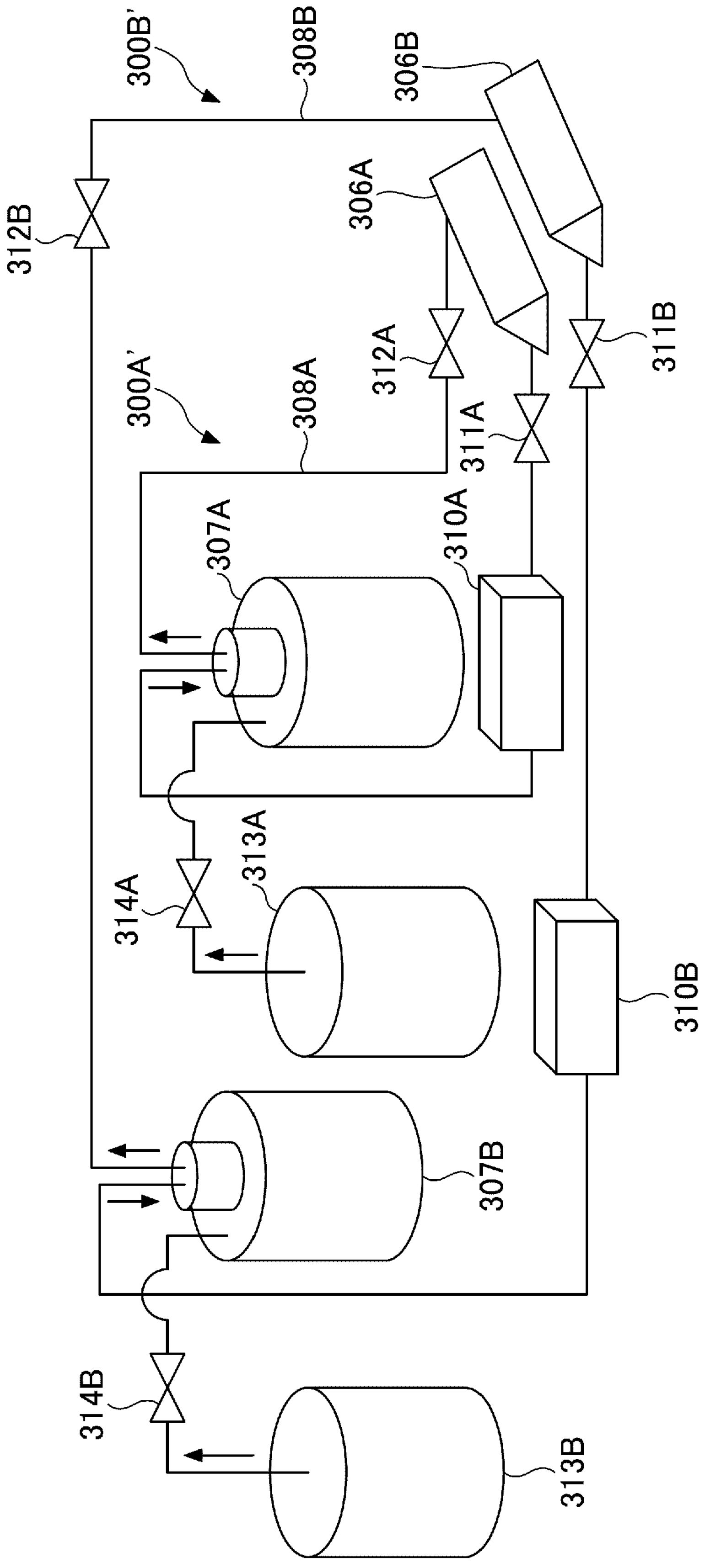
300B'
308B
306B
312B
306A
312A
311B
300A'
308A
311A
307A
310A
313A
314A
310B
307B
314B
313B

FIG.11

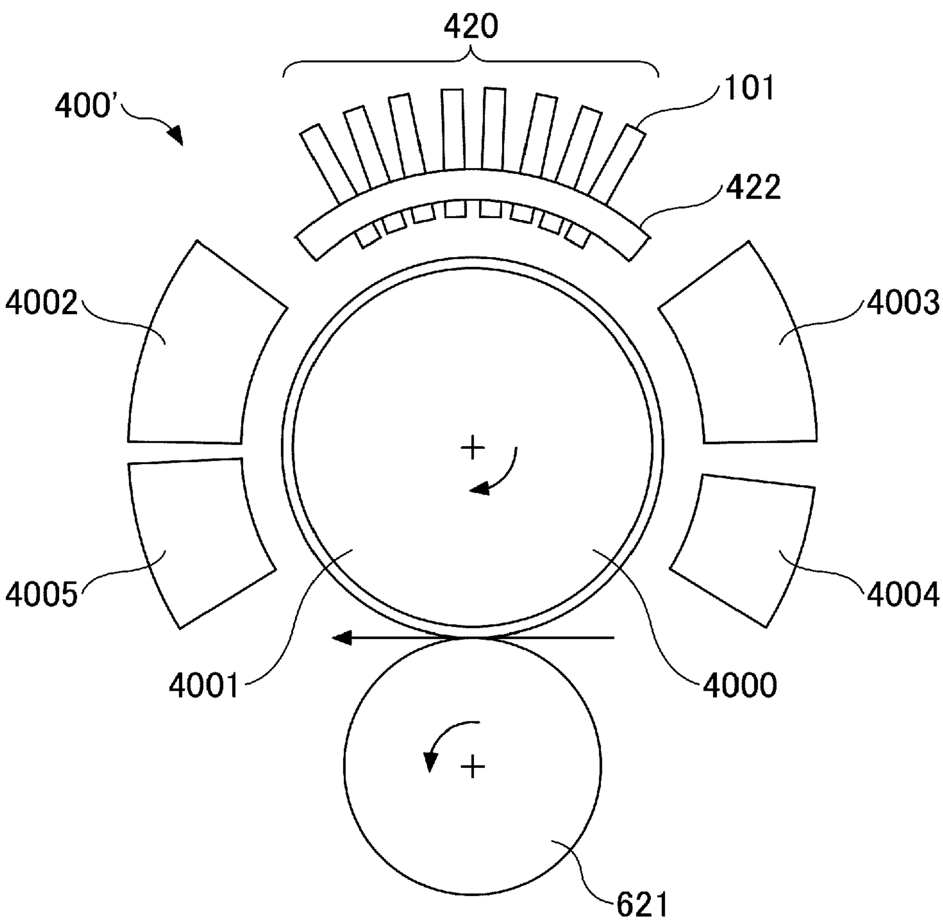

FIG.12

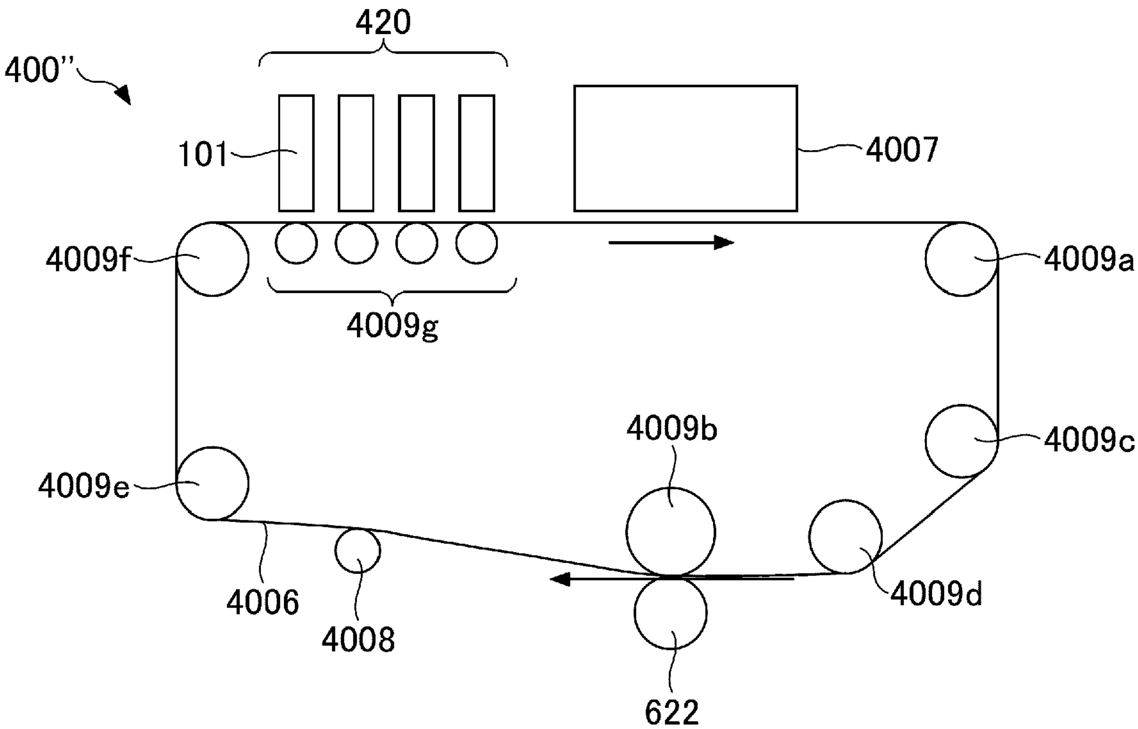
420
400''
101
4007
4009f
4009a
4009g
4009b
4009c
4009e
4006
4008
4009d
622

FIG.13A

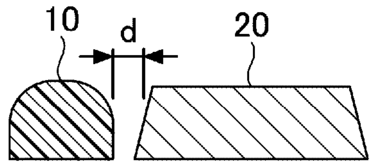


FIG.13B

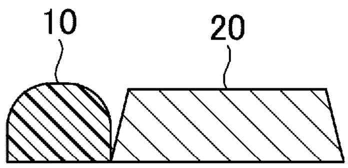


FIG.13C

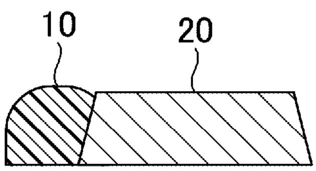


FIG.13D

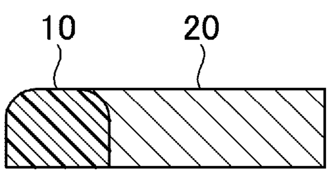

FIG.14A

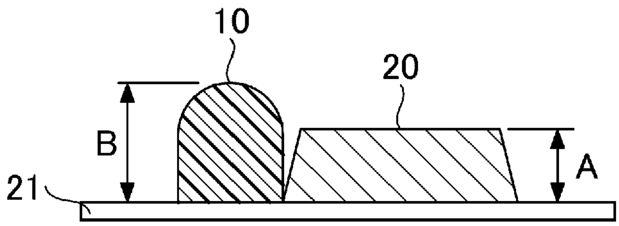


FIG.14B

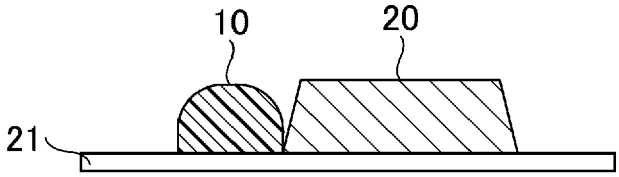


FIG.14C

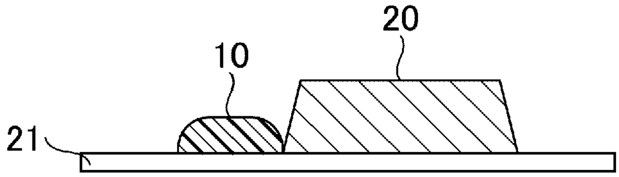

FIG.15

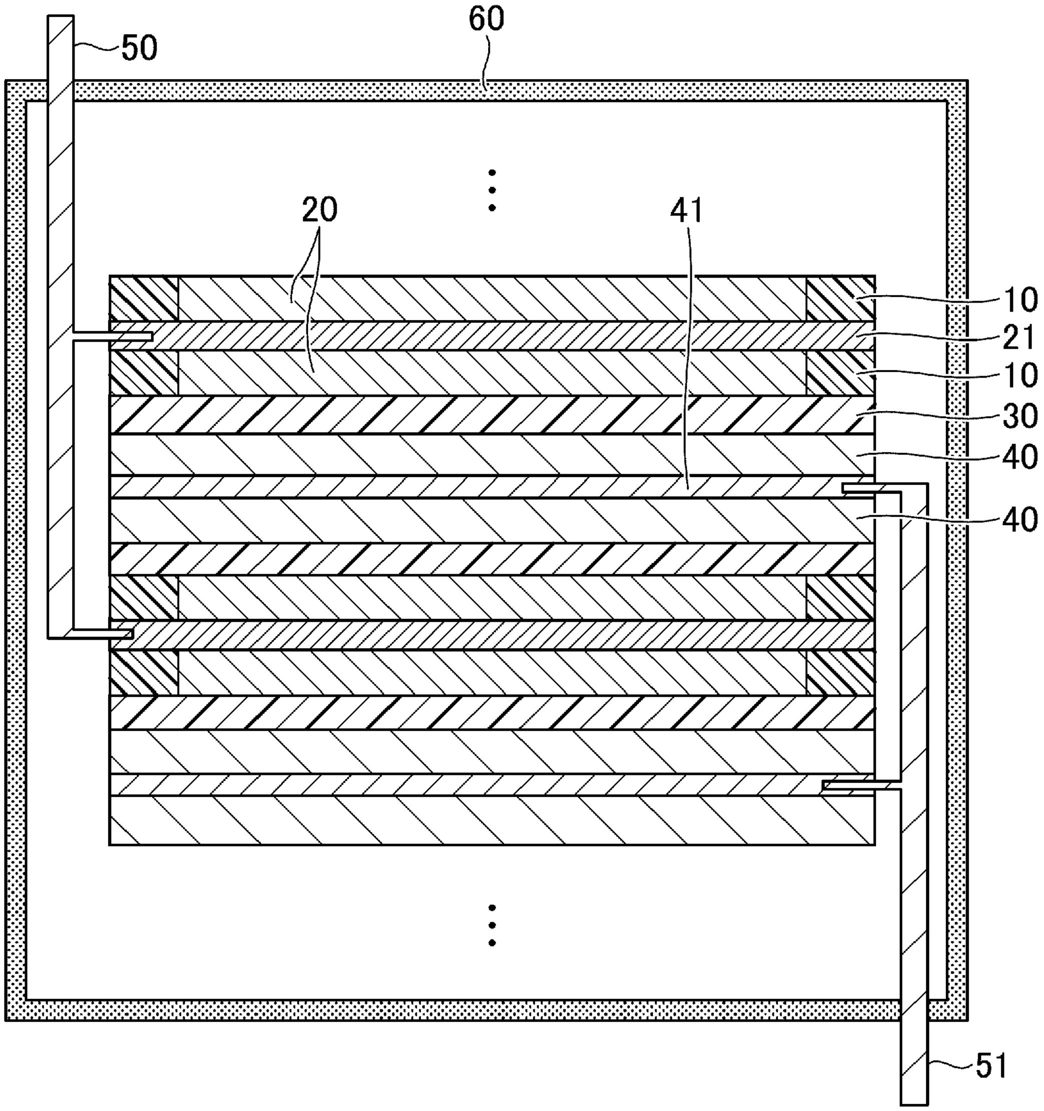

FIG.16

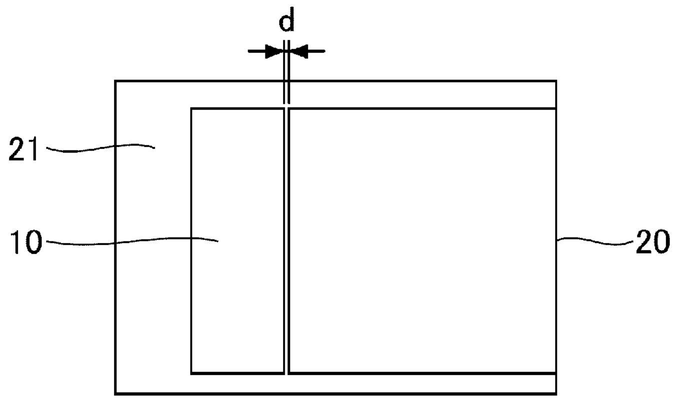


FIG.17

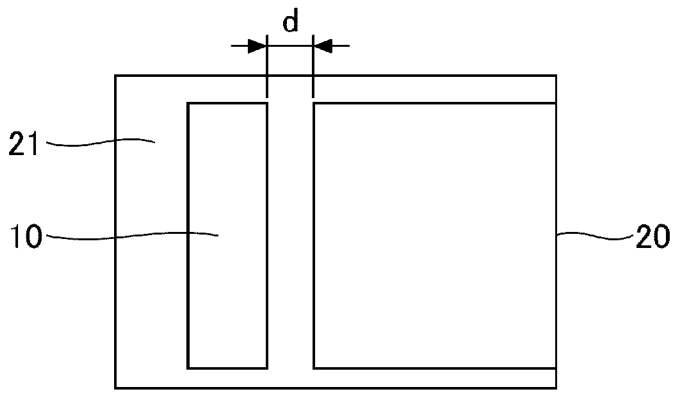


FIG.18

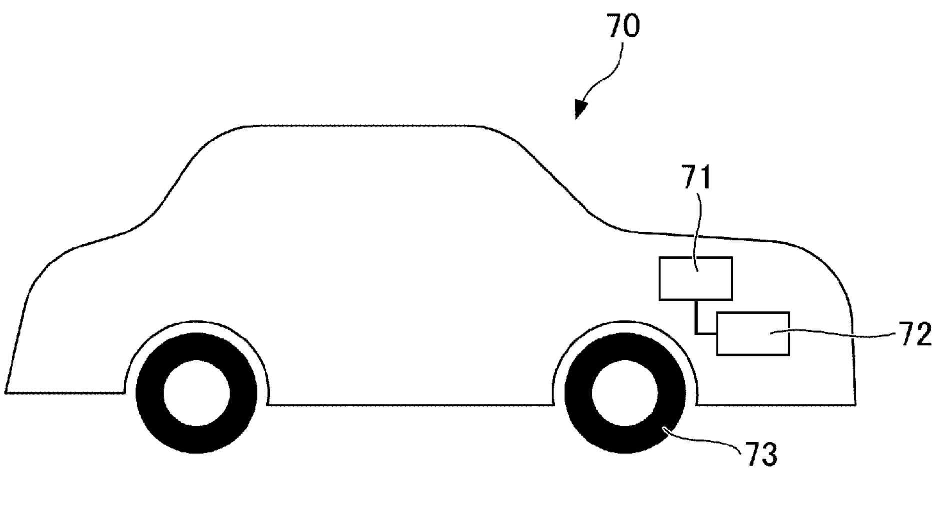

FIG.19

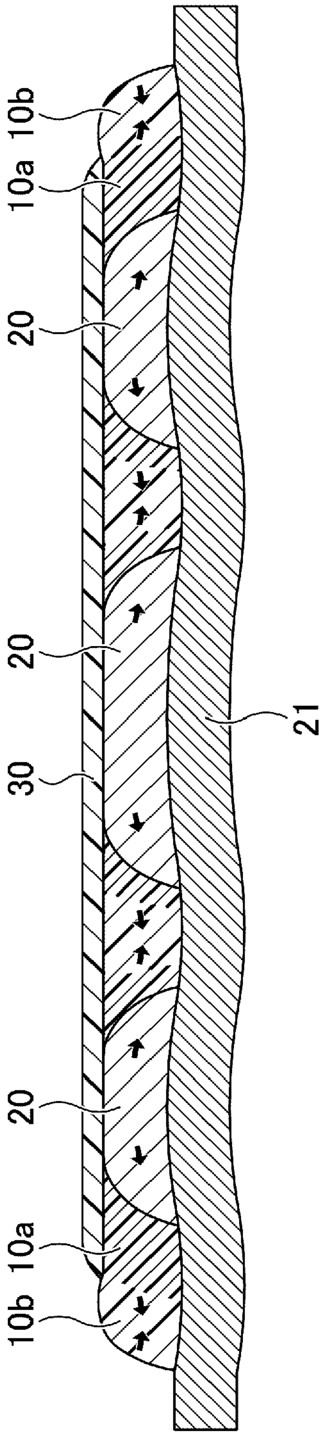

FIG.20

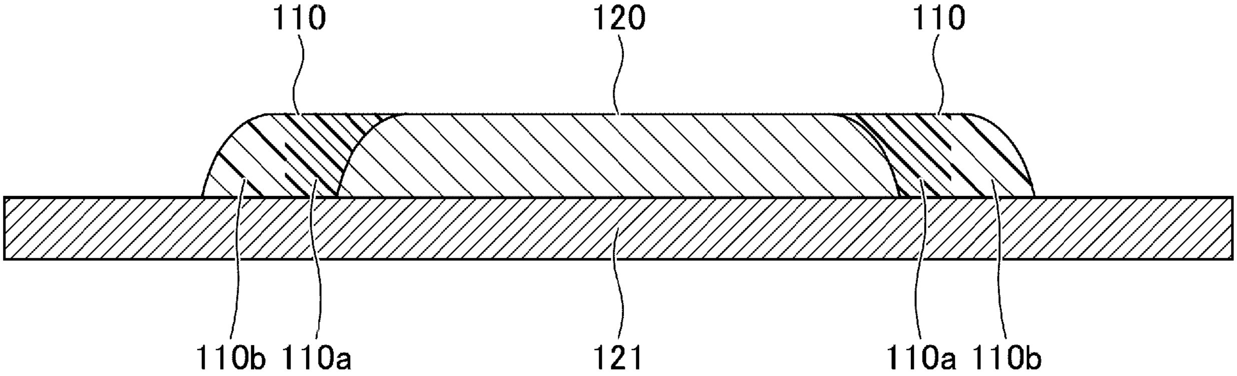


FIG.21

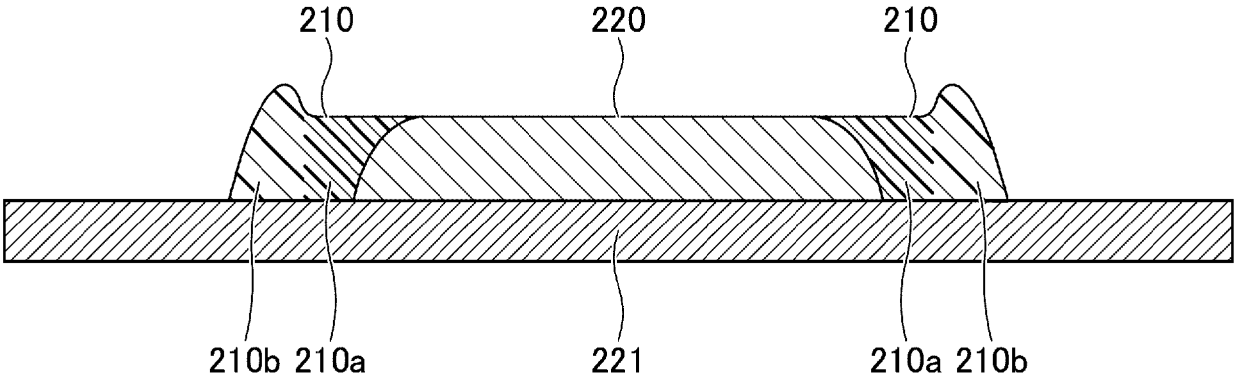


FIG.22

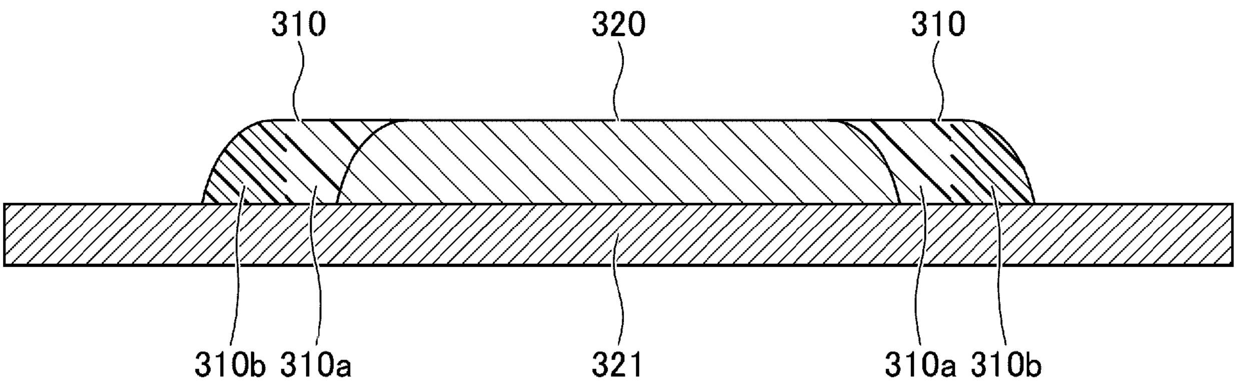

FIG.23

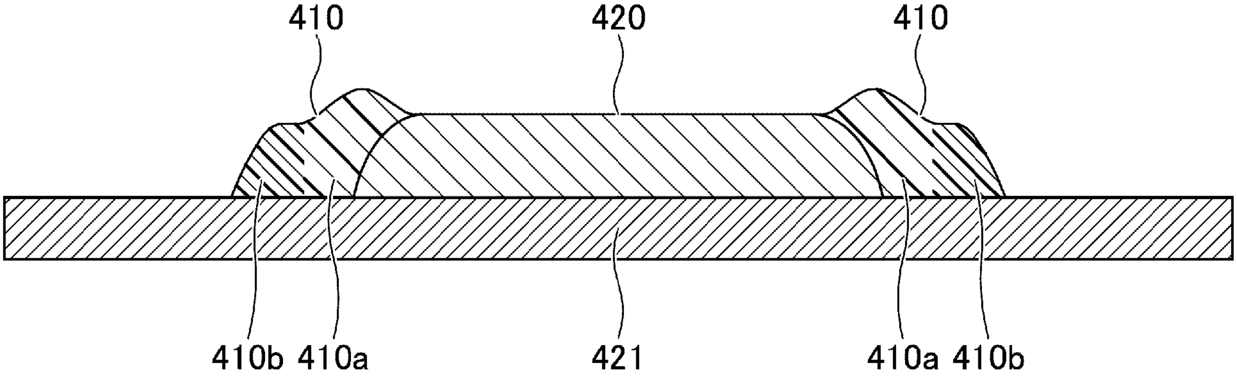


FIG.24

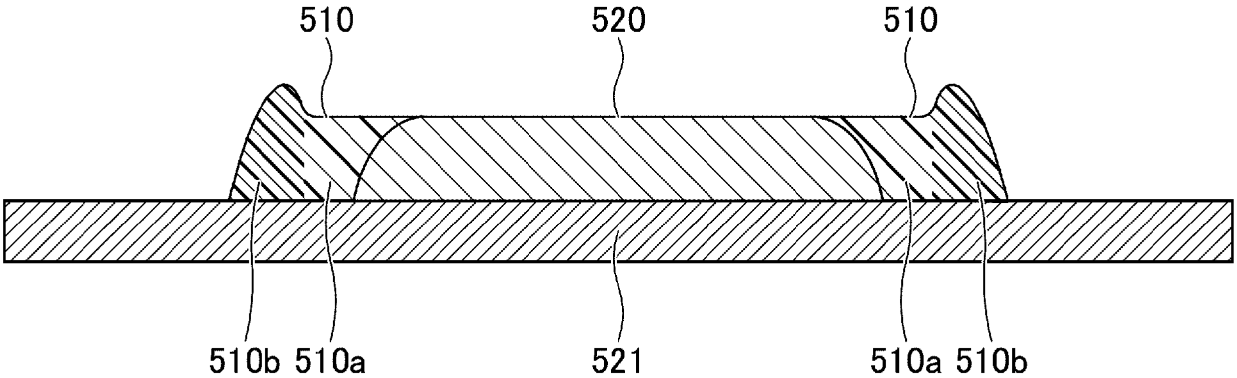


FIG.25

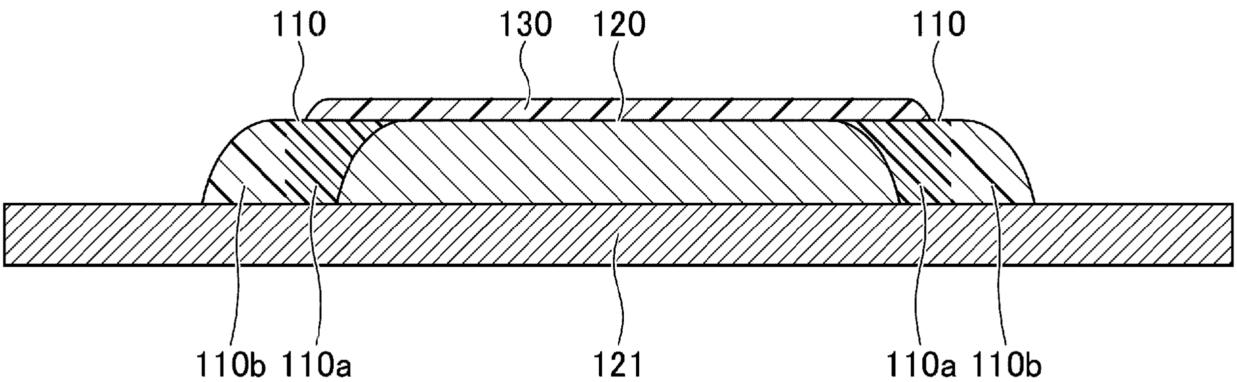

FIG.26

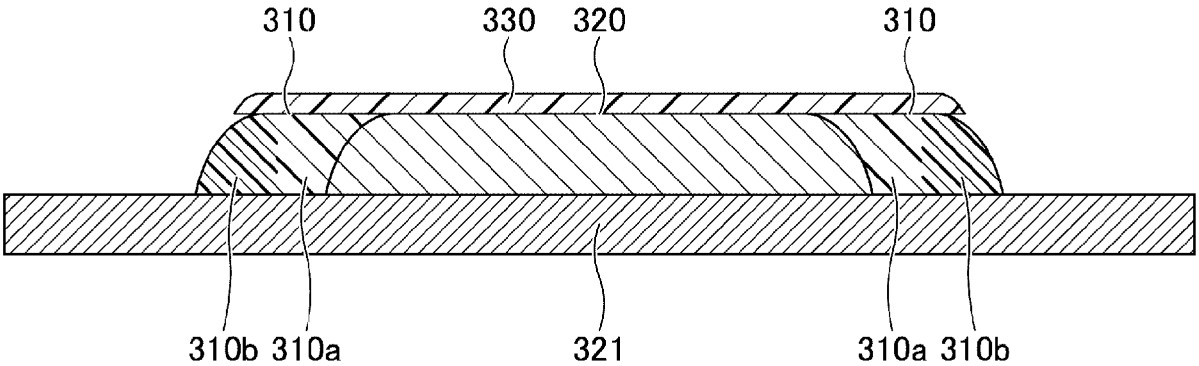


FIG.27

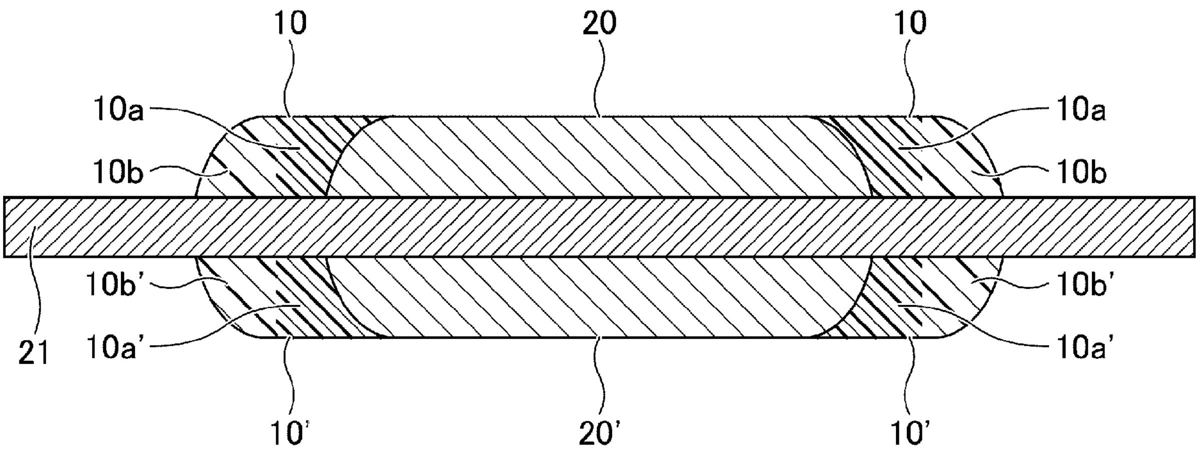


FIG.28

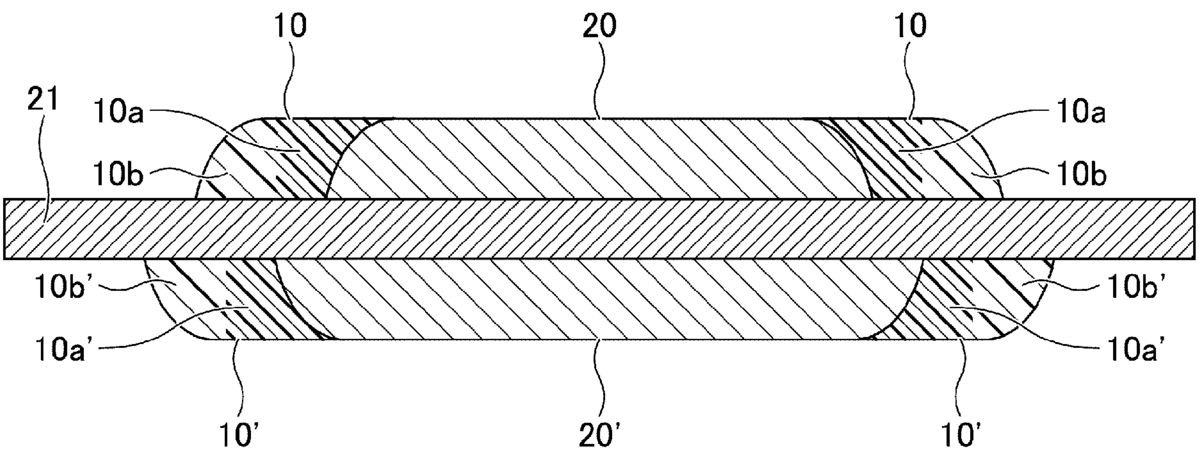

FIG.29

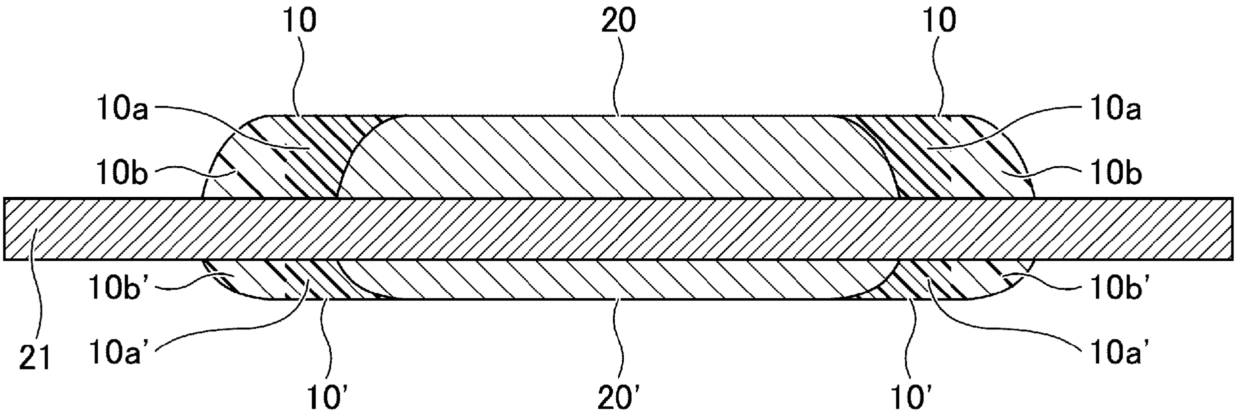
10
20
10
10a
10a
10b
10b
10b'
10b'
21
10a'
10a'
10'
20'
10'

FIG.30

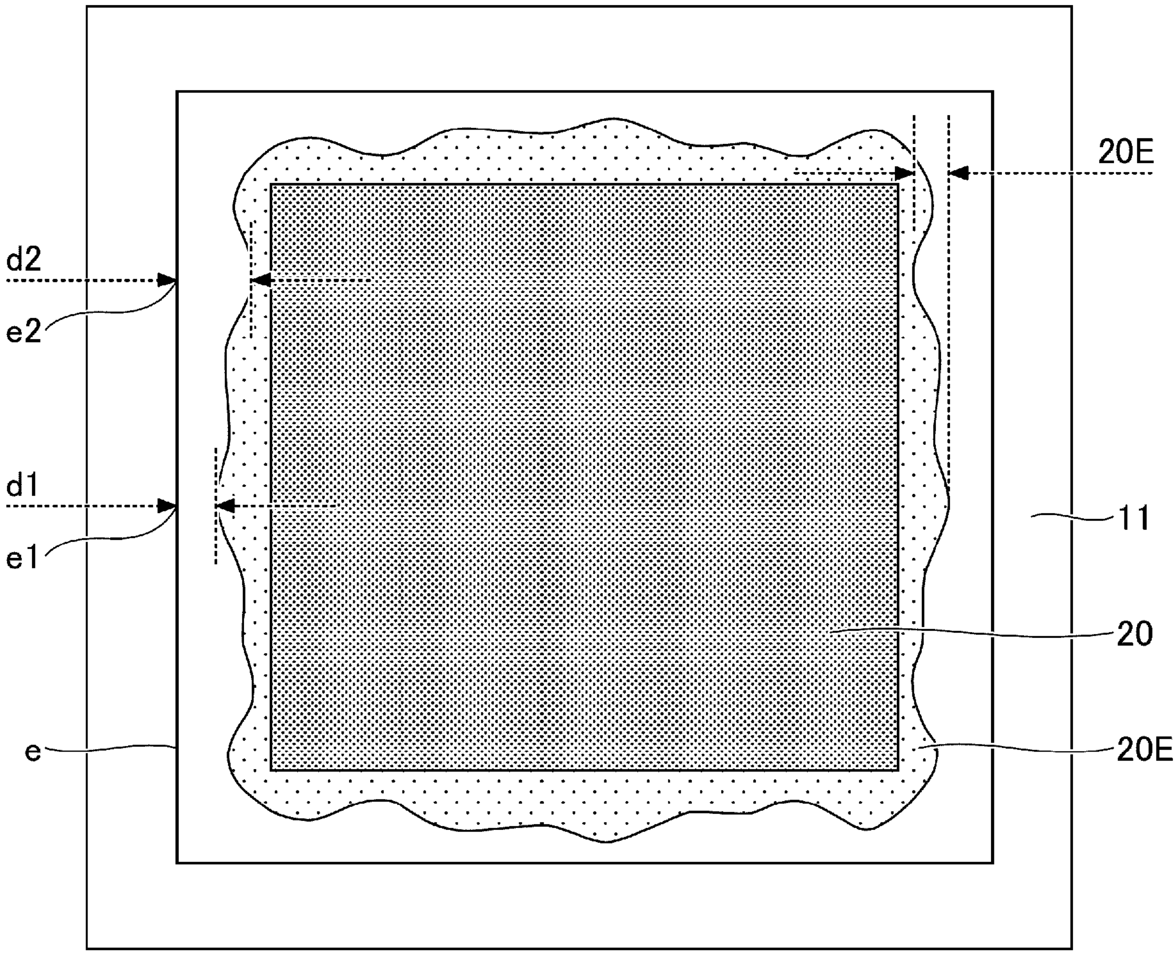
20E
d2
e2
d1
e1
11
20
e
20E

FIG.31

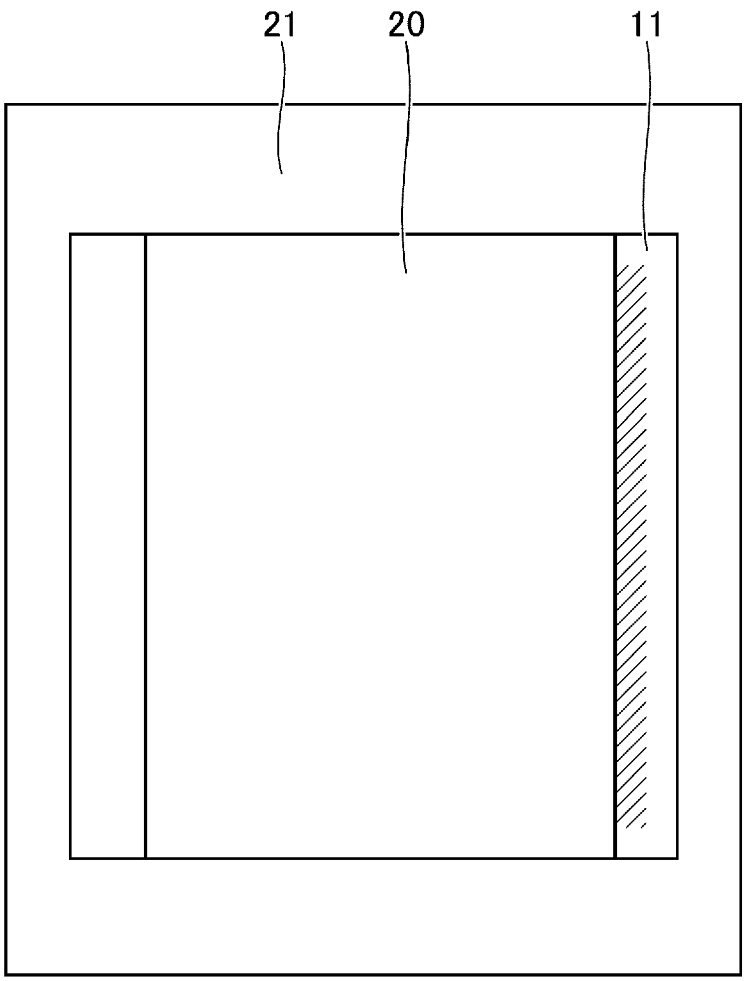

FIG.32

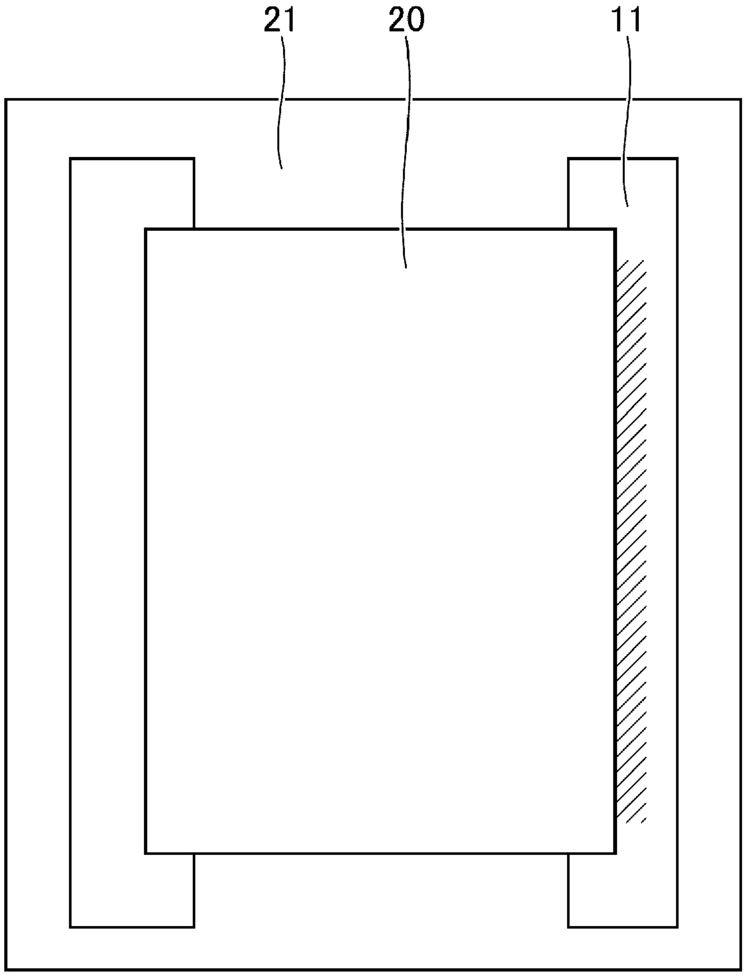

FIG.33

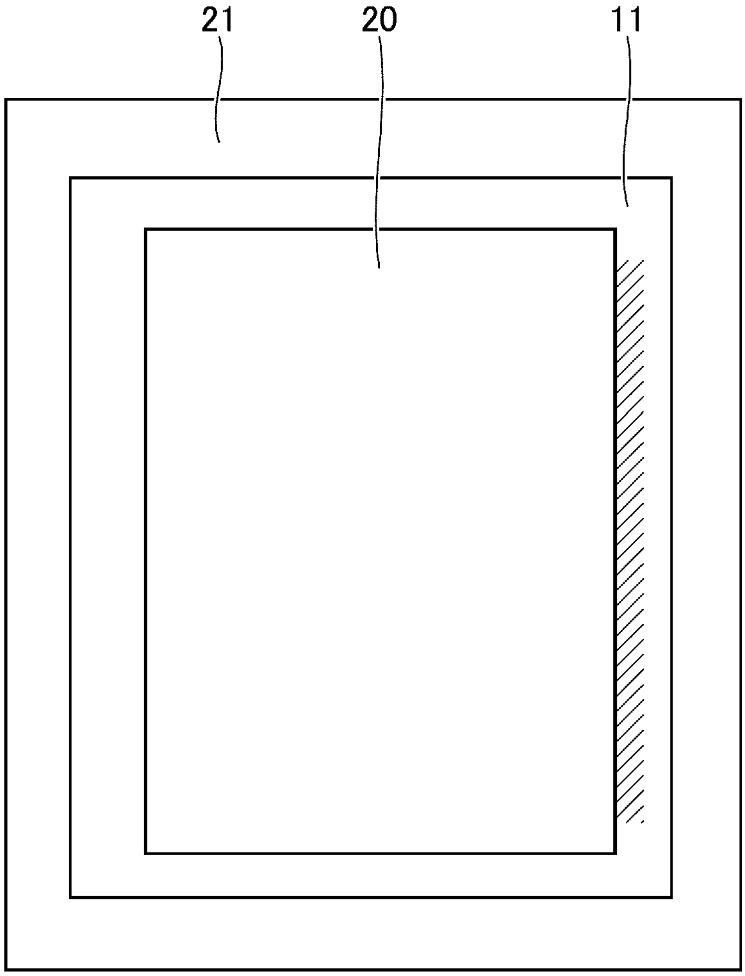

FIG.34

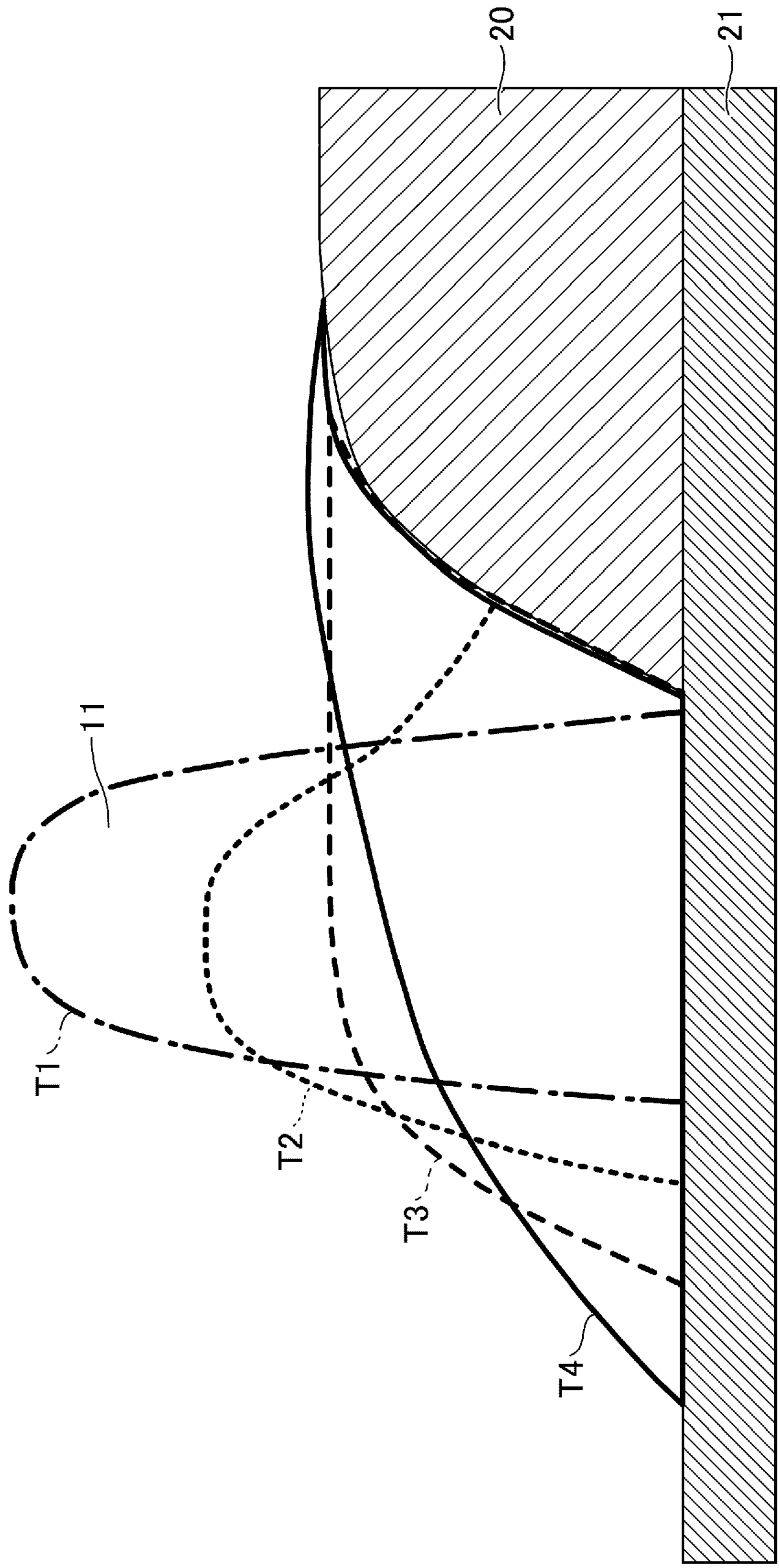

FIG.35

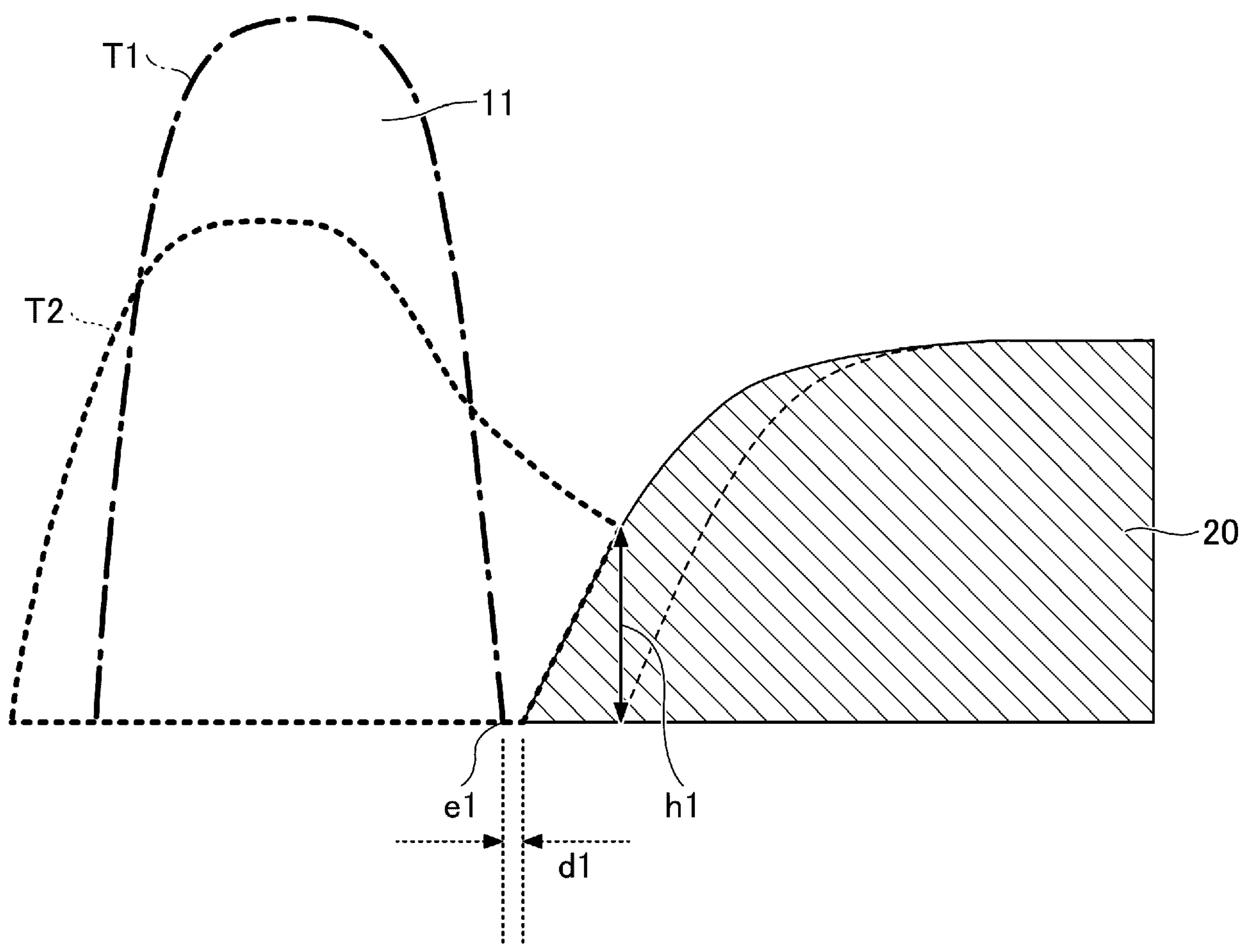

FIG.36

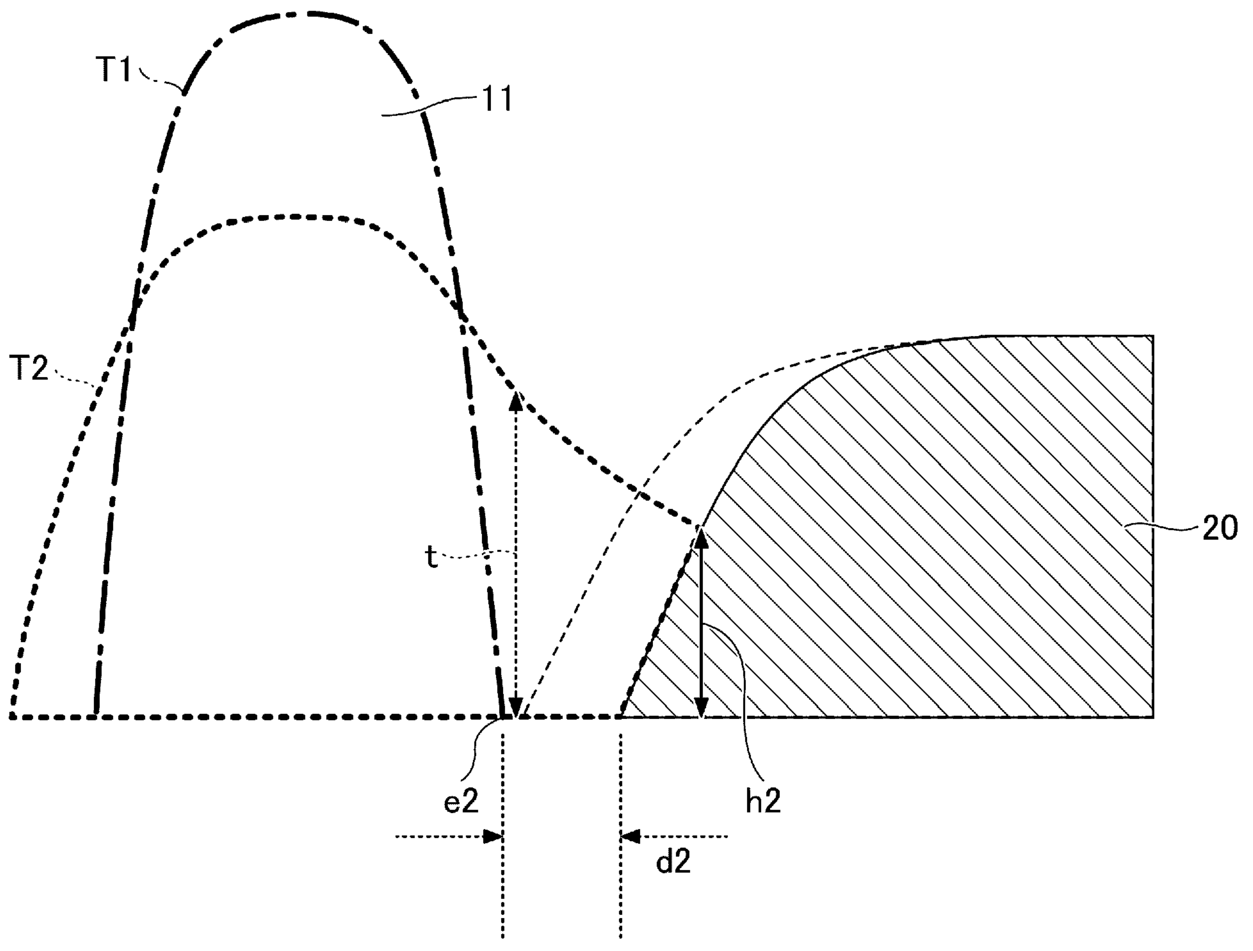

FIG.37

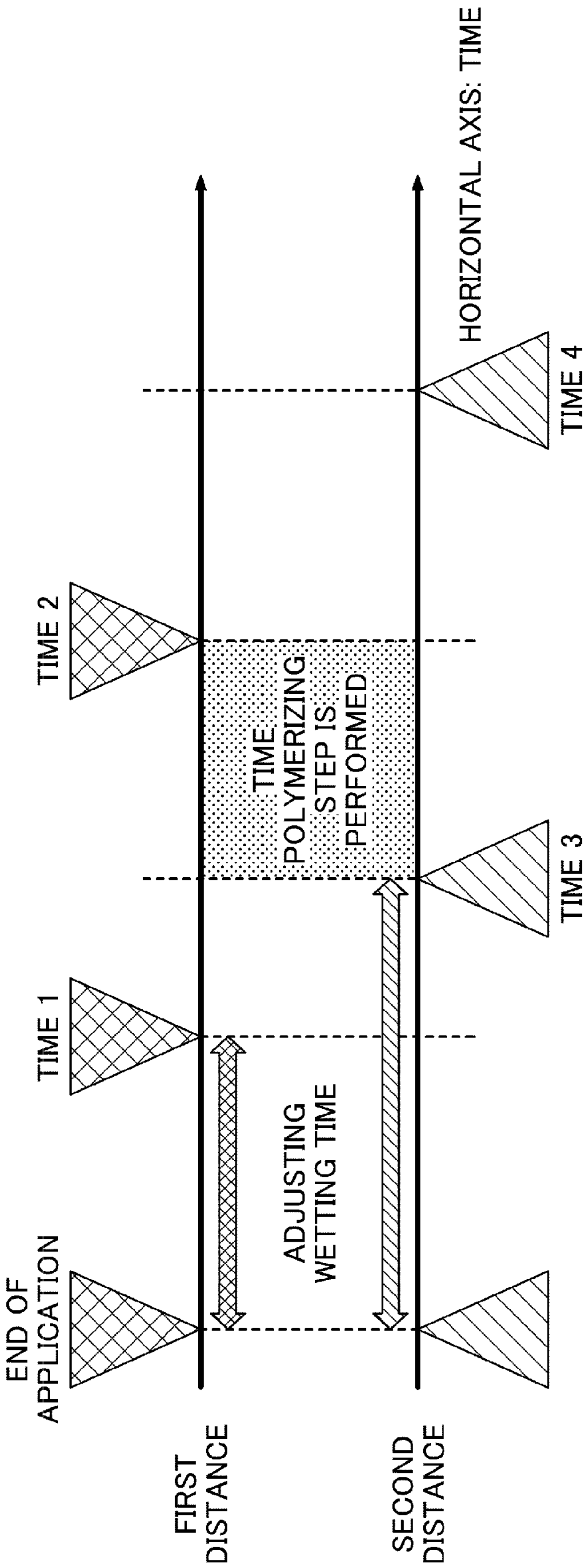
HORIZONTAL AXIS: TIME
FIRST DISTANCE
SECOND DISTANCE
END OF APPLICATION
TIME 1
TIME 2
TIME 3
TIME 4
ADJUSTING WETTING TIME
TIME POLYMERIZING STEP IS PERFORMED

FIG.38

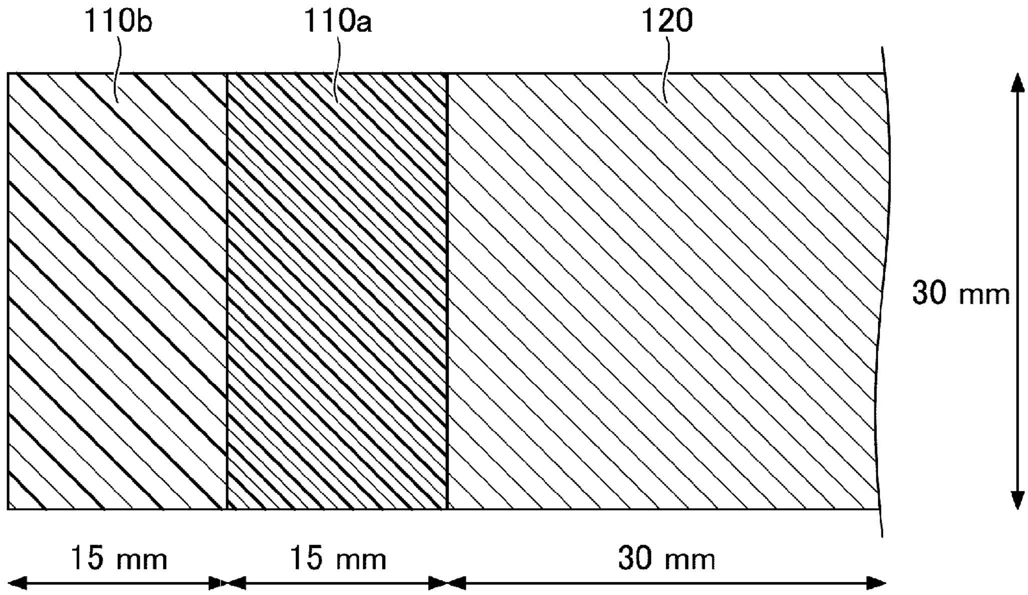
110b
110a
120
30 mm
15 mm
15 mm
30 mm

FIG.39

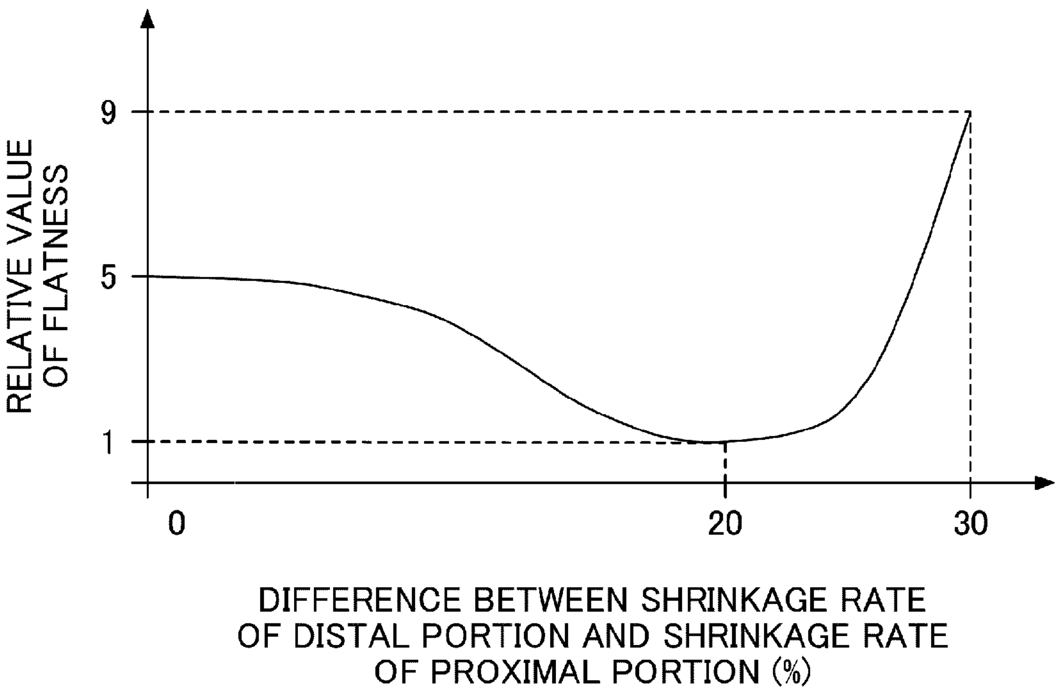
RELATIVE VALUE
OF FLATNESS
9
5
1
0
20
30
DIFFERENCE BETWEEN SHRINKAGE RATE
OF DISTAL PORTION AND SHRINKAGE RATE
OF PROXIMAL PORTION (%)

FIG.40

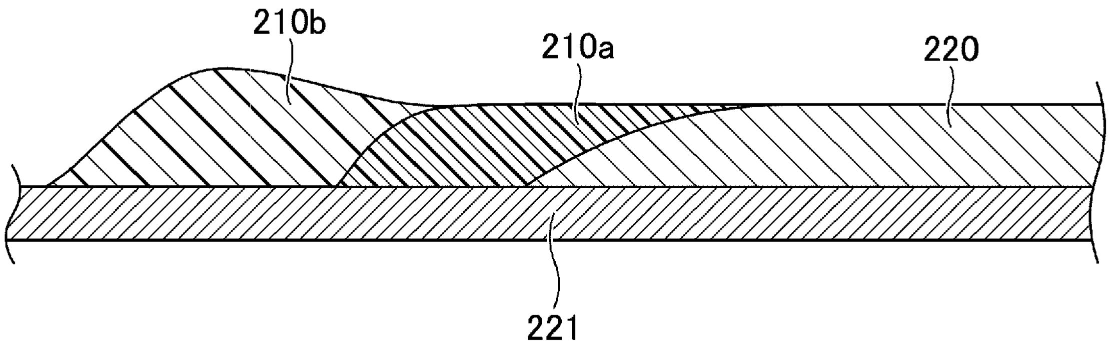


FIG.41

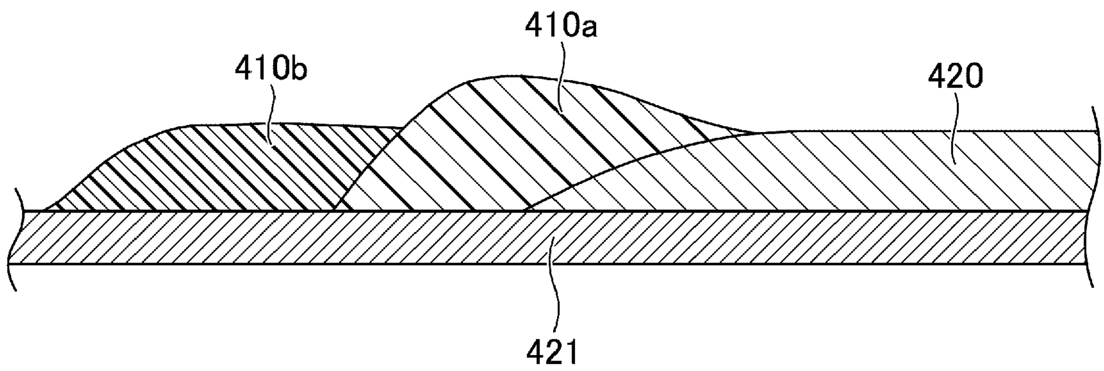

FIG.42

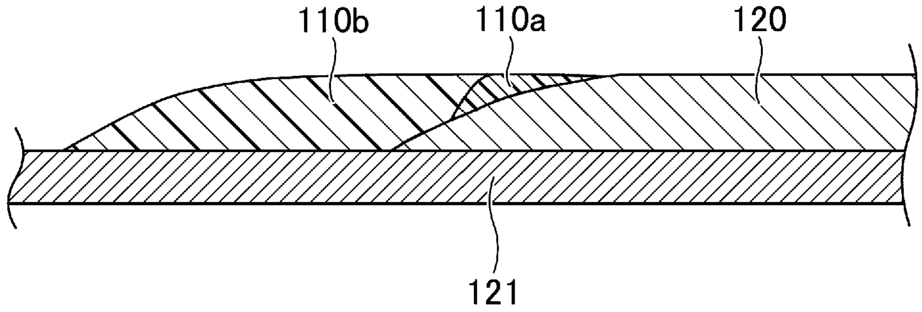


FIG.43

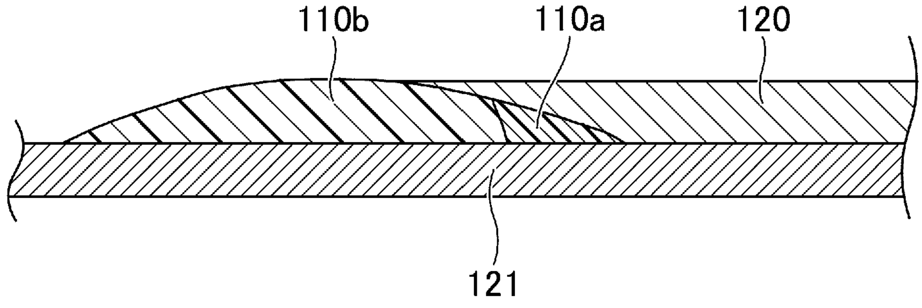

FIG.44

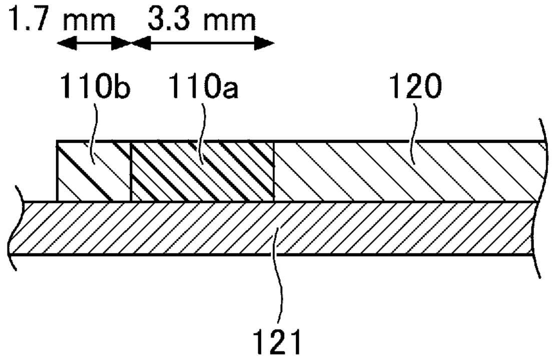


FIG.45

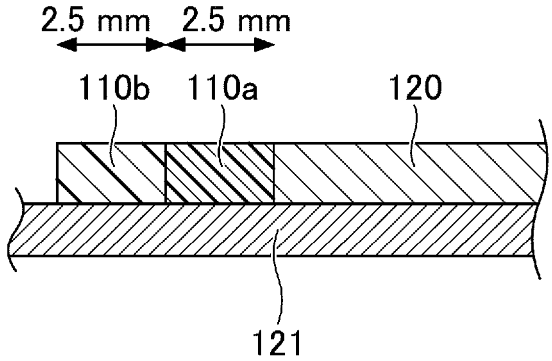


FIG.46

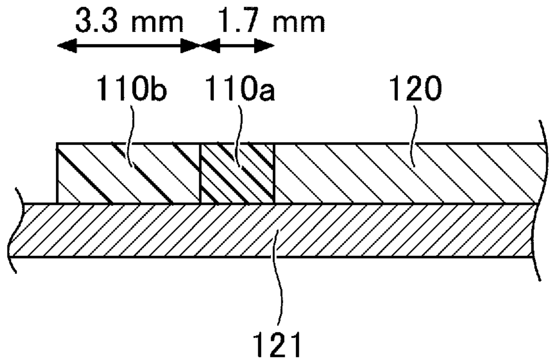

FIG.47

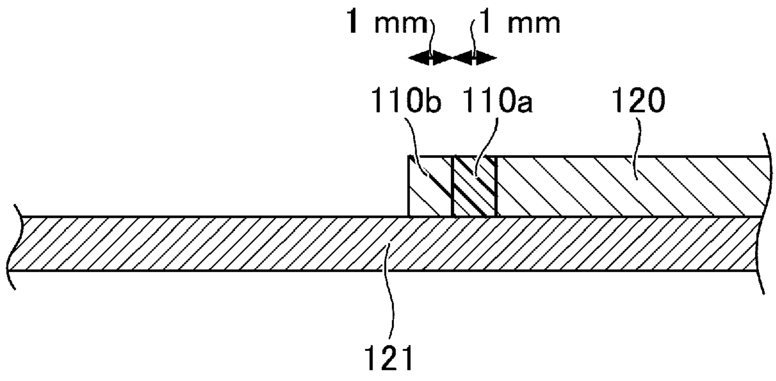


FIG.48

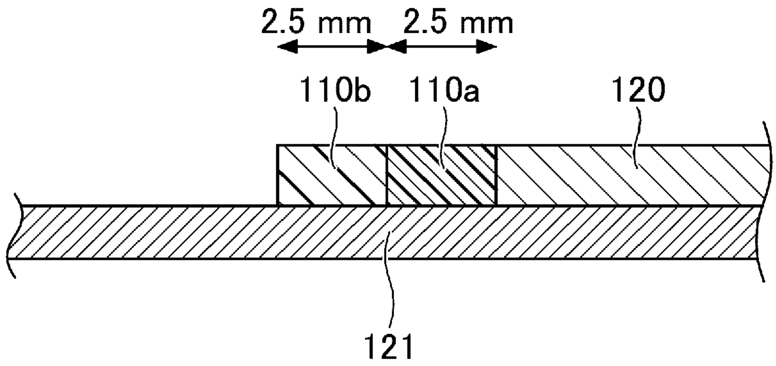


FIG.49

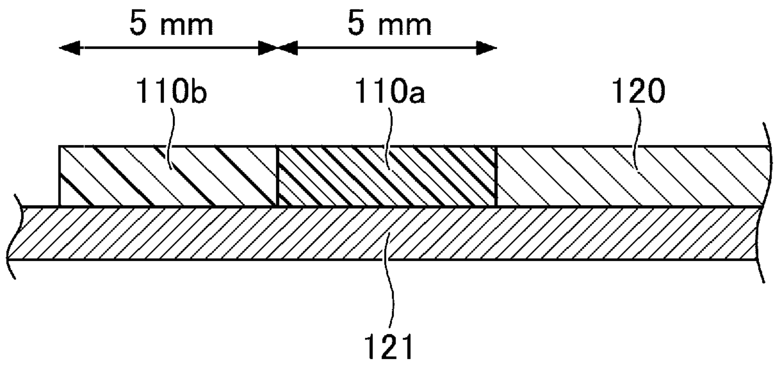

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020022111 A


### Non-patent literature cited in the description


- *J. Power Sources.,* 2018, vol. 396, 33-40
- *J. Mater. Chem. A.,* 2021, vol. 9, 4117-4125